(19) Europäisches Patentamt
European Patent Office
Office européen des brevets

(11) **EP 4 022 906 B1**

(12) **EUROPEAN PATENT SPECIFICATION**

(45) Date of publication and mention of the grant of the patent:
**08.10.2025 Bulletin 2025/41**

(21) Application number: **20856576.2**

(22) Date of filing: **21.08.2020**

(51) International Patent Classification (IPC):
***H04N 19/119*** $^{(2014.01)}$ ***H04N 19/159*** $^{(2014.01)}$
***H04N 19/577*** $^{(2014.01)}$ ***H04N 19/174*** $^{(2014.01)}$
***H04N 19/176*** $^{(2014.01)}$ ***H04N 19/70*** $^{(2014.01)}$

(52) Cooperative Patent Classification (CPC):
**H04N 19/174; H04N 19/119; H04N 19/159; H04N 19/176; H04N 19/577; H04N 19/70**

(86) International application number:
**PCT/RU2020/050196**

(87) International publication number:
**WO 2021/040572 (04.03.2021 Gazette 2021/09)**

(54) **METHOD AND APPARATUS OF HIGH-LEVEL SIGNALING FOR NON-RECTANGULAR PARTITIONING MODES**

VERFAHREN UND VORRICHTUNG ZUM SIGNALISIEREN AUF HOHER EBENE FÜR NICHT-RECHTECKIGE PARTITIONIERUNGSMODI

PROCÉDÉ ET APPAREIL DE SIGNALISATION DE HAUT NIVEAU POUR MODES DE PARTITIONNEMENT NON RECTANGULAIRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.08.2019 PCT/RU2019/000607**

(43) Date of publication of application:
**06.07.2022 Bulletin 2022/27**

(73) Proprietor: **Huawei Technologies Co., Ltd.**
**Longgang District**
**Shenzhen,**
**Guangdong 518129 (CN)**

(72) Inventors:
- **RUFITSKIY, Vasily Alexeevich**
  **Shenzhen, Guangdong 518129 (CN)**
- **ALSHINA, Elena Alexandrovna**
  **Shenzhen, Guangdong 518129 (CN)**
- **FILIPPOV, Alexey Konstantinovich**
  **Shenzhen, Guangdong 518129 (CN)**

(74) Representative: **Grünecker Patent- und Rechtsanwälte**
**PartG mbB**
**Leopoldstraße 4**
**80802 München (DE)**

(56) References cited:
**EP-A1- 2 942 961**
**US-A1- 2010 208 827**
**US-A1- 2012 243 609**
**US-A1- 2018 063 528**
**US-A1- 2018 376 155**

- **BROSS B ET AL: "Versatile Video Coding (Draft 6)", no. JVET-O2001-vE; JVET-O2001, 31 July 2019 (2019-07-31), pages 1 - 455, XP030293944, Retrieved from the Internet <URL:https://jvet-experts.org/doc_end_user/documents/15_Gothenburg/wg11/JVET-O2001-v14.zip JVET-O2001-vE.docx> [retrieved on 20190731]**
- **FILIPPOV (HUAWEI) A ET AL: "Non-CE4/AHG17: On slice-level syntax for TPM and GEO", no. m50240, 25 September 2019 (2019-09-25), XP030206242, Retrieved from the Internet <URL:http://phenix.int-evry.fr/mpeg/doc_end_user/documents/128_Geneva/wg11/m50240-JVET-P0275-v1-JVET-P0275-v1.zip JVET-P0275-v1.docx> [retrieved on 20190925]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

• SULLIVAN G J ET AL: "Meeting Report of the 16th JVET Meeting", no. JVET-P2000 ; m51523, 9 January 2020 (2020-01-09), XP030224325, Retrieved from the Internet <URL:http://phenix.int-evry.fr/jvet/doc_end_user/documents/16_Geneva/wg11/JVET-P2000-v2.zip JVET-P2000-v2.docx> [retrieved on 20200109]

## Description

TECHNICAL FIELD

Embodiments of the present application (disclosure) generally relate to the field of picture processing and more particularly to shape-adaptive resampling of residual block for still image and video coding.

BACKGROUND

Video coding (video encoding and decoding) is used in a wide range of digital video applications, for example broadcast digital TV, video transmission over internet and mobile networks, real-time conversational applications such as video chat, video conferencing, DVD and Blu-ray discs, video content acquisition and editing systems, and camcorders of security applications.

"Versatile Video Coding Draft (6)", 15th JVET Meeting; 2019003-20190712, Gothenburg, no. JVET-O2001-vE, 31 July 2019, pages 1-455, by B. Bross et al. represents a VVC standard draft that, in particular, defines slice header syntax and slice data syntax.

The amount of video data needed to depict even a relatively short video can be substantial, which may result in difficulties when the data is to be streamed or otherwise communicated across a communications network with limited bandwidth capacity. Thus, video data is generally compressed before being communicated across modem day telecommunications networks. The size of a video could also be an issue when the video is stored on a storage device because memory resources may be limited. Video compression devices often use software and/or hardware at the source to code the video data prior to transmission or storage, thereby decreasing the quantity of data needed to represent digital video images. The compressed data is then received at the destination by a video decompression device that decodes the video data. With limited network resources and ever increasing demands of higher video quality, improved compression and decompression techniques that improve compression ratio with little to no sacrifice in picture quality are desirable.

Recently, non-rectangular subblock partitioning and (inter-)prediction enabling non-horizontal and non-vertical boundaries between prediction partitions was introduced in order to cope with the problem of the representation of objects with complicated shapes. Quality enhancement due to a better alignment of inter prediction boundaries with objects may be achieved by the non-rectangular subblock partitioning and prediction. However, the complexity and data amount needed for overall high-level signaling used in the coding process may be undesirably increased by providing the option of non-rectangular subblock partitioning and prediction. Thus, it is an object underlying the present invention to provide a coding technique with an increased coding efficiency wherein, particularly, signaling overhead to be largely avoided.

SUMMARY

According to embodiments methods for encoding a video sequence using non-rectangular subblock partitioning and prediction and a respective apparatus are provided.

According to embodiments an efficient encoding and/or decoding and corresponding signalling using non-rectangular subblock partitioning and prediction modes like TPM, GEO or GPM and signal related information in slice headers only for slices which allow or enable bidirectional inter-prediction, e.g. in bidirectional (B) prediction slices, also called B-slices are provided.

The foregoing and other objects are achieved by the subject matter of the independent claims. Further implementation forms are apparent from the dependent claims, the description and the figures.

It is provided a method for encoding a video sequence, wherein the method comprises:

- determining whether bi-directional inter-prediction is allowed for a slice of the video sequence; and

only if it is determined that bi-directional inter-prediction is allowed for the slice the following steps are performed:

- obtaining slice-level information related to non-rectangular subblock prediction;
- obtaining block-level information related to non-rectangular subblock partitioning;
- obtaining block-level information related to non-rectangular subblock prediction;
- partitioning a block of the slice into at least two non-rectangular subblocks according to the block-level information related to non-rectangular subblock partitioning;
- performing inter-prediction of each non-rectangular subblock of the at least two non-rectangular subblocks according to the slice-level information related to non-rectangular subblock prediction and the block-level information related to non-rectangular subblock prediction, wherein the slice level information comprises information related to a maximum number of merge mode candidates used for the performing of the inter-prediction of each non-rectangular subblock of

the at least two non-rectangular subblocks;

- encoding the block of the video sequence comprising encoding the at least two non-rectangular subblocks;
- adding the obtained slice-level information related to non-rectangular subblock prediction to a slice header of a bitstream of the encoded video sequence; and
- adding the obtained block-level information related to non-rectangular subblock partitioning and block-level information related to non-rectangular subblock prediction to a block header of a bitstream of a block of the encoded video sequence.

Here and in the following, the block-level may be, for example, one of a coding block-level and a coding unit-level and the block may be, for example, one of a coding block and a coding unit.

According to the method for encoding a video sequence provided herein, the coding efficiency may be enhanced and the signaling overhead may be significantly reduced as compared to the art, since only if it is determined that bi-directional inter-prediction is allowed for the slice the slice-level information related to non-rectangular subblock prediction is obtained and, in the case of the encoding method, the obtained slice-level information related to non-rectangular subblock prediction is added to a slice header of a bitstream. Particularly, if the slice under consideration is a P slice information related to non-rectangular subblock partitioning and prediction may not be signaled at all and, therefore, the condition whether or not a block is subject to non-rectangular subblock partitioning and prediction may be not have to be checked on a block level.

It is noted that the obtained slice-level information related to non-rectangular subblock prediction may be added to a slice header of a bitstream explicitly, for example, by means of an explicit flag and/or parameter or implicitly by some other parameter(s0 the value of which necessarily results in providing the desired information that is derived from such another information/parameter(s).

The encoding of the block may comprise obtaining a residual block based on the current block to be encoded and the predictor obtained from inter-prediction, and transformation and quantization of the residual block.

It is noted that the information related to a maximum number of merge mode candidates used for the performing of inter-prediction of each non-rectangular subblock of the at least two non-rectangular subblocks may be provided by a parameter, e.g. max_num_merge_cand_minus_max_num _triangle_cand (see detailed description of Geometrical Partitioning below). The same holds for the information related to the maximum number of merging motion vector prediction candidates used for the performing of inter-prediction of each non-rectangular subblock of the at least two non-rectangular subblocks for which a parameter six_minus_max_num_merge_cand may be used, for example (see detailed description of Geometrical Partitioning below).

According to further aspects , information/signalling provided on higher hierarchic parameter levels as compared to the slice-level may be used in the encoding and/or decoding methods provided herein. For example, the method for decoding or encoding an encoded video sequence may comprise obtaining sequence parameter set, SPS, - level information (for example, an appropriate flag, for example, an sps_triangle_enabled_flag) related to non-rectangular subblock partitioning and the slice-level information related to non-rectangular subblock prediction is obtained, only if the SPS-level information indicates that non-rectangular subblock partitioning is allowed for the partitioning of the block. Again, the overall coding efficiency may be improved by this implementation, since the higher syntax level information may result in skipping unnecessary encoding/decoding/parsing on a lower syntax level.

According to another aspect and providing the same advantage SPS-level information related to non-rectangular subblock prediction indicating at least one of a) whether application of a subblock prediction mode is allowed for the block and b) which subblock prediction mode is to be used for the block may be obtained. Thus, relevant information regarding the subblock partitioning and prediction, in particular, regarding the inter-prediction mode, can be provided on the SPS-level.

Providing additional information on a higher syntax level as compared to the slice header is not restricted to the SPS-level. In fact, the method for decoding or encoding an encoded video sequence may comprise obtaining picture parameter set, PPS, - level information (for example, a parameter, for example, pps_max_num_merge_cand_minus_ max_num_triangle_cand_minus1) related to non-rectangular subblock prediction. In this case, the inter-prediction of each non-rectangular subblock of the at least two non-rectangular subblocks can be performed according to the PPS-level information related to non-rectangular prediction. Again, the overall coding efficiency may be improved by this implementation, since the higher syntax level information may result in skipping unnecessary encoding/decoding/parsing on a lower syntax level.

When the inter-prediction of each non-rectangular subblock of the at least two non-rectangular subblocks is performed based on merge mode candidates the PPS-level information related to non-rectangular subblock prediction may comprise information related to a maximum number of merge mode candidates used for the performing of inter-prediction of each non-rectangular subblock of the at least two non-rectangular subblocks.

According to another aspect the block-level information related to non-rectangular subblock partitioning comprises at least one of the following:

- a flag indicating whether a particular subblock partitioning mode is to be used for the block;
- a flag indicating whether a first subblock partitioning mode or a second subblock partitioning mode is to be used for the block; and
- a flag or parameter indicating a selected subblock partitioning mode of a plurality of subblock partitioning modes that is to be used for the block.

Similarly, the block-level information related to non-rectangular subblock prediction may comprise at least one of the following:

- a flag indicating whether a particular subblock prediction mode is to be used for the block;
- a flag indicating whether a first subblock prediction mode or a second subblock prediction mode is to be used for the block;
- a flag or parameter indicating a selected subblock prediction mode of a plurality of subblock prediction modes that is used for the block; and
- an index indicating a motion vector predictor candidate.

Employment of the mentioned parameters/flags allows for providing the relevant block-level information fastly with a low demand for data amount.

In all of the above-described examples of the method of encoding a video sequence the partitioning of the block may be performed by applying one of the Triangular Partitioning Mode, the Geometric Motion Partitioning Mode and the Geometrical Partitioning Mode. According to the actual application one of these partitioning modes may be selected for the partitioning and the prediction as it is considered useful. In fact, the provided methods are not constrained to any particular subblock partitioning mode.

Further, it is provided an encoder comprising processing circuitry (e.g. a processor) configured for performing the method of encoding a video sequence according to one of the above-described examples.

Additionally, a computer program product comprising a program code for performing the method of encoding a video sequence according to one of the above-described examples is provided. A non-transitory computer-readable medium carrying a program code which, when executed by a computer device, causes the computer device to perform the method of encoding a video sequence according to one of the above-described examples is also provided.

Details of one or more embodiments are set forth in the accompanying drawings and the description below. Other features, objects, and advantages will be apparent from the description, drawings, and claims.

BRIEF DESCRIPTION OF THE DRAWINGS

In the following embodiments of the invention are described in more detail with reference to the attached figures and drawings, in which:

| | |
|---|---|
| FIG. 1A | is a block diagram showing an example of a video coding system configured to implement embodiments of the invention; |
| FIG. 1B | is a block diagram showing another example of a video coding system configured to implement embodiments of the invention; |
| FIG. 2 | is a block diagram showing an example of a video encoder configured to implement embodiments of the invention; |
| FIG. 3 | is a block diagram showing an example structure of a video decoder configured to implement embodiments of the invention; |
| FIG. 4 | is a block diagram illustrating an example of an encoding apparatus or a decoding apparatus; |
| FIG. 5 | is a block diagram illustrating another example of an encoding apparatus or a decoding apparatus; |
| FIG. 6 | is an illustration of the steps required at encoder side to obtain a set of transform blocks for used color components marked as a transform unit according to an embodiment of the invention; |

| | |
|---|---|
| FIG. 7 | is an illustration of an alternative way to resample residual blocks for obtaining a set of transform blocks for used color components marked as a transform unit according to an embodiment of the invention; |
| FIG. 8 | is a flowchart to illustrate the processing steps of the invention applied to a unit predicted using TPM at both decoder and encoder sides according to an embodiment of the invention; |
| FIG. 9 | is an illustration of a resampling process within a unit where the GMP technique is used according to an embodiment of the invention; |
| FIG. 10 | is a flowchart to illustrate the processing steps of an embodiment of the invention at both decoder and encoder side if the resampling process is applied to a unit where the GMP technique is used; |
| FIG. 11 | is a flowchart showing the signaling of the flag according to an embodiment of the invention; |
| FIG. 12 | is a flowchart showing the signaling of the flag according to an embodiment of the invention; |
| FIG. 13 | is an illustration of the smoothing process that uses one-dimensional padding of the samples adjacent to the near-boundary region; |
| FIG. 14 | is an illustration of the smoothing process that uses two-dimensional spatial filter of the samples adjacent to the near-boundary region; |
| FIG. 15 | is an illustration of obtaining the near-boundary region for the case of GMP using column-wise scan; |
| FIG. 16 | is an illustration of obtaining the near-boundary region for the case of GMP using a row-wise scan; |
| FIG. 17 | is an illustration of obtaining the near-boundary region for the case of GEO using a row-wise scan; |
| FIG. 18 | shows TPM and GEO modes; |
| FIG. 19 | shows parameters related to GEO; |
| FIGS. 20A and 20B | show a flow chart of a method for encoding a video sequence; |
| FIGS. 21A and B | show a flow chart of a method for decoding a video sequence; |
| FIG. 22 | shows a configuration of a video encoding device; and |
| FIG. 23 | shows a configuration of a video decoding device. |

In the following identical reference signs refer to identical or at least functionally equivalent features if not explicitly specified otherwise.

DETAILED DESCRIPTION OF THE EMBODIMENTS

In the following description, reference is made to the accompanying figures, which form part of the disclosure, and which show, by way of illustration, specific aspects of embodiments of the invention or specific aspects in which embodiments of the present invention may be used. It is understood that embodiments of the invention may be used in other aspects and comprise structural or logical changes not depicted in the figures. The following detailed description, therefore, is not to be taken in a limiting sense, and the scope of the present invention is defined by the appended claims.

For instance, it is understood that a disclosure in connection with a described method may also hold true for a corresponding device or system configured to perform the method and vice versa. For example, if one or a plurality of specific method steps are described, a corresponding device may include one or a plurality of units, e.g. functional units, to

perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

Video coding typically refers to the processing of a sequence of pictures, which form the video or video sequence. Instead of the term "picture" the term "frame" or "image" may be used as synonyms in the field of video coding. Video coding (or coding in general) comprises two parts video encoding and video decoding. Video encoding is performed at the source side, typically comprising processing (e.g. by compression) the original video pictures to reduce the amount of data required for representing the video pictures (for more efficient storage and/or transmission). Video decoding is performed at the destination side and typically comprises the inverse processing compared to the encoder to reconstruct the video pictures. Embodiments referring to "coding" of video pictures (or pictures in general) shall be understood to relate to "encoding" or "decoding" of video pictures or respective video sequences. The combination of the encoding part and the decoding part is also referred to as CODEC (Coding and Decoding).

In case of lossless video coding, the original video pictures can be reconstructed, i.e. the reconstructed video pictures have the same quality as the original video pictures (assuming no transmission loss or other data loss during storage or transmission). In case of lossy video coding, further compression, e.g. by quantization, is performed, to reduce the amount of data representing the video pictures, which cannot be completely reconstructed at the decoder, i.e. the quality of the reconstructed video pictures is lower or worse compared to the quality of the original video pictures.

Several video coding standards belong to the group of "lossy hybrid video codecs" (i.e. combine spatial and temporal prediction in the sample domain and 2D transform coding for applying quantization in the transform domain). Each picture of a video sequence is typically partitioned into a set of non-overlapping blocks and the coding is typically performed on a block level. In other words, at the encoder the video is typically processed, i.e. encoded, on a block (video block) level, e.g. by using spatial (intra picture) prediction and/or temporal (inter picture) prediction to generate a prediction block, subtracting the prediction block from the current block (block currently processed/to be processed) to obtain a residual block, transforming the residual block and quantizing the residual block in the transform domain to reduce the amount of data to be transmitted (compression), whereas at the decoder the inverse processing compared to the encoder is applied to the encoded or compressed block to reconstruct the current block for representation. Furthermore, the encoder duplicates the decoder processing loop such that both will generate identical predictions (e.g. intra- and inter predictions) and/or re-constructions for processing, i.e. coding, the subsequent blocks.

In the following embodiments of a video coding system 10, a video encoder 20 and a video decoder 30 are described based on Figs. 1 to 3.

Fig. 1A is a schematic block diagram illustrating an example coding system 10, e.g. a video coding system 10 (or short coding system 10) that may utilize techniques of this present application. Video encoder 20 (or short encoder 20) and video decoder 30 (or short decoder 30) of video coding system 10 represent examples of devices that may be configured to perform techniques in accordance with various examples described in the present application.

As shown in FIG. 1A, the coding system 10 comprises a source device 12 configured to provide encoded picture data 21 e.g. to a destination device 14 for decoding the encoded picture data 13.

The source device 12 comprises an encoder 20, and may additionally, i.e. optionally, comprise a picture source 16, a pre-processor (or pre-processing unit) 18, e.g. a picture pre-processor 18, and a communication interface or communication unit 22.

The picture source 16 may comprise or be any kind of picture capturing device, for example a camera for capturing a real-world picture, and/or any kind of a picture generating device, for example a computer-graphics processor for generating a computer animated picture, or any kind of other device for obtaining and/or providing a real-world picture, a computer generated picture (e.g. a screen content, a virtual reality (VR) picture) and/or any combination thereof (e.g. an augmented reality (AR) picture). The picture source may be any kind of memory or storage storing any of the aforementioned pictures.

In distinction to the pre-processor 18 and the processing performed by the pre-processing unit 18, the picture or picture data 17 may also be referred to as raw picture or raw picture data 17.

Pre-processor 18 is configured to receive the (raw) picture data 17 and to perform pre-processing on the picture data 17 to obtain a pre-processed picture 19 or pre-processed picture data 19. Pre-processing performed by the pre-processor 18 may, e.g., comprise trimming, color format conversion (e.g. from RGB to YCbCr), color correction, or de-noising. It can be understood that the pre-processing unit 18 may be optional component.

The video encoder 20 is configured to receive the pre-processed picture data 19 and provide encoded picture data 21 (further details will be described below, e.g., based on Fig. 2).

Communication interface 22 of the source device 12 may be configured to receive the encoded picture data 21 and to transmit the encoded picture data 21 (or any further processed version thereof) over communication channel 13 to another device, e.g. the destination device 14 or any other device, for storage or direct reconstruction.

The destination device 14 comprises a decoder 30 (e.g. a video decoder 30), and may additionally, i.e. optionally, comprise a communication interface or communication unit 28, a post-processor 32 (or post-processing unit 32) and a display device 34.

The communication interface 28 of the destination device 14 is configured receive the encoded picture data 21 (or any further processed version thereof), e.g. directly from the source device 12 or from any other source, e.g. a storage device, e.g. an encoded picture data storage device, and provide the encoded picture data 21 to the decoder 30.

The communication interface 22 and the communication interface 28 may be configured to transmit or receive the encoded picture data 21 or encoded data 13 via a direct communication link between the source device 12 and the destination device 14, e.g. a direct wired or wireless connection, or via any kind of network, e.g. a wired or wireless network or any combination thereof, or any kind of private and public network, or any kind of combination thereof. The communication interface 22 may be, e.g., configured to package the encoded picture data 21 into an appropriate format, e.g. packets, and/or process the encoded picture data using any kind of transmission encoding or processing for transmission over a communication link or communication network.

The communication interface 28, forming the counterpart of the communication interface 22, may be, e.g., configured to receive the transmitted data and process the transmission data using any kind of corresponding transmission decoding or processing and/or de-packaging to obtain the encoded picture data 21.

Both, communication interface 22 and communication interface 28 may be configured as unidirectional communication interfaces as indicated by the arrow for the communication channel 13 in Fig. 1A pointing from the source device 12 to the destination device 14, or bi-directional communication interfaces, and may be configured, e.g. to send and receive messages, e.g. to set up a connection, to acknowledge and exchange any other information related to the communication link and/or data transmission, e.g. encoded picture data transmission.

The decoder 30 is configured to receive the encoded picture data 21 and provide decoded picture data 31 or a decoded picture 31 (further details will be described below, e.g., based on Fig. 3 or Fig. 5).

The post-processor 32 of destination device 14 is configured to post-process the decoded picture data 31 (also called reconstructed picture data), e.g. the decoded picture 31, to obtain post-processed picture data 33, e.g. a post-processed picture 33. The post-processing performed by the post-processing unit 32 may comprise, e.g. color format conversion (e.g. from YCbCr to RGB), color correction, trimming, or re-sampling, or any other processing, e.g. for preparing the decoded picture data 31 for display, e.g. by display device 34.

The display device 34 of the destination device 14 is configured to receive the post-processed picture data 33 for displaying the picture, e.g. to a user or viewer. The display device 34 may be or comprise any kind of display for representing the reconstructed picture, e.g. an integrated or external display or monitor. The displays may, e.g. comprise liquid crystal displays (LCD), organic light emitting diodes (OLED) displays, plasma displays, projectors , micro LED displays, liquid crystal on silicon (LCoS), digital light processor (DLP) or any kind of other display. Although Fig. 1A depicts the source device 12 and the destination device 14 as separate devices, embodiments of devices may also comprise both or both functionalities, the source device 12 or corresponding functionality and the destination device 14 or corresponding functionality. In such embodiments the source device 12 or corresponding functionality and the destination device 14 or corresponding functionality may be implemented using the same hardware and/or software or by separate hardware and/or software or any combination thereof.

As will be apparent for the skilled person based on the description, the existence and (exact) split of functionalities of the different units or functionalities within the source device 12 and/or destination device 14 as shown in Fig. 1A may vary depending on the actual device and application.

The encoder 20 (e.g. a video encoder 20) or the decoder 30 (e.g. a video decoder 30) or both encoder 20 and decoder 30 may be implemented via processing circuitry as shown in Fig. 1B, such as one or more microprocessors, digital signal processors (DSPs), application-specific integrated circuits (ASICs), field-programmable gate arrays (FPGAs), discrete logic, hardware, video coding dedicated or any combinations thereof. The encoder 20 may be implemented via processing circuitry 46 to embody the various modules as discussed with respect to encoder 20of FIG. 2 and/or any other encoder system or subsystem described herein. The decoder 30 may be implemented via processing circuitry 46 to embody the various modules as discussed with respect to decoder 30 of FIG. 3 and/or any other decoder system or subsystem described herein. The processing circuitry may be configured to perform the various operations as discussed later. As shown in fig. 5, if the techniques are implemented partially in software, a device may store instructions for the software in a suitable, non-transitory computer-readable storage medium and may execute the instructions in hardware using one or more processors to perform the techniques of this disclosure. Either of video encoder 20 and video decoder 30 may be integrated as part of a combined encoder/decoder (CODEC) in a single device, for example, as shown in Fig. 1B.

Source device 12 and destination device 14 may comprise any of a wide range of devices, including any kind of handheld or stationary devices, e.g. notebook or laptop computers, mobile phones, smart phones, tablets or tablet

computers, cameras, desktop computers, set-top boxes, televisions, display devices, digital media players, video gaming consoles, video streaming devices(such as content services servers or content delivery servers), broadcast receiver device, broadcast transmitter device, or the like and may use no or any kind of operating system. In some cases, the source device 12 and the destination device 14 may be equipped for wireless communication. Thus, the source device 12 and the destination device 14 may be wireless communication devices.

In some cases, video coding system 10 illustrated in Fig. 1A is merely an example and the techniques of the present application may apply to video coding settings (e.g., video encoding or video decoding) that do not necessarily include any data communication between the encoding and decoding devices. In other examples, data is retrieved from a local memory, streamed over a network, or the like. A video encoding device may encode and store data to memory, and/or a video decoding device may retrieve and decode data from memory. In some examples, the encoding and decoding is performed by devices that do not communicate with one another, but simply encode data to memory and/or retrieve and decode data from memory.

For convenience of description, embodiments of the invention are described herein, for example, by reference to High-Efficiency Video Coding (HEVC) or to the reference software of Versatile Video coding (VVC), the next generation video coding standard developed by the Joint Collaboration Team on Video Coding (JCT-VC) of ITU-T Video Coding Experts Group (VCEG) and ISO/IEC Motion Picture Experts Group (MPEG). One of ordinary skill in the art will understand that embodiments of the invention are not limited to HEVC or VVC.

## Encoder and Encoding Method

Fig. 2 shows a schematic block diagram of an example video encoder 20 that is configured to implement the techniques of the present application. In the example of Fig. 2, the video encoder 20 comprises an input 201 (or input interface 201), a residual calculation unit 204, a transform processing unit 206, a quantization unit 208, an inverse quantization unit 210, and inverse transform processing unit 212, a reconstruction unit 214, a loop filter unit 220, a decoded picture buffer (DPB) 230, a mode selection unit 260, an entropy encoding unit 270 and an output 272 (or output interface 272). The mode selection unit 260 may include an inter prediction unit 244, an intra prediction unit 254 and a partitioning unit 262. Inter prediction unit 244 may include a motion estimation unit and a motion compensation unit (not shown). A video encoder 20 as shown in Fig. 2 may also be referred to as hybrid video encoder or a video encoder according to a hybrid video codec.

The residual calculation unit 204, the transform processing unit 206, the quantization unit 208, the mode selection unit 260 may be referred to as forming a forward signal path of the encoder 20, whereas the inverse quantization unit 210, the inverse transform processing unit 212, the reconstruction unit 214, the buffer 216, the loop filter 220, the decoded picture buffer (DPB) 230, the inter prediction unit 244 and the intra-prediction unit 254 may be referred to as forming a backward signal path of the video encoder 20, wherein the backward signal path of the video encoder 20 corresponds to the signal path of the decoder (see video decoder 30 in Fig. 3). The inverse quantization unit 210, the inverse transform processing unit 212, the reconstruction unit 214, the loop filter 220, the decoded picture buffer (DPB) 230, the inter prediction unit 244 and the intra-prediction unit 254 are also referred to forming the "built-in decoder" of video encoder 20.

## Pictures & Picture Partitioning (Pictures & Blocks)

The encoder 20 may be configured to receive, e.g. via input 201, a picture 17 (or picture data 17), e.g. picture of a sequence of pictures forming a video or video sequence. The received picture or picture data may also be a pre-processed picture 19 (or pre-processed picture data 19). For sake of simplicity the following description refers to the picture 17. The picture 17 may also be referred to as current picture or picture to be coded (in particular in video coding to distinguish the current picture from other pictures, e.g. previously encoded and/or decoded pictures of the same video sequence, i.e. the video sequence which also comprises the current picture).

A (digital) picture is or can be regarded as a two-dimensional array or matrix of samples with intensity values. A sample in the array may also be referred to as pixel (short form of picture element) or a pel. The number of samples in horizontal and vertical direction (or axis) of the array or picture define the size and/or resolution of the picture. For representation of color, typically three color components are employed, i.e. the picture may be represented or include three sample arrays. In RBG format or color space a picture comprises a corresponding red, green and blue sample array. However, in video coding each pixel is typically represented in a luminance and chrominance format or color space, e.g. YCbCr, which comprises a luminance component indicated by Y (sometimes also L is used instead) and two chrominance components indicated by Cb and Cr. The luminance (or short luma) component Y represents the brightness or grey level intensity (e.g. like in a grey-scale picture), while the two chrominance (or short chroma) components Cb and Cr represent the chromaticity or color information components. Accordingly, a picture in YCbCr format comprises a luminance sample array of luminance sample values (Y), and two chrominance sample arrays of chrominance values (Cb and Cr). Pictures in RGB format may be converted or transformed into YCbCr format and vice versa, the process is also known as color

transformation or conversion. If a picture is monochrome, the picture may comprise only a luminance sample array. Accordingly, a picture may be, for example, an array of luma samples in monochrome format or an array of luma samples and two corresponding arrays of chroma samples in 4:2:0, 4:2:2, and 4:4:4 colour format.

Embodiments of the video encoder 20 may comprise a picture partitioning unit (not depicted in Fig. 2) configured to partition the picture 17 into a plurality of (typically non-overlapping) picture blocks 203. These blocks may also be referred to as root blocks, macro blocks (H.264/AVC) or coding tree blocks (CTB) or coding tree units (CTU) (H.265/HEVC and VVC). The picture partitioning unit may be configured to use the same block size for all pictures of a video sequence and the corresponding grid defining the block size, or to change the block size between pictures or subsets or groups of pictures, and partition each picture into the corresponding blocks.

In further embodiments, the video encoder may be configured to receive directly a block 203 of the picture 17, e.g. one, several or all blocks forming the picture 17. The picture block 203 may also be referred to as current picture block or picture block to be coded.

Like the picture 17, the picture block 203 again is or can be regarded as a two-dimensional array or matrix of samples with intensity values (sample values), although of smaller dimension than the picture 17. In other words, the block 203 may comprise, e.g., one sample array (e.g. a luma array in case of a monochrome picture 17, or a luma or chroma array in case of a color picture) or three sample arrays (e.g. a luma and two chroma arrays in case of a color picture 17) or any other number and/or kind of arrays depending on the color format applied. The number of samples in horizontal and vertical direction (or axis) of the block 203 define the size of block 203. Accordingly, a block may, for example, an MxN (M-column by N-row) array of samples, or an MxN array of transform coefficients.

Embodiments of the video encoder 20 as shown in Fig. 2 may be configured to encode the picture 17 block by block, e.g. the encoding and prediction is performed per block 203.

Embodiments of the video encoder 20 as shown in Fig. 2 may be further configured to partition and/or encode the picture by using slices (also referred to as video slices), wherein a picture may be partitioned into or encoded using one or more slices (typically non-overlapping), and each slice may comprise one or more blocks (e.g. CTUs). Embodiments of the video encoder 20 as shown in Fig. 2 may be further configured to partition and/or encode the picture by using tile groups (also referred to as video tile groups) and/or tiles (also referred to as video tiles), wherein a picture may be partitioned into or encoded using one or more tile groups (typically non-overlapping), and each tile group may comprise, e.g. one or more blocks (e.g. CTUs) or one or more tiles, wherein each tile, e.g. may be of rectangular shape and may comprise one or more blocks (e.g. CTUs), e.g. complete or fractional blocks.

Residual Calculation

The residual calculation unit 204 may be configured to calculate a residual block 205 (also referred to as residual 205) based on the picture block 203 and a prediction block 265 (further details about the prediction block 265 are provided later), e.g. by subtracting sample values of the prediction block 265 from sample values of the picture block 203, sample by sample (pixel by pixel) to obtain the residual block 205 in the sample domain.

Transform

The transform processing unit 206 may be configured to apply a transform, e.g. a discrete cosine transform (DCT) or discrete sine transform (DST), on the sample values of the residual block 205 to obtain transform coefficients 207 in a transform domain. The transform coefficients 207 may also be referred to as transform residual coefficients and represent the residual block 205 in the transform domain.

The transform processing unit 206 may be configured to apply integer approximations of DCT/DST, such as the transforms specified for H.265/HEVC. Compared to an orthogonal DCT transform, such integer approximations are typically scaled by a certain factor. In order to preserve the norm of the residual block which is processed by forward and inverse transforms, additional scaling factors are applied as part of the transform process. The scaling factors are typically chosen based on certain constraints like scaling factors being a power of two for shift operations, bit depth of the transform coefficients, tradeoff between accuracy and implementation costs, etc. Specific scaling factors are, for example, specified for the inverse transform, e.g. by inverse transform processing unit 212 (and the corresponding inverse transform, e.g. by inverse transform processing unit 312 at video decoder 30) and corresponding scaling factors for the forward transform, e.g. by transform processing unit 206, at an encoder 20 may be specified accordingly.

Embodiments of the video encoder 20 (respectively transform processing unit 206) may be configured to output transform parameters, e.g. a type of transform or transforms, e.g. directly or encoded or compressed via the entropy encoding unit 270, so that, e.g., the video decoder 30 may receive and use the transform parameters for decoding.

Quantization

The quantization unit 208 may be configured to quantize the transform coefficients 207 to obtain quantized coefficients 209, e.g. by applying scalar quantization or vector quantization. The quantized coefficients 209 may also be referred to as quantized transform coefficients 209 or quantized residual coefficients 209.

The quantization process may reduce the bit depth associated with some or all of the transform coefficients 207. For example, an n-bit transform coefficient may be rounded down to an m-bit Transform coefficient during quantization, where n is greater than m. The degree of quantization may be modified by adjusting a quantization parameter (QP). For example for scalar quantization, different scaling may be applied to achieve finer or coarser quantization. Smaller quantization step sizes correspond to finer quantization, whereas larger quantization step sizes correspond to coarser quantization. The applicable quantization step size may be indicated by a quantization parameter (QP). The quantization parameter may for example be an index to a predefined set of applicable quantization step sizes. For example, small quantization parameters may correspond to fine quantization (small quantization step sizes) and large quantization parameters may correspond to coarse quantization (large quantization step sizes) or vice versa. The quantization may include division by a quantization step size and a corresponding and/or the inverse dequantization, e.g. by inverse quantization unit 210, may include multiplication by the quantization step size. Embodiments according to some standards, e.g. HEVC, may be configured to use a quantization parameter to determine the quantization step size. Generally, the quantization step size may be calculated based on a quantization parameter using a fixed point approximation of an equation including division. Additional scaling factors may be introduced for quantization and dequantization to restore the norm of the residual block, which might get modified because of the scaling used in the fixed point approximation of the equation for quantization step size and quantization parameter. In one example implementation, the scaling of the inverse transform and dequantization might be combined. Alternatively, customized quantization tables may be used and signaled from an encoder to a decoder, e.g. in a bitstream. The quantization is a lossy operation, wherein the loss increases with increasing quantization step sizes.

Embodiments of the video encoder 20 (respectively quantization unit 208) may be configured to output quantization parameters (QP), e.g. directly or encoded via the entropy encoding unit 270, so that, e.g., the video decoder 30 may receive and apply the quantization parameters for decoding.

Inverse Quantization

The inverse quantization unit 210 is configured to apply the inverse quantization of the quantization unit 208 on the quantized coefficients to obtain dequantized coefficients 211, e.g. by applying the inverse of the quantization scheme applied by the quantization unit 208 based on or using the same quantization step size as the quantization unit 208. The dequantized coefficients 211 may also be referred to as dequantized residual coefficients 211 and correspond - although typically not identical to the transform coefficients due to the loss by quantization - to the transform coefficients 207.

Inverse Transform

The inverse transform processing unit 212 is configured to apply the inverse transform of the transform applied by the transform processing unit 206, e.g. an inverse discrete cosine transform (DCT) or inverse discrete sine transform (DST) or other inverse transforms, to obtain a reconstructed residual block 213 (or corresponding dequantized coefficients 213) in the sample domain. The reconstructed residual block 213 may also be referred to as transform block 213.

Reconstruction

The reconstruction unit 214 (e.g. adder or summer 214) is configured to add the transform block 213 (i.e. reconstructed residual block 213) to the prediction block 265 to obtain a reconstructed block 215 in the sample domain, e.g. by adding - sample by sample - the sample values of the reconstructed residual block 213 and the sample values of the prediction block 265.

Filtering

The loop filter unit 220 (or short "loop filter" 220), is configured to filter the reconstructed block 215 to obtain a filtered block 221, or in general, to filter reconstructed samples to obtain filtered samples. The loop filter unit is, e.g., configured to smooth pixel transitions, or otherwise improve the video quality. The loop filter unit 220 may comprise one or more loop filters such as a de-blocking filter, a sample-adaptive offset (SAO) filter or one or more other filters, e.g. a bilateral filter, an adaptive loop filter (ALF), a sharpening, a smoothing filters or a collaborative filters, or any combination thereof. Although the loop filter unit 220 is shown in FIG. 2 as being an in loop filter, in other configurations, the loop filter unit 220

may be implemented as a post loop filter. The filtered block 221 may also be referred to as filtered reconstructed block 221.

Embodiments of the video encoder 20 (respectively loop filter unit 220) may be configured to output loop filter parameters (such as sample adaptive offset information), e.g. directly or encoded via the entropy encoding unit 270, so that, e.g., a decoder 30 may receive and apply the same loop filter parameters or respective loop filters for decoding.

Decoded Picture Buffer

The decoded picture buffer (DPB) 230 may be a memory that stores reference pictures, or in general reference picture data, for encoding video data by video encoder 20. The DPB 230 may be formed by any of a variety of memory devices, such as dynamic random access memory (DRAM), including synchronous DRAM (SDRAM), magnetoresistive RAM (MRAM), resistive RAM (RRAM), or other types of memory devices. The decoded picture buffer (DPB) 230 may be configured to store one or more filtered blocks 221. The decoded picture buffer 230 may be further configured to store other previously filtered blocks, e.g. previously reconstructed and filtered blocks 221, of the same current picture or of different pictures, e.g. previously reconstructed pictures, and may provide complete previously reconstructed, i.e. decoded, pictures (and corresponding reference blocks and samples) and/or a partially reconstructed current picture (and corresponding reference blocks and samples), for example for inter prediction. The decoded picture buffer (DPB) 230 may be also configured to store one or more unfiltered reconstructed blocks 215, or in general unfiltered reconstructed samples, e.g. if the reconstructed block 215 is not filtered by loop filter unit 220, or any other further processed version of the reconstructed blocks or samples.

Mode Selection (Partitioning & Prediction)

The mode selection unit 260 comprises partitioning unit 262, inter-prediction unit 244 and intra-prediction unit 254, and is configured to receive or obtain original picture data, e.g. an original block 203 (current block 203 of the current picture 17), and reconstructed picture data, e.g. filtered and/or unfiltered reconstructed samples or blocks of the same (current) picture and/or from one or a plurality of previously decoded pictures, e.g. from decoded picture buffer 230 or other buffers (e.g. line buffer, not shown).. The reconstructed picture data is used as reference picture data for prediction, e.g. inter-prediction or intra-prediction, to obtain a prediction block 265 or predictor 265. Mode selection unit 260 may be configured to determine or select a partitioning for a current block prediction mode (including no partitioning) and a prediction mode (e.g. an intra or inter prediction mode) and generate a corresponding prediction block 265, which is used for the calculation of the residual block 205 and for the reconstruction of the reconstructed block 215.

Embodiments of the mode selection unit 260 may be configured to select the partitioning and the prediction mode (e.g. from those supported by or available for mode selection unit 260), which provide the best match or in other words the minimum residual (minimum residual means better compression for transmission or storage), or a minimum signaling overhead (minimum signaling overhead means better compression for transmission or storage), or which considers or balances both. The mode selection unit 260 may be configured to determine the partitioning and prediction mode based on rate distortion optimization (RDO), i.e. select the prediction mode which provides a minimum rate distortion. Terms like "best", "minimum", "optimum" etc. in this context do not necessarily refer to an overall "best", "minimum", "optimum", etc. but may also refer to the fulfillment of a termination or selection criterion like a value exceeding or falling below a threshold or other constraints leading potentially to a "sub-optimum selection" but reducing complexity and processing time.

In other words, the partitioning unit 262 may be configured to partition the block 203 into smaller block partitions or sub-blocks (which form again blocks), e.g. iteratively using quad-tree-partitioning (QT), binary partitioning (BT) or triple-tree-partitioning (TT) or any combination thereof, and to perform, e.g., the prediction for each of the block partitions or sub-blocks, wherein the mode selection comprises the selection of the tree-structure of the partitioned block 203 and the prediction modes are applied to each of the block partitions or sub-blocks.

In the following the partitioning (e.g. by partitioning unit 260) and prediction processing (by inter-prediction unit 244 and intra-prediction unit 254) performed by an example video encoder 20 will be explained in more detail.

Partitioning

The partitioning unit 262 may partition (or split) a current block 203 into smaller partitions, e.g. smaller blocks of square or rectangular size. These smaller blocks (which may also be referred to as sub-blocks) may be further partitioned into even smaller partitions. This is also referred to tree-partitioning or hierarchical tree-partitioning, wherein a root block, e.g. at root tree-level 0 (hierarchy-level 0, depth 0), may be recursively partitioned, e.g. partitioned into two or more blocks of a next lower tree-level, e.g. nodes at tree-level 1 (hierarchy-level 1, depth 1), wherein these blocks may be again partitioned into two or more blocks of a next lower level, e.g. tree-level 2 (hierarchy-level 2, depth 2), etc. until the partitioning is terminated, e.g. because a termination criterion is fulfilled, e.g. a maximum tree depth or minimum block size is reached. Blocks which are not further partitioned are also referred to as leaf-blocks or leaf nodes of the tree. A tree using

partitioning into two partitions is referred to as binary-tree (BT), a tree using partitioning into three partitions is referred to as ternary-tree (TT), and a tree using partitioning into four partitions is referred to as quad-tree (QT).

As mentioned before, the term "block" as used herein may be a portion, in particular a square or rectangular portion, of a picture. With reference, for example, to HEVC and VVC, the block may be or correspond to a coding tree unit (CTU), a coding unit (CU), prediction unit (PU), and transform unit (TU) and/or to the corresponding blocks, e.g. a coding tree block (CTB), a coding block (CB), a transform block (TB) or prediction block (PB).

For example, a coding tree unit (CTU) may be or comprise a CTB of luma samples, two corresponding CTBs of chroma samples of a picture that has three sample arrays, or a CTB of samples of a monochrome picture or a picture that is coded using three separate colour planes and syntax structures used to code the samples. Correspondingly, a coding tree block (CTB) may be an NxN block of samples for some value of N such that the division of a component into CTBs is a partitioning. A coding unit (CU) may be or comprise a coding block of luma samples, two corresponding coding blocks of chroma samples of a picture that has three sample arrays, or a coding block of samples of a monochrome picture or a picture that is coded using three separate colour planes and syntax structures used to code the samples. Correspondingly a coding block (CB) may be an MxN block of samples for some values of M and N such that the division of a CTB into coding blocks is a partitioning.

In embodiments, e.g., according to HEVC, a coding tree unit (CTU) may be split into CUs by using a quad-tree structure denoted as coding tree. The decision whether to code a picture area using inter-picture (temporal) or intra-picture (spatial) prediction is made at the CU level. Each CU can be further split into one, two or four PUs according to the PU splitting type. Inside one PU, the same prediction process is applied and the relevant information is transmitted to the decoder on a PU basis. After obtaining the residual block by applying the prediction process based on the PU splitting type, a CU can be partitioned into transform units (TUs) according to another quadtree structure similar to the coding tree for the CU.

In embodiments, e.g., according to the latest video coding standard currently in development, which is referred to as Versatile Video Coding (VVC), a combined Quad-tree and binary tree (QTBT) partitioning is for example used to partition a coding block. In the QTBT block structure, a CU can have either a square or rectangular shape. For example, a coding tree unit (CTU) is first partitioned by a quadtree structure. The quadtree leaf nodes are further partitioned by a binary tree or ternary (or triple) tree structure. The partitioning tree leaf nodes are called coding units (CUs), and that segmentation is used for prediction and transform processing without any further partitioning. This means that the CU, PU and TU have the same block size in the QTBT coding block structure. In parallel, multiple partition, for example, triple tree partition may be used together with the QTBT block structure.

In one example, the mode selection unit 260 of video encoder 20 may be configured to perform any combination of the partitioning techniques described herein.

As described above, the video encoder 20 is configured to determine or select the best or an optimum prediction mode from a set of (e.g. pre-determined) prediction modes. The set of prediction modes may comprise, e.g., intra-prediction modes and/or inter-prediction modes.

## Intra-Prediction

The set of intra-prediction modes may comprise 35 different intra-prediction modes, e.g. non-directional modes like DC (or mean) mode and planar mode, or directional modes, e.g. as defined in HEVC, or may comprise 67 different intra-prediction modes, e.g. non-directional modes like DC (or mean) mode and planar mode, or directional modes, e.g. as defined for VVC.

The intra-prediction unit 254 is configured to use reconstructed samples of neighboring blocks of the same current picture to generate an intra-prediction block 265 according to an intra-prediction mode of the set of intra-prediction modes.

The intra prediction unit 254 (or in general the mode selection unit 260) is further configured to output intra-prediction parameters (or in general information indicative of the selected intra prediction mode for the block) to the entropy encoding unit 270 in form of syntax elements 266 for inclusion into the encoded picture data 21, so that, e.g., the video decoder 30 may receive and use the prediction parameters for decoding.

## Inter-Prediction

The set of (or possible) inter-prediction modes depends on the available reference pictures (i.e. previous at least partially decoded pictures, e.g. stored in DBP 230) and other inter-prediction parameters, e.g. whether the whole reference picture or only a part, e.g. a search window area around the area of the current block, of the reference picture is used for searching for a best matching reference block, and/or e.g. whether pixel interpolation is applied, e.g. half/semi-pel and/or quarter-pel interpolation, or not.

Additional to the above prediction modes, skip mode and/or direct mode may be applied.

The inter prediction unit 244 may include a motion estimation (ME) unit and a motion compensation (MC) unit (both not shown in Fig.2). The motion estimation unit may be configured to receive or obtain the picture block 203 (current picture block 203 of the current picture 17) and a decoded picture 231, or at least one or a plurality of previously reconstructed blocks, e.g. reconstructed blocks of one or a plurality of other/different previously decoded pictures 231, for motion estimation. E.g. a video sequence may comprise the current picture and the previously decoded pictures 231, or in other words, the current picture and the previously decoded pictures 231 may be part of or form a sequence of pictures forming a video sequence.

The encoder 20 may, e.g., be configured to select a reference block from a plurality of reference blocks of the same or different pictures of the plurality of other pictures and provide a reference picture (or reference picture index) and/or an offset (spatial offset) between the position (x, y coordinates) of the reference block and the position of the current block as inter prediction parameters to the motion estimation unit. This offset is also called motion vector (MV).

The motion compensation unit is configured to obtain, e.g. receive, an inter prediction parameter and to perform inter prediction based on or using the inter prediction parameter to obtain an inter prediction block 265. Motion compensation, performed by the motion compensation unit, may involve fetching or generating the prediction block based on the motion/block vector determined by motion estimation, possibly performing interpolations to sub-pixel precision. Interpolation filtering may generate additional pixel samples from known pixel samples, thus potentially increasing the number of candidate prediction blocks that may be used to code a picture block. Upon receiving the motion vector for the PU of the current picture block, the motion compensation unit may locate the prediction block to which the motion vector points in one of the reference picture lists.

The motion compensation unit may also generate syntax elements associated with the blocks and video slices for use by video decoder 30 in decoding the picture blocks of the video slice. In addition or as an alternative to slices and respective syntax elements, tile groups and/or tiles and respective syntax elements may be generated or used.

## Entropy Coding

The entropy encoding unit 270 is configured to apply, for example, an entropy encoding algorithm or scheme (e.g. a variable length coding (VLC) scheme, an context adaptive VLC scheme (CAVLC), an arithmetic coding scheme, a binarization, a context adaptive binary arithmetic coding (CABAC), syntax-based context-adaptive binary arithmetic coding (SBAC), probability interval partitioning entropy (PIPE) coding or another entropy encoding methodology or technique) or bypass (no compression) on the quantized coefficients 209, inter prediction parameters, intra prediction parameters, loop filter parameters and/or other syntax elements to obtain encoded picture data 21 which can be output via the output 272, e.g. in the form of an encoded bitstream 21, so that, e.g., the video decoder 30 may receive and use the parameters for decoding, . The encoded bitstream 21 may be transmitted to video decoder 30, or stored in a memory for later transmission or retrieval by video decoder 30.

Other structural variations of the video encoder 20 can be used to encode the video stream. For example, a non-transform based encoder 20 can quantize the residual signal directly without the transform processing unit 206 for certain blocks or frames. In another implementation, an encoder 20 can have the quantization unit 208 and the inverse quantization unit 210 combined into a single unit.

## Decoder and Decoding Method

Fig. 3 shows an example of a video decoder 30 that is configured to implement the techniques of this present application. The video decoder 30 is configured to receive encoded picture data 21 (e.g. encoded bitstream 21), e.g. encoded by encoder 20, to obtain a decoded picture 331. The encoded picture data or bitstream comprises information for decoding the encoded picture data, e.g. data that represents picture blocks of an encoded video slice (and/or tile groups or tiles) and associated syntax elements.

In the example of Fig. 3, the decoder 30 comprises an entropy decoding unit 304, an inverse quantization unit 310, an inverse transform processing unit 312, a reconstruction unit 314 (e.g. a summer 314), a loop filter 320, a decoded picture buffer (DBP) 330, a mode application unit 360, an inter prediction unit 344 and an intra prediction unit 354. Inter prediction unit 344 may be or include a motion compensation unit. Video decoder 30 may, in some examples, perform a decoding pass generally reciprocal to the encoding pass described with respect to video encoder 100 from FIG. 2.

As explained with regard to the encoder 20, the inverse quantization unit 210, the inverse transform processing unit 212, the reconstruction unit 214 the loop filter 220, the decoded picture buffer (DPB) 230, the inter prediction unit 344 and the intra prediction unit 354 are also referred to as forming the "built-in decoder" of video encoder 20. Accordingly, the inverse quantization unit 310 may be identical in function to the inverse quantization unit 110, the inverse transform processing unit 312 may be identical in function to the inverse transform processing unit 212, the reconstruction unit 314 may be identical in function to reconstruction unit 214, the loop filter 320 may be identical in function to the loop filter 220, and the decoded picture buffer 330 may be identical in function to the decoded picture buffer 230. Therefore, the

explanations provided for the respective units and functions of the video 20 encoder apply correspondingly to the respective units and functions of the video decoder 30.

Entropy Decoding

The entropy decoding unit 304 is configured to parse the bitstream 21 (or in general encoded picture data 21) and perform, for example, entropy decoding to the encoded picture data 21 to obtain, e.g., quantized coefficients 309 and/or decoded coding parameters (not shown in Fig. 3), e.g. any or all of inter prediction parameters (e.g. reference picture index and motion vector), intra prediction parameter (e.g. intra prediction mode or index), transform parameters, quantization parameters, loop filter parameters, and/or other syntax elements. Entropy decoding unit 304 maybe configured to apply the decoding algorithms or schemes corresponding to the encoding schemes as described with regard to the entropy encoding unit 270 of the encoder 20. Entropy decoding unit 304 may be further configured to provide inter prediction parameters, intra prediction parameter and/or other syntax elements to the mode application unit 360 and other parameters to other units of the decoder 30. Video decoder 30 may receive the syntax elements at the video slice level and/or the video block level. In addition or as an alternative to slices and respective syntax elements, tile groups and/or tiles and respective syntax elements may be received and/or used.

Inverse Quantization

The inverse quantization unit 310 may be configured to receive quantization parameters (QP) (or in general information related to the inverse quantization) and quantized coefficients from the encoded picture data 21 (e.g. by parsing and/or decoding, e.g. by entropy decoding unit 304) and to apply based on the quantization parameters an inverse quantization on the decoded quantized coefficients 309 to obtain dequantized coefficients 311, which may also be referred to as transform coefficients 311. The inverse quantization process may include use of a quantization parameter determined by video encoder 20 for each video block in the video slice (or tile or tile group) to determine a degree of quantization and, likewise, a degree of inverse quantization that should be applied.

Inverse Transform

Inverse transform processing unit 312 may be configured to receive dequantized coefficients 311, also referred to as transform coefficients 311, and to apply a transform to the dequantized coefficients 311 in order to obtain reconstructed residual blocks 213 in the sample domain. The reconstructed residual blocks 213 may also be referred to as transform blocks 313. The transform may be an inverse transform, e.g., an inverse DCT, an inverse DST, an inverse integer transform, or a conceptually similar inverse transform process. The inverse transform processing unit 312 may be further configured to receive transform parameters or corresponding information from the encoded picture data 21 (e.g. by parsing and/or decoding, e.g. by entropy decoding unit 304) to determine the transform to be applied to the dequantized coefficients 311.

Reconstruction

The reconstruction unit 314 (e.g. adder or summer 314) may be configured to add the reconstructed residual block 313, to the prediction block 365 to obtain a reconstructed block 315 in the sample domain, e.g. by adding the sample values of the reconstructed residual block 313 and the sample values of the prediction block 365.

Filtering

The loop filter unit 320 (either in the coding loop or after the coding loop) is configured to filter the reconstructed block 315 to obtain a filtered block 321, e.g. to smooth pixel transitions, or otherwise improve the video quality. The loop filter unit 320 may comprise one or more loop filters such as a de-blocking filter, a sample-adaptive offset (SAO) filter or one or more other filters, e.g. a bilateral filter, an adaptive loop filter (ALF), a sharpening, a smoothing filters or a collaborative filters, or any combination thereof. Although the loop filter unit 320 is shown in FIG. 3 as being an in loop filter, in other configurations, the loop filter unit 320 may be implemented as a post loop filter.

Decoded Picture Buffer

The decoded video blocks 321 of a picture are then stored in decoded picture buffer 330, which stores the decoded pictures 331 as reference pictures for subsequent motion compensation for other pictures and/or for output respectively display.

The decoder 30 is configured to output the decoded picture 311, e.g. via output 312, for presentation or viewing to a user.

Prediction

The inter prediction unit 344 may be identical to the inter prediction unit 244 (in particular to the motion compensation unit) and the intra prediction unit 354 may be identical to the inter prediction unit 254 in function, and performs split or partitioning decisions and prediction based on the partitioning and/or prediction parameters or respective information received from the encoded picture data 21 (e.g. by parsing and/or decoding, e.g. by entropy decoding unit 304). Mode application unit 360 may be configured to perform the prediction (intra or inter prediction) per block based on reconstructed pictures, blocks or respective samples (filtered or unfiltered) to obtain the prediction block 365.

When the video slice is coded as an intra coded (I) slice, intra prediction unit 354 of mode application unit 360 is configured to generate prediction block 365 for a picture block of the current video slice based on a signaled intra prediction mode and data from previously decoded blocks of the current picture. When the video picture is coded as an inter coded (i.e., B, or P) slice, inter prediction unit 344 (e.g. motion compensation unit) of mode application unit 360 is configured to produce prediction blocks 365 for a video block of the current video slice based on the motion vectors and other syntax elements received from entropy decoding unit 304. For inter prediction, the prediction blocks may be produced from one of the reference pictures within one of the reference picture lists. Video decoder 30 may construct the reference frame lists, List 0 and List 1, using default construction techniques based on reference pictures stored in DPB 330. The same or similar may be applied for or by embodiments using tile groups (e.g. video tile groups) and/or tiles (e.g. video tiles) in addition or alternatively to slices (e.g. video slices), e.g. a video may be coded using I, P or B tile groups and /or tiles.

Mode application unit 360 is configured to determine the prediction information for a video block of the current video slice by parsing the motion vectors or related information and other syntax elements, and uses the prediction information to produce the prediction blocks for the current video block being decoded. For example, the mode application unit 360 uses some of the received syntax elements to determine a prediction mode (e.g., intra or inter prediction) used to code the video blocks of the video slice, an inter prediction slice type (e.g., B slice, P slice, or GPB slice), construction information for one or more of the reference picture lists for the slice, motion vectors for each inter encoded video block of the slice, inter prediction status for each inter coded video block of the slice, and other information to decode the video blocks in the current video slice. The same or similar may be applied for or by embodiments using tile groups (e.g. video tile groups) and/or tiles (e.g. video tiles) in addition or alternatively to slices (e.g. video slices), e.g. a video may be coded using I, P or B tile groups and/or tiles.

Embodiments of the video decoder 30 as shown in Fig. 3 may be configured to partition and/or decode the picture by using slices (also referred to as video slices), wherein a picture may be partitioned into or decoded using one or more slices (typically non-overlapping), and each slice may comprise one or more blocks (e.g. CTUs). Embodiments of the video decoder 30 as shown in Fig. 3 may be configured to partition and/or decode the picture by using tile groups (also referred to as video tile groups) and/or tiles (also referred to as video tiles), wherein a picture may be partitioned into or decoded using one or more tile groups (typically non-overlapping), and each tile group may comprise, e.g. one or more blocks (e.g. CTUs) or one or more tiles, wherein each tile, e.g. may be of rectangular shape and may comprise one or more blocks (e.g. CTUs), e.g. complete or fractional blocks.

Other variations of the video decoder 30 can be used to decode the encoded picture data 21. For example, the decoder 30 can produce the output video stream without the loop filtering unit 320. For example, a non-transform based decoder 30 can inverse-quantize the residual signal directly without the inverse-transform processing unit 312 for certain blocks or frames. In another implementation, the video decoder 30 can have the inverse-quantization unit 310 and the inverse-transform processing unit 312 combined into a single unit.

It should be understood that, in the encoder 20 and the decoder 30, a processing result of a current step may be further processed and then output to the next step. For example, after interpolation filtering, motion vector derivation or loop filtering, a further operation, such as Clip or shift, may be performed on the processing result of the interpolation filtering, motion vector derivation or loop filtering.

It should be noted that further operations may be applied to the derived motion vectors of current block (including but not limit to control point motion vectors of affine mode, sub-block motion vectors in affine, planar, ATMVP modes, temporal motion vectors, and so on). For example, the value of motion vector is constrained to a predefined range according to its representing bit. If the representing bit of motion vector is bitDepth, then the range is -2^(bitDepth-1) ~ 2^(bitDepth-1)-1, where "^" means exponentiation. For example, if bitdepth is set equal to 16, the range is -32768 ~ 32767; if bitDepth is set equal to 18, the range is -131072~131071. For example, the value of the derived motion vector (e.g. the MVs of four 4x4 sub-blocks within one 8x8 block) is constrained such that the max difference between integer parts of the four 4x4 sub-block MVs is no more than N pixels, such as no more than 1 pixel. Here provides two methods for constraining the motion vector according to the bitDepth.

Method 1: remove the overflow MSB (most significant bit) by flowing operations

$$ux = ( mvx+2^{bitDepth} ) \% 2^{bitDepth} \quad (1)$$

$$mvx = ( ux >= 2^{bitDepth-1} ) ? (ux - 2^{bitDepth} ) : ux \quad (2)$$

$$uy = ( mvy+2^{bitDepth} ) \% 2^{bitDepth} \quad (3)$$

$$mvy = ( uy >= 2^{bitDepth-1} ) ? (uy - 2^{bitDepth} ) : uy \quad (4)$$

where mvx is a horizontal component of a motion vector of an image block or a sub-block, mvy is a vertical component of a motion vector of an image block or a sub-block, and ux and uy indicates an intermediate value;
For example, if the value of mvx is -32769, after applying formula (1) and (2), the resulting value is 32767. In computer system, decimal numbers are stored as two's complement. The two's complement of -32769 is 1,0111,1111,1111,1111 (17 bits), then the MSB is discarded, so the resulting two's complement is 0111,1111,1111,1111 (decimal number is 32767), which is same as the output by applying formula (1) and (2).

$$ux = ( mvpx + mvdx +2^{bitDepth} ) \% 2^{bitDepth} \quad (5)$$

$$mvx = ( ux >= 2^{bitDepth-1} ) ? (ux - 2^{bitDepth} ) : ux \quad (6)$$

$$uy = ( mvpy + mvdy +2^{bitDepth} ) \% 2^{bitDepth} \quad (7)$$

$$mvy = ( uy >= 2^{bitDepth-1} ) ? (uy - 2^{bitDepth} ) : uy \quad (8)$$

The operations may be applied during the sum of mvp and mvd, as shown in formula (5) to (8).

Method 2: remove the overflow MSB by clipping the value

$$vx = Clip3(-2^{bitDepth-1}, 2^{bitDepth-1} -1, vx)$$

$$vy = Clip3(-2^{bitDepth-1}, 2^{bitDepth-1} -1, vy)$$

where vx is a horizontal component of a motion vector of an image block or a sub-block, vy is a vertical component of a motion vector of an image block or a sub-block; x, y and z respectively correspond to three input value of the MV clipping process, and the definition of function Clip3 is as follow:

$$Clip3( x, y, z ) = \begin{cases} x & ; \quad z < x \\ y & ; \quad z > y \\ z & ; \quad otherwise \end{cases}$$

FIG. 4 is a schematic diagram of a video coding device 400 according to an embodiment of the disclosure. The video coding device 400 is suitable for implementing the disclosed embodiments as described herein. In an embodiment, the video coding device 400 may be a decoder such as video decoder 30 of FIG. 1A or an encoder such as video encoder 20 of FIG. 1A.

The video coding device 400 comprises ingress ports 410 (or input ports 410) and receiver units (Rx) 420 for receiving data; a processor, logic unit, or central processing unit (CPU) 430 to process the data; transmitter units (Tx) 440 and egress ports 450 (or output ports 450) for transmitting the data; and a memory 460 for storing the data. The video coding device 400 may also comprise optical-to-electrical (OE) components and electrical-to-optical (EO) components coupled to the ingress ports 410, the receiver units 420, the transmitter units 440, and the egress ports 450 for egress or ingress of optical or electrical signals.

The processor 430 is implemented by hardware and software. The processor 430 may be implemented as one or more CPU chips, cores (e.g., as a multi-core processor), FPGAs, ASICs, and DSPs. The processor 430 is in communication with the ingress ports 410, receiver units 420, transmitter units 440, egress ports 450, and memory 460. The processor 430 comprises a coding module 470. The coding module 470 implements the disclosed embodiments described above. For instance, the coding module 470 implements, processes, prepares, or provides the various coding operations. The inclusion of the coding module 470 therefore provides a substantial improvement to the functionality of the

video coding device 400 and effects a transformation of the video coding device 400 to a different state. Alternatively, the coding module 470 is implemented as instructions stored in the memory 460 and executed by the processor 430.

The memory 460 may comprise one or more disks, tape drives, and solid-state drives and may be used as an overflow data storage device, to store programs when such programs are selected for execution, and to store instructions and data that are read during program execution. The memory 460 may be, for example, volatile and/or nonvolatile and may be a read-only memory (ROM), random access memory (RAM), ternary content-addressable memory (TCAM), and/or static random-access memory (SRAM).

Fig. 5 is a simplified block diagram of an apparatus 500 that may be used as either or both of the source device 12 and the destination device 14 from Fig. 1 according to an exemplary embodiment.

A processor 502 in the apparatus 500 can be a central processing unit. Alternatively, the processor 502 can be any other type of device, or multiple devices, capable of manipulating or processing information now-existing or hereafter developed. Although the disclosed implementations can be practiced with a single processor as shown, e.g., the processor 502, advantages in speed and efficiency can be achieved using more than one processor.

A memory 504 in the apparatus 500 can be a read only memory (ROM) device or a random access memory (RAM) device in an implementation. Any other suitable type of storage device can be used as the memory 504. The memory 504 can include code and data 506 that is accessed by the processor 502 using a bus 512. The memory 504 can further include an operating system 508 and application programs 510, the application programs 510 including at least one program that permits the processor 502 to perform the methods described here. For example, the application programs 510 can include applications 1 through N, which further include a video coding application that performs the methods described here.

The apparatus 500 can also include one or more output devices, such as a display 518. The display 518 may be, in one example, a touch sensitive display that combines a display with a touch sensitive element that is operable to sense touch inputs. The display 518 can be coupled to the processor 502 via the bus 512.

Although depicted here as a single bus, the bus 512 of the apparatus 500 can be composed of multiple buses. Further, the secondary storage 514 can be directly coupled to the other components of the apparatus 500 or can be accessed via a network and can comprise a single integrated unit such as a memory card or multiple units such as multiple memory cards. The apparatus 500 can thus be implemented in a wide variety of configurations.

Triangular partitioning mode (TPM) and geometric motion partitioning (GMP) are partitioning techniques that enable non-horizontal and non-vertical boundaries between prediction partitions, as exemplarily shown in Fig. 6, where prediction unit PU1 601 and prediction unit PU1 602 are combined in region 603 using a weighted averaging procedure of subsets of their samples related to different color components. TMP enables boundaries between prediction partitions only along rectangular block diagonals, whereas boundaries according to GMP may be located at arbitrary positions as Fig. 9 illustrates. In region 603 of Fig. 6, integer numbers within squares denote weights $W_{\mathrm{PU1}}$ applied to the luma component of prediction unit PU1. In an example, weights $W_{\mathrm{PU2}}$ applied to the luma component of prediction unit PU2 are calculated as follows:

$$W_{\mathrm{PU2}} = 8 - W_{\mathrm{PU1}}.$$

Weights applied to chroma components of corresponding prediction units may differ from weights applied to luma components of corresponding prediction units.

The details on the current syntax for TPM are presented in Table 1, where 4 syntax elements are used to signal information on TPM:

MergeTriangleFlag is a flag that identifies whether TPM is selected or not ("0" means that TPM is not selected; otherwise, TPM is chosen);

merge_triangle_split_dir is a split direction flag for TPM ("0" means the split direction from top-left corner to the below-right corner; otherwise, the split direction is from top-right corner to the below-left corner);

merge_triangle_idx0 and merge_triangle_idx1 are indices of merge candidates 0 and 1 used for TPM.

**Table 1. Merge data syntax including syntax for TPM**

| merge_data( x0, y0, cbWidth, cbHeight ) { | **Descriptor** |
|---|---|
| if ( CuPredMode [ x0 ][ y0 ] == MODE_IBC ) { | |
| if( MaxNumMergeCand > 1 ) | |

(continued)

| | |
|---|---|
| **merge_idx**[ x0 ][ y0 ] | ae(v) |
| } else { | |
| if( sps_mmvd_enabled_flag ‖ cbWidth * cbHeight != 32 ) | |
| **regular_merge_flag**[ x0 ][ y0 ] | ae(v) |
| if ( regular_merge_flag[ x0 ][ y0 ] = = 1 ){ | |
| if( MaxNumMergeCand > 1 ) | |
| **merge_idx**[ x0 ][ y0 ] | ae(v) |
| } else { | |
| if( sps_mmvd_enabled_flag && cbWidth * cbHeight != 32 ) | |
| **mmvd_merge_flag**[ x0 ][ y0 ] | ae(v) |
| if( mmvd_merge_flag[ x0 ][ y0 ] = = 1 ) { | |
| if( MaxNumMergeCand > 1 ) | |
| **mmvd_cand_flag**[ x0 ][ y0 ] | ae(v) |
| **mmvd_distance_idx**[ x0 ][ y0 ] | ae(v) |
| **mmvd_direction_idx**[ x0 ][ y0 ] | ae(v) |
| } else { | |
| if( MaxNumSubblockMergeCand > 0 && cbWidth >= 8 && cbHeight >= 8 ) | |
| **merge_subblock_flag**[ x0 ][ y0 ] | ae(v) |
| if( merge_subblock_flag[ x0 ][ y0 ] == 1 ) { | |
| if( MaxNumSubblockMergeCand > 1 ) | |
| **merge_subblock_idx**[ x0 ][ y0 ] | ae(v) |
| } else { | |
| if( sps_ciip_enabled_flag && cu_skip_flag[ x0 ][ y0 ] == 0 &&<br>( cbWidth * cbHeight ) >= 64 && cbWidth < 128 && cbHeight < 128 )<br>{ | |
| **ciip_flag**[ x0 ][ y0 ] | ae(v) |
| if( ciip_flag[ x0 ][ y0 ] && MaxNumMergeCand > 1 ) | |
| **merge_idx**[ x0 ][ y0 ] | ae(v) |
| } | |
| if( MergeTriangleFlag[ x0 ][ y0 ] ) { | |
| **merge_triangle_split_dir**[ x0 ][ y0 ] | ae(v) |
| **merge_triangle_idx0**[ x0 ][ y0 ] | ae(v) |
| **merge_triangle_idx1**[ x0 ][ y0 ] | ae(v) |
| } | |
| } | |
| } | |
| } | |
| } | |
| } | |

In more detail, TPM is described in the following proposal: R-L. Liao and C.S. Lim "CE10.3.1.b: Triangular

prediction unit mode," contribution JVET-L0124 to the 12th JVET meeting, Macao, China, October 2018. GMP is explained in the following paper: M. Bläser, J. Schneider, Johannes Sauer, and Mathias Wien, "Geometry-based Partitioning for Predictive Video Coding with Transform Adaptation," Picture Coding Symposium (PCS), San Francisco, California, USA, June 2018.

Compression efficiency of TPM and GMP is increased by reducing the bit-rate needed to encode blocks, wherein the blocks are predicted using these and similar partitioning techniques.

Prediction errors are localized only in the near-boundary region that covers the boundary between partitions to use a more compact representation. Transform and quantization are performed only for this near-boundary region.

In an exemplary embodiment, a near-boundary region is defined by start and end side positions, wherein the first of the side positions is located on a first side of the block, wherein a side of the block is top, left, right or bottom; and the second side position is located on a second side of the block, and wherein the first side of the block is not the same as the second side of a block. The near-boundary region could be defined by a curve that connects the first and the second positions and includes the near-boundary region, wherein samples with a distance to the curve is not exceeding a distance threshold may be included. This distance threshold may be set to 2. For example, rows of a subsampled block may be obtained by selecting a set of samples from a range of rows of a block of residual signal, wherein the start position for the first row of the range is specified as the first side position and the end position is specified for the last row of the range as the end position, and wherein a sampling position is specified for each of the rows between the first row and the last row of the range so that the sampling position is a monotonic function of the row position within a block, and wherein the set of samples comprises the samples for which the distance to the sampling position of the row is not greater than the distance threshold.

In another example, columns of a subsampled block may be obtained by selecting a set of samples from a range of columns of a block of a residual signal, wherein the start position for the first column of the range is specified as the first side position and the end position is specified for the last column of the range as the end position, and wherein a sampling position is specified for each of the columns between the first column and the last column of the range so that the sampling position is a monotonic function of the column position within a block, and wherein the set of samples comprises the samples for which the distance to the sampling position of the column is not greater than the distance threshold.

It's understood, that the distance threshold is smaller than corresponding block side length, i.e. it could be set to half of the height or half of the width of the block.

Embodiments of this invention disclose a mechanism of resampling a block to obtain this near-boundary region that is processed as a transform block / transform unit.

In an embodiment of the present invention, as shown in Fig. 6, prediction unit PU1 601 and prediction unit PU2 602 are combined using TPM technique to get a predictor, wherein a prediction error is calculated for these units. A residual block contains 2 zero-residual regions 611 and 612, and region 613 is resampled into a transform block (TB) 623, that is the TB623 represents residuals for a color component of a transform unit (TU). In regions 611 and 612, residuals are assumed to be zero, whereas the residual should be non-zero in region 613. In fig. 6, region 613 covers the area where weights at least for one prediction unit PU1 or PU2 are non-zero. In an example, residual signal from region 613 can be resampled into transform block 623 by reading samples from memory row-wise or column-wise.

In another example, as shown in Fig. 7, non-zero residuals showed in region 701 covers a part of the area where weights at least for one prediction unit PU1 or PU2 are non-zero. In regions 702 and 703, residuals are assumed to be quantized out to zero. So, transform block 704 that represents residues for a color component of a transform unit (TU) is the result of resampling region 701.

In another example, as shown in Fig. 8, processing steps for the TPM case are presented as 2 flow-charts for decoder and encoder, respectively. In step 801, residual data are decoded, inverse quantization and inverse transform (if any) are performed to obtain transform blocks (TBs) of a TU. Then, inverse resampling 802 restores residuals within each transform block (TB) of a TU placing samples of a transform blocks at corresponding positions within a residual block. The correspondence between sample positions in region 613 and sample positions in transform block 623 of a TU is demonstrated in Fig. 6. Similarly, this correspondence is also shown in Fig. 7. Regions 611 and 612 in Fig. 6 or regions 702 and 703 in Fig. 7 are filled in by zero. Step 803 corresponds to PU reconstruction using the restored residuals and TPM predictor.

In an example, at the encoder side, the order of actions shown in Fig. 8 for TPM is as follows. In step 811, the prediction process is performed to get a predictor for a unit, residuals are obtained according to the predictor. In step 812, samples corresponds to region 613 in Fig. 6 or region 701 in Fig. 7 are fetched from memory either row-wise or column-wise to get transform blocks of a TU. Forward transform, quantization and residual coding are performed as in step 813.

Similarly, resampling and inverse resampling are used in the case of GMP as shown in Fig. 9. In regions 902, 904, 912 and 914, residuals are assumed to be zero. The boundary between regions 902 and 904 is shown by line 903, whereas the boundary between regions 912 and 914 is shown by line 913. The near-boundary regions 901 or 911 cover the area between regions 902 and 904 as well as 912 and 914 in different ways as Fig. 9 illustrates, respectively. Besides, regions 901 or 911 are resampled into transform blocks of different shapes 905 and 915, respectively.

In Fig. 10, processing steps for the GMP case are presented as 2 flow-charts for a decoder and an encoder. In step 1001, residual are decoded, inverse quantization and inverse transform (if any) are performed to obtain transform blocks of a TU. Then, inverse resampling 1002 should restore residuals within each transform block of a TU, placing samples of a transform blocks at corresponding positions within a residual blocks. The correspondence between samples positions within regions 901 and 911 and transform blocks 905 and 915 of TUs is demonstrated in Fig. 9. Regions 902, 904, 912 and 914 in Fig. 9 are filled in with zero. Final step 1003 corresponds to PU reconstruction using the restored residuals and GMP predictor.

At the encoder side, the order of actions shown in Fig. 10 for GMP is as follows. In step 1011, prediction process is fulfilled to get a predictor for a unit and then residuals are obtained. In step 1012, samples corresponds to regions 901 and 911 in Fig. 9 are fetched from memory either row-wise or column-wise to get transform blocks of a TU. Finally, forward transform, quantization and residual coding are performed as in step 1013.

The proposed mechanism adds one more state that should be signal. In Fig. 11, we disclose a signaling mechanism for the proposed method exemplarily applied to TPM. In steps 1101 and 1102, the value of the flags MergeTriagleFlag and cbf are checked. If the values of both MergeTriagleFlag and cbf flags is set to 1, then the flag ShapeAdaptiveResamplingFlag should be checked. At the encoder side, its value can be iterated in Rate-Distortion Optimization procedure. So, its set value should be read from memory. At the decoder side, a value of ShapeAdaptiveResamplingFlag should be parsed from a bit-stream. If ShapeAdaptiveResamplingFlag equals 1, resampling for transform blocks is performed.

Note that in the current design of H.266/VVC, there are several syntax elements that have meanings of cbf (Coded Block Flag) flags, namely: cu_cbf for an entire coding unit (CU), tu_cbf_luma, tu_cbf_cb and tu_cbf_cr are CBFs for luma, Cb, and Cr components of TU, respectively. For the sake of generality, the abbreviation cbf in step 1102 may denote any of these flag. Of course, the meaning of this flag is different in each case. If cu_cbf is checked, then the proposed resampling is applied to each color component. Otherwise, it is used only for a concrete color component (luma, Cb, or Cr).

As mentioned above, the height of a region to be resampled and, therefore, the height of a TB can be different. In particular, the height of region 613 in Fig. 6 differs from the height of region 701 in Fig. 7. To make the design of the proposed technique flexible, the height of a region to be resampled and, therefore, the height of a TB should be adjustable. The 1st mechanism to adjust the height of a region to be resampled and, therefore, the height of a TB is to derive it using an entire block shape and size. For example, a values of $height_{TB}$ of a region to be resampled and, therefore, the height of a TB can be calculated as follows:

$$height_{TB} = \max\{width, height\} / 2,$$

where width and height are the horizontal and vertical lengths of a block. The 2nd mechanism to adjust the height of a region to be resampled and, therefore, the height of a TB is to signal it in a bit-stream as shown in Fig. 12. Steps 1201-1203 are same as steps 1101-1103 in Fig. 11. At step 1204, the value of ShapeAdaptiveResamplingFlag is checked whether it equals 1 or not. If ShapeAdaptiveResamplingFlag equals 1, then the syntax element ShapeAdaptiveResampling should be read from memory (at the encoder side) or parsed from a bit-stream (at the decoder side) at step 1205. Different codes can be used to encode or decode the syntax element ShapeAdaptiveResampling. For example, if it is necessary to choose only between 2 values of the heights of a region to be resampled and, therefore, the height of a TB, 1 bin flag can be used. If more options (3 or more variants of the height) are available, unary truncated code, fixed-length code, exponential Golomb-Rice code, etc. might be used as codes.

One of the difficulties in using the proposed technique is how to perform deblocking filtering on the boundaries of a region when its boundaries are not horizontal or vertical. In Fig. 13, region 1301 is resampled into a TB and then transform (if any) and quantization are performed. So, blocking artifacts might appear near boundary between region 1301 and region 1302 as well as near boundary between region 1301 and region 1303. To deblock these 2 boundaries, we propose to use the following mechanism:

1. Fetch sample p[x][y] located within region 1301 immediately on block boundaries and marked by black circles in Fig. 13;
2. Assign value of (p[x][y] >> $k$) to samples at position (x, y - $k$) if k <= 3
3. Fetch sample p[x][y] locates within region 1301 directly on block boundaries and marked by white circles in Fig. 13;
4. Assign value of (p[x][y] >> $k$) to samples at position (x, y + $k$) if $k$ <= 3.

The proposed deblocking filter is directional. The propagation directions are marked by arrows 1304 and 1305 in Fig. 13.

Another mechanism to deblock boundaries between regions 1401 and 1402 as well as 1401 and 1403 is presented in Fig. 14. Spatial filter of $(2^N+1)x(2^M+1)$ size (where $N$ and $M$ are non-zero integer values) are applied on the

boundaries between regions 1401 and 1402 as well as 1401 and 1403 so that the spatial filter is fed by a group of samples that contains at least one sample belonging to region 1401 and at least one sample belonging to region 1402 or 1403. In the example shown in Fig. 14, regions where spatial filter is applied have sizes of of 3x3 and are denoted by 1404 and 1405 have size. This spatial filter should relate to the type of low-pass smoothing filters. If a 3x3 Gaussian filter is used, its coefficients can be as follows:

$$\frac{1}{16} \times \begin{pmatrix} 1 & 2 & 1 \\ 2 & 4 & 2 \\ 1 & 2 & 1 \end{pmatrix}.$$

In another embodiment of the invention illustrated in Fig. 15 and Fig. 16 a near boundary region is defined by the partitioning process of GMP that subdivides a PU onto two regions using a straight line. This line has an intersection with the PU boundary in two points corresponding to two integer positions. There are 6 cases of partitioning, four of these cases split PU into one triangle and 1 pentagon area, and the remaining two cases split PU into two trapeze areas.

For the trapeze cases these two positions are located on top and bottom side, or on the left and right sides of the PU. The near-boundary region is obtained by either a row-wise or column-wise scan, wherein for each iteration sampling position is shifted by a step value that could be defined as:

$$s = (y_E - y_S + S_{\text{TB}})/(x_E - x_S - 1) \ ,$$

when the scan is column-wise; and

$$s = (x_E - x_S + S_{\text{TB}})/(y_E - y_S - 1) \ ,$$

when the scan is row-wise.

In the equations above $\{x_S, y_S\}$ and $\{x_E, y_E\}$ denote start and end positions, shown in Fig 15 and Fig 16 respectively, for a colomn-wise and a row-wise scans. Depending on the scan, $S_{TB}$ denotes $\text{height}_{TB}$ (Fig 15) or $\text{width}_{TB}$ (Fig 16) of the subsampled block and is further referred to as a subsampling width $S_W$.

For a row-wise scan, samples of the subsampled block *B*(*x, y*) are obtained from PU samples *p(x,y)* as follows:

$$B(x,y) = p(x_S + s \cdot y - S_w, y_S + y)$$

For a column-wise scan, samples of the subsampled block *B*(*x, y*) are obtained from PU samples *p(x,y)* as follows:

$$B(x,y) = p(x_S + x \ \ , y_S + s \cdot y - S_w).$$

For the cases when the split results in one triangle and one pentagon, selection of the scan depends on whether a horizontal or vertical component of the start and end positions are closer to the corner that is aligned with the resulting triangle.

When the horizontal component is closer to the corner of the split case, $x_S$ - $x_E$ is quantized to the closest power-of-two value and a column-wise scan is applied.

When the vertical component is closer to the corner of the split case, $y_S$ - $y_E$ is quantized to the closest power-of-two value and a row-wise scan is applied.

In both cases, $S_w$ is selected in such a way that the resulting near-boundary region is inside the PU.

Another mechanism of non-rectangular partitioning known as Geometrical partitioning (GEO) was disclosed in contribution JVET-O0489 "Non-CE4: Geometrical partitioning for inter blocks" by S. Esenlik, H. Gao, A. Filippov, V. Rufitskiy, A.M. Kotra, B. Wang, Z. Zhao, E. Alshina, M. Bläser, J. Sauer) to the 16th JVET meeting, Gothenburg, Sweden, July 2019. In fact, GEO is very similar to GMP using a subset of GMP's features and capabilities. Fig. 17 illustrates how shape-adaptive resampling can be applied to a block where GEO is used. In Fig. 18, different partitioning modes are shown, where modes 1810 and 1820 correspond to TPM with different values of a split flag. Subblocks 1811 and 1812 as well as subblocks 1821 and 1822 denote both prediction blocks for triangular partitioning modes 1810 and 1820, respectively. Partitioning modes 1830, 1840, 1850, 1860, 1870, 1880, and 1890 are beyond the capabilities of the VTM-6.0 software and VVC specification draft version 6. These modes are generated by GEO. Each of them requires two prediction blocks such as 1831 and 1832 for partitioning mode 1830. A prediction block defines an inter-predictor that can be taken only out of a set of merge candidates also known as merge candidate list. In fact, mechanisms of constructing the merge candidate list are shared by (i.e. is the same for) both TPM and GEO.

Note that the maximum number of triangular merge mode candidates, **MaxNumTriangleMergeCand,** is derived as follows:

$$\mathbf{MaxNumTriangleMergeCand} = \mathbf{MaxNumMergeCand} - \mathbf{max_num_merge_cand_minus_max_num_triangle_cand}.$$

When **max_num_merge_cand_minus_max_num_triangle_cand** is present in a slice header, the value of **MaxNumTriangleMergeCand** shall be in the range of 2 to **MaxNumMergeCand,** inclusive.

When **max_num_merge_cand_minus_max_num_triangle_cand** is not present, and **(sps_triangle_enabled_flag** is equal to 0 or **MaxNumMergeCand** is less than 2), **MaxNumTriangleMergeCand** is set equal to 0. When **MaxNumTriangleMergeCand** is equal to 0, triangle merge mode is not allowed for the current slice.

**sps_triangle_enabled_flag** specifies whether triangular shape based motion compensation (also known as TPM or triangular prediction mode) can be used for inter prediction. **sps_triangle_enabled_flag** equal to 0 specifies that the syntax shall be constrained such that no triangular shape based motion compensation is used in the coded video sequence (CVS), and **merge_triangle_split_dir, merge_triangle_idx0, and merge_triangle_idx1** are not present in coding unit syntax of the CVS. **sps_triangle_enabled_flag** equal to 1 specifies that triangular shape based motion compensation can be used in the CVS.

The maximum number of merging motion vector prediction (MVP) candidates, **MaxNumMergeCand,** is derived as follows:

$$\mathbf{MaxNumMergeCand} = 6 - \mathbf{six_minus_max_num_merge_cand}.$$

The value of **MaxNumMergeCand** shall be in the range of 1 to 6, inclusive. When not present, the value of **six_minus_max_num_merge_cand** is inferred to be equal to **pps_six_minus_max_num_merge_cand_plus1 -** 1. **six_minus_max_num_merge_cand** specifies the maximum number of merging MVP candidates supported in the slice subtracted from 6. **pps_six_minus_max_num_merge_cand_plus1** equal to 0 specifies that **six_minus_max_num_merge_cand** is present in a slice header of slices referring to the PPS. When **pps_six_minus_max_num_merge_cand_plus1** is greater than 0 specifies that **six_minus_max_num_merge_cand** is not present in the slice header of slices referring to the picture parameter set (PPS). The value of **pps_six_minus_max_num_merge_cand_plus1** shall be in the range of 0 to 6, inclusive.

An important advantage of GEO is its clear and straightforward syntax presented in Table 2.

**Table 2. Partitioning-related syntax of GEO**

| |
|---|
| if (cbWidth > = 8 && cbHeight >= 8 ){ |
| **geo_flag**[ x0 ][ y0 ] |
| } |
| if (geo_flag[ x0 ][ y0 ]) { |
| **geo_partition_idx**[ x0 ][ y0 ] |
| **geo_merge_idx0**[ x0 ][ y0 ] |
| **geo_merge_idx1**[ x0 ][ y0 ] |
| } |

**geo_merge_idx0** and **geo_merge_idx1** define what MVP information is set to subblocks 1911 and 1912 of block 1910 as shown in Fig. 19 and are coded using same CABAC contexts and binarization as TPM merge indices. **geo_partition_idx** indicates a selected partition mode (among, e.g., 64, 80, 140, etc. possibilities subject to GEO implementation) and is coded using truncated binary binarization and bypass coding. **geo_partition_idx** is used as an index to the lookup table that stores values of $\alpha$ and $\rho$ parameter pairs that are respectively denoted by 1921 and 1922 in Fig. 19.

When GEO mode is not selected, it is possible to select the TPM. The partitions of the GEO mode do not include partitions that can be obtained by TPM of binary splitting.

As mentioned above, both TPM and GEO divide a block
into 2 subblocks that MVP candidate indices **geo_merge_idx0** and **geo_merge_idx1** are assigned to. Current implementations signal non-rectangular subblock partitioning and prediction related information for B and P slices, which

increases signaling overhead. The condition (slice_type = = B) is checked at block level, respectively CU level, as Table 3 illustrates.

**Table 3. Merge data syntax**

| merge_data( x0, y0, cbWidth, cbHeight, chType ) { | **Descriptor** |
|---|---|
| if ( CuPredMode[ chType ][ x0 ][ y0 ] = = MODE_IBC ) { | |
| if( MaxNumIbcMergeCand > 1 ) | |
| **merge_idx**[ x0 ][ y0 ] | ae(v) |
| } else { | |
| if( MaxNumSubblockMergeCand > 0 && cbWidth >= 8 && cbHeight >= 8 ) | |
| **merge_subblock_flag**[ x0 ][ y0 ] | ae(v) |
| if( merge_subblock_flag[ x0 ][ y0 ] = = 1 ) { | |
| if( MaxNumSubblockMergeCand > 1 ) | |
| **merge_subblock_idx**[ x0 ][ y0 ] | ae(v) |
| } else { | |
| if( ( cbWidth * cbHeight ) >= 64 && ( (sps_ciip_enabled_flag && cu_skip_flag[ x0 ][ y0 ] = = 0 && cbWidth < 128 && cbHeight < 128) ‖ ( sps_triangle_enabled_flag && MaxNumTriangleMergeCand > 1 && slice_type = = B ) ) ) | |
| **regular_merge_flag**[ x0 ][ y0 ] | ae(v) |
| if ( regular_merge_flag[ x0 ][ y0 ] = = 1 ){ | |
| if( sps_mmvd_enabled_flag ) | |
| **mmvd_merge_flag**[ x0 ][ y0 ] | ae(v) |
| if( mmvd_merge_flag[ x0 ][ y0 ] = = 1 ) { | |
| if( MaxNumMergeCand > 1 ) | |
| **mmvd_cand_flag**[ x0 ][ y0 ] | ae(v) |
| **mmvd_distance_idx**[ x0 ][ y0 ] | ae(v) |
| **mmvd_direction_idx**[ x0 ][ y0 ] | ae(v) |
| } else { | |
| if( MaxNumMergeCand > 1 ) | |
| **merge_idx**[ x0 ][ y0 ] | ae(v) |
| } | |
| } else { | |
| if( sps_ciip_enabled_flag && sps_triangle_enabled_flag && MaxNumTriangleMergeCand > 1 && slice_type = = B && cu_skip_flag[ x0 ][ y0 ] = = 0 && ( cbWidth * cbHeight ) >= 64 && cbWidth < 128 && cbHeight < 128 ) { | |
| **ciip_flag**[ x0 ][ y0 ] | ae(v) |
| if( ciip_flag[ x0 ][ y0 ] && MaxNumMergeCand > 1 ) | |
| **merge_idx**[ x0 ][ y0 ] | ae(v) |
| if( !ciip_flag[ x0 ][ y0 ] && MaxNumTriangleMergeCand > 1 ) { | |
| **merge_triangle_split_dir**[ x0 ][ y0 ] | ae(v) |
| **merge_triangle_idx0**[ x0 ][ y0 ] | ae(v) |

(continued)

| | |
|---|---|
| **merge_triangle_idx1**[ x0 ][ y0 ] | ae(v) |
| } | |
| } | |
| } | |
| } | |
| } | |

Embodiments of the invention signal any information related to TPM, GEO and similar video coding tools, e.g. any other non-rectangular partitioning or prediction based video coding tools, only for B-slices as, for example, shown in Table 4.

**Table 4. The proposed general slice header syntax**

| slice_header( ) { | **Descriptor** |
|---|---|
| **slice_pic_parameter_set_id** | ue(v) |
| if( rect_slice_flag ‖ NumBricksInPic > 1 ) | |
| **slice_address** | u(v) |
| if( !rect_slice_flag && !single_brick_per_slice_flag ) | |
| **num_bricks_in_slice_minus1** | ue(v) |
| **non_reference_picture_flag** | u(1) |
| **slice_type** | ue(v) |
| if( separate_colour_plane_flag = = 1 ) | |
| **colour_plane_id** | u(2) |
| **slice_pic_order_cnt_lsb** | u(v) |
| if( nal_unit_type == GDR_NUT ) | |
| **recovery_poc_cnt** | ue(v) |
| if( nal_unit_type == IDR_W_RADL ‖ nal_unit_type == IDR_N_LP ‖ nal_unit_type == CRA_NUT ‖ NalUnitType == GDR_NUT ) | |
| **no_output_of_prior_pics_flag** | u(1) |
| if( output_flag_present_flag ) | |
| **pic_output_flag** | u(1) |
| if( ( nal_unit_type != IDR_W_RADL && nal_unit_type != IDR_N_LP) ‖ sps_idr_rpl_present_flag ) { | |
| for( i = 0; i < 2; i++ ) { | |
| if( num_ref_pic_lists_in_sps[ i ] > 0 && !pps_ref_pic_list_sps_idc[ i ] && (i == 0 ‖ (i == 1 && rpl1_idx_present_flag ) ) ) | |
| **ref_pic_list_sps_flag**[ i ] | u(1) |
| if( ref_pic_list_sps_flag[ i ] ) { | |
| if( num_ref_pic_lists_in_sps[ i ] > 1 && | |
| (i == 0 ‖ (i == 1 && rpl1_idx_present_flag ) ) ) | |
| **ref_pic_list_idx**[ i ] | u(v) |
| } else | |
| ref_pic_list_struct( i, num_ref_pic_lists_in_sps[ i ] ) | |

(continued)

| | |
|---|---|
| for( j = 0; j < NumLtrpEntries[ i ][ RplsIdx[ i ] ]; j++ ) { | |
| if( ltrp_in_slice_header_flag[ i ][ RplsIdx[ i ] ] ) | |
| **slice_poc_lsb_lt**[ i ][ j ] | u(v) |
| **delta_poc_msb_present_flag**[ i ][ j ] | u(1) |
| if( delta_poc_msb_present_flag[ i ][ j ] ) | |
| **delta_poc_msb_cycle_lt**[ i ][ j ] | ue(v) |
| } | |
| } | |
| if( ( slice_type != I && num_ref_entries[ 0 ][ RplsIdx[ 0 ] ] > 1 ) \|\| ( slice_type == B && num_ref_entries[ 1 ][ RplsIdx[ 1 ] ] > 1 ) ) { | |
| **num_ref_idx_active_override_flag** | u(1) |
| if( num_ref_idx_active_override_flag ) | |
| for( i = 0; i < ( slice_type = = B ? 2: 1 ); i++ ) | |
| if( num_ref_entries[ i ][ RplsIdx[ i ] ] > 1 ) | |
| **num_ref_idx_active_minus1**[ i ] | ue(v) |
| } | |
| } | |
| if( partition_constraints_override_enabled_flag ) { | |
| **partition_constraints_override_flag** | ue(v) |
| if( partition_constraints_override_flag ) { | |
| **slice_log2_diff_min_qt_min_cb_luma** | ue(v) |
| **slice_max_mtt_hierarchy_depth_luma** | ue(v) |
| if( slice_max_mtt_hierarchy_depth_luma ! = 0 ) | |
| **slice_log2_diff_max_bt_min_qt_luma** | ue(v) |
| **slice_log2_diff_max_tt_min_qt_luma** | ue(v) |
| } | |
| if( slice_type = = I && qtbtt_dual_tree_intra_flag ) { | |
| **slice_log2_diff_min_qt_min_cb_chroma** | ue(v) |
| **slice_max_mtt_hierarchy_depth_chroma** | ue(v) |
| if( slice_max_mtt_hierarchy_depth_chroma != 0 ) | |
| **slice_log2_diff_max_bt_min_qt_chroma** | ue(v) |
| **slice_log2_diff_max_tt_min_qt_chroma** | ue(v) |
| } | |
| } | |
| } | |
| } | |
| if ( slice_type != I ) { | |
| if( sps_temporal_mvp_enabled_flag && !pps_temporal_mvp_enabled_idc) | |
| **slice_temporal_mvp_enabled_flag** | u(1) |
| if( slice_type == B && !pps_mvd_l1_zero_idc ) | |
| **mvd_l1_zero_flag** | u(1) |

(continued)

| | |
|---|---|
| if( cabac_init_present_flag ) | |
| **cabac_init_flag** | u(1) |
| if( slice_temporal_mvp_enabled_flag ) { | |
| if( slice_type == B && !pps_collocated_from_l0_idc ) | |
| **collocated_from_l0_flag** | u(1) |
| if( ( collocated_from_l0_flag && NumRefIdxActive[ 0 ] > 1 ) \|\| ( !collocated_from_l0_flag && NumRefIdxActive[ 1 ] > 1 ) ) | |
| **collocated_ref_idx** | ue(v) |
| } | |
| if( ( pps_weighted_pred_flag && slice_type == P ) \|\| ( pps_weighted_bipred_flag && slice_type == B ) ) | |
| pred_weight_table( ) | |
| if( !pps_six_minus_max_num_merge_cand_plus1 ) | |
| **six_minus_max_num_merge_cand** | ue(v) |
| if( sps_affine_enabled_flag && !pps_five_minus_max_num_subblock_merge_cand_plus1 ) | |
| **five_minus_max_num-subblock_merge_cand** | ue(v) |
| if( sps_fpel_mmvd_enabled_flag ) | |
| **slice_fpel_mmvd_enabled_flag** | u(1) |
| if( sps_bdof_dmvr_slice_present_flag ) | |
| **slice_disable_bdof_dmvr_flag** | u(1) |
| if(slice_type = = B && sps_triangle_enabled_flag && MaxNumMergeCand >= 2 && !pps_max_num_merge_cand_minus_max_num_triangle_cand_minus1 ) | |
| **max_num_merge_cand_minus_max_num_triangle_cand** | ue(v) |
| } | |
| if ( sps_ibc_enabled_flag ) | |
| slice**_six_minus_max_num_ibc_merge_cand** | ue(v) |
| if( sps_joint_cber_enabled_flag ) | |
| **slice_joint_cber_sign_flag** | u(1) |
| **slice_qp_delta** | se(v) |
| if( pps_slice_chroma_qp_offsets_present_flag ) { | |
| **slice_cb_qp_offset** | se(v) |
| **slice_cr_qp_offset** | se(v) |
| if( sps_joint_cbcr_enabled_flag ) | |
| **slice_joint_cbcr_qp_offset** | se(v) |
| } | |
| if( sps_sao_enabled_flag ) { | |
| **slice_sao_luma_flag** | u(1) |
| if( ChromaArrayType != 0 ) | |
| **slice_sao_chroma_flag** | u(1) |
| } | |

(continued)

| | |
|---|---|
| if( sps_alf_enabled_flag ) { | |
| **slice_alf_enabled_flag** | u(1) |
| if( slice_alf_enabled _flag ) { | |
| **slice_num_alf_aps_ids_luma** | u(3) |
| for( i = 0; i < slice_num_alf_aps_ids_luma; i++ ) | |
| **slice_alf_aps_id_luma**[ i ] | u(3) |
| if( ChromaArrayType != 0) | |
| **slice_alf_chroma_idc** | u(2) |
| if( slice_alf_chroma_idc ) | |
| **slice_alf_aps_id_chroma** | u(3) |
| } | |
| } | |
| if ( !pps_dep_quant_enabled _flag ) | |
| **dep_quant_enabled_flag** | u(1) |
| if( !dep_quant_enabled_flag ) | |
| **sign_data_hiding_enabled_flag** | u(1) |
| if( deblocking_filter_override_enabled_flag ) | |
| **deblocking_filter_override_flag** | u(1) |
| if( deblocking_filter_override _flag ) { | |
| **slice_deblocking_filter_disabled_flag** | u(1) |
| if( ! slice_deblocking_filter_disabled_flag) { | |
| **slice_beta_offset _div2** | se(v) |
| **slice_tc_offset_div2** | se(v) |
| } | |
| } | |
| if( sps_lmcs_enabled_flag ) { | |
| **slice_lmcs_enabled_flag** | u(1) |
| if( slice_lmcs_enabled_flag ) { | |
| **slice_lmcs_aps_id** | u(2) |
| if( ChromaArrayType != 0 ) | |
| **slice_chroma_residual_scale_flag** | u(1) |
| } | |
| } | |
| if( sps_scaling_list_enabled_flag ) { | |
| **slice_scaling_list_present_flag** | u(1) |
| if( slice_scaling_list_present_flag ) | |
| **slice_scaling_list_aps_id** | u(3) |
| } | |
| if( entry_point_offsets_present_flag && NumEntryPoints > 0 ) { | |
| **offset_len_minus1** | ue(v) |

(continued)

| | |
|---|---|
| for( i = 0; i < NumEntryPoints; i++ ) | |
| **entry_point_offset_minus1**[ i ] | u(v) |
| } | |
| if( slice_header_extension_present_flag ) { | |
| **slice_header_extension_length** | ue(v) |
| for( i = 0; i < slice_header_extension_length; i++) | |
| **slice_header_extension_data_byte**[ i ] | u(8) |
| } | |
| byte_alignment( ) | |
| } | |

The above is only an exemplary embodiment related to VVC. Embodiments are not limited to VVC or any other video codec.

In particular, a method for encoding a video sequence is provided wherein the condition is checked whether bi-directional inter-prediction is allowed for a slice of the video sequence. Similarly, a method for encoding a video sequence is provided wherein the condition is checked whether bi-directional inter-prediction is allowed for a slice of the video sequence. The methods allow for encoding or decoding, respectively, when it is determined that bi-directional inter-prediction is allowed for the slice. Embodiments of a method for encoding a video sequence are illustrated by the flow charts of Figures 20A and 20B. A method of decoding not being part of the present invention is illustrated in Figures 21A and 21B.

According to the embodiment of a method for encoding a video sequence as illustrated in Figures 20A and 20B, it is determined whether bi-directional inter-prediction is allowed for a slice of the video sequence 2010 and only if it is determined that bi-directional inter-prediction is allowed for the slice the following steps are performed. In step 2020 slice-level information related to non-rectangular subblock prediction (for example, comprising information on a maximum number of merge mode candidates and/or a maximum number of merging motion vector prediction candidates to be used in motion vector based inter-prediction) is obtained. Further, block-level information related to non-rectangular subblock partitioning (for example, indicating TPM, GMP or GEO or a particular partitioning mode of a number of GEO modes) is obtained 2030 and block-level information related to non-rectangular subblock prediction (for example, indicating a particular prediction mode) is obtained 2040. The respective information may be comprised in parameters and/or flags employed on the slice- and block-levels, respectively.

For example, information related to a maximum number of merge mode candidates used for the performing of inter-prediction of each non-rectangular subblock of the at least two non-rectangular subblocks may be provided by a parameter. In the exemplary slice header syntax shown in Table 4 this parameter is named max_num_merge_cand_minus_max_num_triangle_cand.

Information related to the maximum number of merging motion vector prediction candidates used for the performing of inter-prediction of each non-rectangular subblock of the at least two non-rectangular subblocks may also be provided by a parameter. In the exemplary slice header syntax shown in Table 4 this parameter is named six_minus_max_num_merge_cand.

A block of the slice is partitioned into at least two non-rectangular subblocks according to the block-level information related to non-rectangular subblock partitioning (step 2050 of Figure 20B). The partitioning results in non-horizontal and/or non-vertical partition boundaries between subblocks as it is illustrated, for example, in Figure 9 and Figure 18. After the block has been partitioned into at least two non-rectangular subblocks inter-prediction of each non-rectangular subblock of the at least two non-rectangular subblocks according to the slice-level information related to non-rectangular subblock prediction and the block-level information related to non-rectangular subblock prediction is performed 2060.

The block of the slice of the video sequence is encoded 2070 by encoding the at least two non-rectangular subblocks resulting from the partitioning in step 2050. The encoding of the block may comprise obtaining a residual block based on the current block to be encoded and the predictor obtained from the inter-prediction performed in step 2060, and transformation and quantization of the residual block. Further, the obtained slice-level information related to non-rectangular subblock prediction is added 2080 to a slice header of a bitstream of the encoded video sequence such that it can be used for decoding of the block. According to the method illustrated in Figures 20A and 20B this kind of signaling of the slice-level information related to non-rectangular subblock prediction is restricted to B slices.

The method of decoding not being part of the present invention as it is illustrated in Figures 21A and 21B comprises obtaining 2110 slice-level information related to a type of a slice of the encoded video sequence (I, P, or B slice, for example) and determining 2120 whether bi-directional inter-prediction is allowed for the slice (e.g., determining whether the slice is a B slice) based on the obtained slice-level information related to the type of the slice. Only if it is determined that bi-directional inter-prediction is allowed for the slice the following steps are performed.

In step 2130 slice-level information related to non-rectangular subblock prediction (for example, comprising information on a maximum number of merge mode candidates and/or a maximum number of merging motion vector prediction candidates to be used in motion vector based inter-prediction) is obtained. Further, block-level information related to non-rectangular subblock partitioning (for example, indicating a particular partitioning mode, for example, one of a number of GEO modes) is obtained 2140 and block-level information related to non-rectangular subblock prediction (for example, indicating a particular prediction mode) is obtained 2150. The respective information may be comprised in parameters and/or flags employed on the slice- and block-levels, respectively. Both the slice-level information and the block-level information may be obtained by parsing.

A block of the slice is partitioned in step 2160 of Figure 21B into at least two non-rectangular subblocks according to the obtaied block-level information related to non-rectangular subblock partitioning. Inter-prediction of each non-rectangular subblock of the at least two non-rectangular subblocks is performed 2170 according to the slice-level information related to non-rectangular subblock prediction and the block-level information related to non-rectangular subblock prediction.

In step 2180 of Figure 21B the block is decoded by decoding the at least two non-rectangular subblocks. The decoding of the block may comprise inverse transformation and dequantization of a residual block, and reconstructing the non-rectangular subblocks based on the dequantized residual block and the predictor obtained from the inter-prediction performed in step 2170.

In the above-descried methods, the block-level may be one of a coding block-level and a coding unit-level and the block may be one of a coding block and a coding unit.

This methods can be readily implemented in the apparatuses described above with reference to Figures 1a, 1b, 4 and 5. Particularly, the method for encoding a video sequence illustrated in Figures 20A and 20B may be carried out by the encoder 20 shown in Figure 2. In this case, the partitioning according to step 2050 is carried out by the partitioning unit 262 of the encoder 20, the inter-prediction according to step 2060 is carried out by the inter-prediction unit 244 of the encoder 20 and the encoding according to step 2070 is carried out by the encoding unit 270 of the encoder 20 shown in Figure 2. The method for decoding a video sequence illustrated in Figures 21A and 21B may be carried out by the decoder 30 shown in Figure 3. In this case, the inter-prediction according to step 2170 is carried out by the prediction block 365 of the decoder 30 and the decoded block is provided via the output 332 of the decoder 30 shown in Figure 3.

Furthermore, it is provided a video encoding device that may be configured for performing the steps 2010 to 2080 of the method for encoding a video sequence as illustrated in Figures 20A and 20B. The above-described specifications of the methods may hold for the operation of the devices, in particular the encoding device described below with reference to Figure 22.

Figure 22 shows a video encoding device 2200 according to an embodiment, comprising a determining unit 2210, an information obtaining unit 2220, a partitioning unit 2230, an inter-prediction unit 2240, an encoding unit 2250; and an information adding unit 2260. The determining unit 2210 is configured for determining whether bi-directional inter-prediction is allowed for a slice of a video sequence that is to be encoded by the video encoding device 2200. All operations of the other units 2220 to 2260 as described below are only allowed/enabled if it is determined by the determining unit 2210 that bi-directional inter-prediction is allowed for the slice under consideration. The conditional operations of the other units 2220 to 2260 are as follows.

The information obtaining unit 2220 is configured for obtaining slice-level information related to non-rectangular subblock prediction, obtaining block-level information related to non-rectangular subblock partitioning and obtaining block-level information related to non-rectangular subblock prediction. The partitioning unit 2230 is configured for performing partitioning of a block of the slice into at least two non-rectangular subblocks according to the block-level information related to non-rectangular subblock partitioning that is received from the information obtaining unit 2220 as indicated by the arrows in Figure 22. The inter-prediction unit 2240 is configured for performing inter-prediction of each non-rectangular subblock of the at least two non-rectangular subblocks according to the slice-level information related to non-rectangular subblock prediction and the block-level information related to non-rectangular subblock prediction. The also receives the needed information from the information obtaining unit 2220 as indicated by the arrows in Figure 22.

The encoding unit 2250 is configured for encoding the block of the video sequence comprising encoding the at least two non-rectangular subblocks. The information adding unit 2260 for adding the obtained slice-level information related to non-rectangular subblock prediction to a slice header of a bitstream of the encoded video sequence.

Figure 23 shows a video decoding device 2300 according to an example not being part of the present invention. The decoding device 2300 comprises a determining unit 2310 configured for determining whether bi-directional inter-prediction is allowed for a slice of an encoded video sequence. Further, the video decoding device 2300 comprises an

information obtaining unit 2320, a partitioning unit 2330, an inter-prediction unit 2340 and a decoding unit 2350. Data inputs from one unit to another are indicated by arrows.

The information obtaining unit 2320 is configured for obtaining slice-level information related to a type of a slice of the encoded video sequence and the determining unit 2310 is configured for determining whether bi-directional inter-prediction is allowed for the slice based on the slice-level information related to the type of the slice obtained by the information obtaining unit 2320.

All other operations of the units 2320 to 2350 as described below are only allowed/enabled if it is determined by the determining unit 2310 that bi-directional inter-prediction is allowed for the slice under consideration. The conditional operations of the other units 2320 to 2350 are as follows.

The information obtaining unit 2320 is configured for obtaining slice-level information related to non-rectangular subblock prediction, obtaining block-level information related to non-rectangular subblock partitioning and obtaining block-level information related to non-rectangular subblock prediction. The partitioning unit 2330 is configured for partitioning a block of the slice into at least two non-rectangular subblocks according to the block-level information related to non-rectangular subblock partitioning received from the information obtaining unit 2320. The inter-prediction unit 2340 is configured for performing inter-prediction of each non-rectangular subblock of the at least two non-rectangular subblocks according to the slice-level information related to non-rectangular subblock prediction and the block-level information related to non-rectangular subblock prediction received from the information obtaining unit 2320. The decoding unit 2350 is configured for decoding the block of the encoded video sequence by decoding the at least two non-rectangular subblocks.

Both the video encoding device 2200 and the video decoding device 2300 may be comprised in the video coding device 400 shown in Figure 4 and/or may be part of the apparatus 500 shown in Figure 5. The video encoding device 2200 may represent the video encoder 20 of the video coding system 40 shown in Figure 1B and the video decoding device 2300 may represent the video decoder 30 of the video coding system 40 shown in Figure 1B.

Embodiments, may use other parameters or other names for the same parameters as described above. Embodiments may also use different parameters for TPM and GEO indicating for each of both a maximum number of triangular merge mode candidates, e.g. instead of a common parameter like m**axNumTriangleMergeCand**.

Different embodiments may use a different number of available or possible GEO partitioning modes and correspondingly of GEO partitioning indices, e.g. like **geo_partition_idx.**

The term "obtaining" may refer to receiving (e.g. explicitly, as a respective parameter from another entity/device or module within the same device, e.g. for the decoder by parsing a bitstream) and/or deriving (e.g. which may also be referred to as implicitly receiving, e.g. for the decoder by parsing other information/parameters from a bitstream and deriving the respective information or parameter from such other information/parameters).

Mathematical Operators

The mathematical operators used in this application are similar to those used in the C programming language. However, the results of integer division and arithmetic shift operations are defined more precisely, and additional operations are defined, such as exponentiation and real-valued division. Numbering and counting conventions generally begin from 0, e.g., "the first" is equivalent to the 0-th, "the second" is equivalent to the 1-th, etc.

Arithmetic operators

The following arithmetic operators are defined as follows:

| | |
|---|---|
| + | Addition |
| - | Subtraction (as a two-argument operator) or negation (as a unary prefix operator) |
| * | Multiplication, including matrix multiplication |
| $x^y$ | Exponentiation. Specifies x to the power of y. In other contexts, such notation is used for superscripting not intended for interpretation as exponentiation. |
| / | Integer division with truncation of the result toward zero. For example, 7 / 4 and -7 / -4 are truncated to 1 and -7 / 4 and 7 / -4 are truncated to -1. |
| ÷ | Used to denote division in mathematical equations where no truncation or rounding is intended. |
| $\frac{x}{y}$ | Used to denote division in mathematical equations where no truncation or rounding is intended. |

(continued)

| | |
|---|---|
| $\sum_{i=x}^{y} f(i)$ | The summation of f( i ) with i taking all integer values from x up to and including y. |
| x % y | Modulus. Remainder of x divided by y, defined only for integers x and y with x >= 0 and y > 0. |

Logical operators

The following logical operators are defined as follows:

x && y Boolean logical "and" of x and y

x ‖ y Boolean logical "or" of x and y

! Boolean logical "not"

x ? y : z If x is TRUE or not equal to 0, evaluates to the value of y; otherwise, evaluates to the value of z.

Relational operators

The following relational operators are defined as follows:

> Greater than

>= Greater than or equal to

< Less than

<= Less than or equal to

= = Equal to

!= Not equal to

When a relational operator is applied to a syntax element or variable that has been assigned the value "na" (not applicable), the value "na" is treated as a distinct value for the syntax element or variable. The value "na" is considered not to be equal to any other value.

Bit-wise operators

The following bit-wise operators are defined as follows:

& Bit-wise "and". When operating on integer arguments, operates on a two's complement representation of the integer value. When operating on a binary argument that contains fewer bits than another argument, the shorter argument is extended by adding more significant bits equal to 0.

| Bit-wise "or". When operating on integer arguments, operates on a two's complement representation of the integer value. When operating on a binary argument that contains fewer bits than another argument, the shorter argument is extended by adding more significant bits equal to 0.

^ Bit-wise "exclusive or". When operating on integer arguments, operates on a two's complement representation of the integer value. When operating on a binary argument that contains fewer bits than another argument, the shorter argument is extended by adding more significant bits equal to 0.

x >> y Arithmetic right shift of a two's complement integer representation of x by y binary digits. This function is defined only for non-negative integer values of y. Bits shifted into the most significant bits (MSBs) as a result of the right shift have a value equal to the MSB of x prior to the shift operation.

x << y Arithmetic left shift of a two's complement integer representation of x by y binary digits. This function is defined only for non-negative integer values of y. Bits shifted into the least significant bits (LSBs) as a result of the left shift have a value equal to 0.

Assignment operators

The following arithmetic operators are defined as follows:

= Assignment operator

+ + Increment, i.e., *x*+ + is equivalent to *x* = *x* + 1; when used in an array index, evaluates to the value of the variable prior to the increment operation.

- - Decrement, i.e., *x*- - is equivalent to *x* = *x* - 1; when used in an array index, evaluates to the value of the variable prior to the decrement operation.

+= Increment by amount specified, i.e., x += 3 is equivalent to x = x + 3, and x += (-3) is equivalent to x = x + (-3).

-= Decrement by amount specified, i.e., x -= 3 is equivalent to x = x - 3, and x -= (-3) is equivalent to x = x - (-3).

Range notation

The following notation is used to specify a range of values:

x = y..z x takes on integer values starting from y to z, inclusive, with x, y, and z being integer numbers and z being greater than y.

Mathematical functions

The following mathematical functions are defined:

$$\text{Abs}(x) = \begin{cases} x & ; \quad x >= 0 \\ -x & ; \quad x < 0 \end{cases}$$

Asin( x ) the trigonometric inverse sine function, operating on an argument x that is in the range of -1.0 to 1.0, inclusive, with an output value in the range of -π÷2 to π÷2, inclusive, in units of radians

Atan( x ) the trigonometric inverse tangent function, operating on an argument x, with an output value in the range of -π÷2 to π÷2, inclusive, in units of radians

$$\text{Atan2}(y, x) = \begin{cases} \text{Atan}\left(\frac{y}{x}\right) & ; \quad x > 0 \\ \text{Atan}\left(\frac{y}{x}\right) + \pi & ; \quad x < 0 \ \&\& \ y >= 0 \\ \text{Atan}\left(\frac{y}{x}\right) - \pi & ; \quad x < 0 \ \&\& \ y < 0 \\ +\frac{\pi}{2} & ; \quad x == 0 \ \&\& \ y >= 0 \\ -\frac{\pi}{2} & ; \quad \text{otherwise} \end{cases}$$

Ceil( x) the smallest integer greater than or equal to x.

$$\text{Clip1}_Y(x) = \text{Clip3}(0, (1 << \text{BitDepth}_Y) - 1, x)$$

$$\text{Clip1}_C(x) = \text{Clip3}(0, (1 << \text{BitDepth}_C) - 1, x)$$

$$\text{Clip3}(x, y, z) = \begin{cases} x & ; \quad z < x \\ y & ; \quad z > y \\ z & ; \quad \text{otherwise} \end{cases}$$

Cos( x ) the trigonometric cosine function operating on an argument x in units of radians.

Floor( x ) the largest integer less than or equal to x.

$$\text{GetCurrMsb}(a, b, c, d) = \begin{cases} c + d & ; \quad b - a >= d / 2 \\ c - d & ; \quad a - b > d / 2 \\ c & ; \quad \text{otherwise} \end{cases}$$

Ln( x ) the natural logarithm of x (the base-e logarithm, where e is the natural logarithm base constant 2.718 281 828...).

Log2( x ) the base-2 logarithm of x.

Log10( x) the base-10 logarithm of x.

$$\text{Min}(x, y) = \begin{cases} x & ; \quad x <= y \\ y & ; \quad x > y \end{cases}$$

$$\text{Max}(x, y) = \begin{cases} x & ; \quad x >= y \\ y & ; \quad x < y \end{cases}$$

$$\text{Round}(x) = \text{Sign}(x) * \text{Floor}(\text{Abs}(x) + 0.5)$$

$$\text{Sign}(x) = \begin{cases} 1 & ; \quad x > 0 \\ 0 & ; \quad x == 0 \\ -1 & ; \quad x < 0 \end{cases}$$

Sin( x ) the trigonometric sine function operating on an argument x in units of radians

$$\text{Sqrt}(x) = \sqrt{x}$$

$$\text{Swap}(x, y) = (y, x)$$

Tan( x ) the trigonometric tangent function operating on an argument x in units of radians

Order of operation precedence

When an order of precedence in an expression is not indicated explicitly by use of parentheses, the following rules apply:

- Operations of a higher precedence are evaluated before any operation of a lower precedence.
- Operations of the same precedence are evaluated sequentially from left to right.

The table below specifies the precedence of operations from highest to lowest; a higher position in the table indicates a higher precedence.

For those operators that are also used in the C programming language, the order of precedence used in this Specification is the same as used in the C programming language.

Table: Operation precedence from highest (at top of table) to lowest (at bottom of table)

| **operations (with operands x, y, and z)** |
|---|
| "x++", "x- -" |
| "!x", "-x" (as a unary prefix operator) |
| $x^y$ |
| "x * y", 'x / y", 'x ÷ y", " $\frac{x}{y}$ ", "x % y" |
| "x + y", "x - y" (as a two-argument operator), " $\sum_{i=x}^{y} f(i)$ " |
| "x << y ", "x >> y" |
| "x < y", "x <= y", "x > y", "x >= y" |
| "x = = y", "x != y" |
| "x & y" |
| "x \| y" |
| "x && y" |
| "x ‖ y" |
| "x ? y : z" |
| "x..y" |
| "x = y", "x += y", "x -= y" |

Text description of logical operations

In the text, a statement of logical operations as would be described mathematically in the following form:

```
if( condition 0 )
statement 0
else if( condition 1 )
statement 1
else /* informative remark on remaining condition */
statement n
```

may be described in the following manner:
... as follows / ... the following applies:

- If condition 0, statement 0
- Otherwise, if condition 1, statement 1
- ...
- Otherwise (informative remark on remaining condition), statement n.

Each "If ... Otherwise, if ... Otherwise, ..." statement in the text is introduced with "... as follows" or "... the following applies" immediately followed by "If ... ". The last condition of the "If ... Otherwise, if ... Otherwise, ..." is always an "Otherwise, ...". Interleaved "If ... Otherwise, if ... Otherwise, ..." statements can be identified by matching "... as follows" or "... the following applies" with the ending "Otherwise, ...".

In the text, a statement of logical operations as would be described mathematically in the following form:

```
if( condition 0a && condition 0b )
statement 0
```

else if( condition 1a || condition 1b )
statement 1 ...
else
statement n

may be described in the following manner:
... as follows / ... the following applies:

- If all of the following conditions are true, statement 0:
  - condition 0a
  - condition 0b
- Otherwise, if one or more of the following conditions are true, statement 1:
  - condition 1a
  - condition 1b
- ...
- Otherwise, statement n

In the text, a statement of logical operations as would be described mathematically in the following form:

if( condition 0 )
statement 0
if( condition 1 )
statement 1

may be described in the following manner:

When condition 0, statement 0
When condition 1, statement 1.

Embodiments, e.g. of the encoder 20, and functions described herein, e.g. with reference to the encoder 20, may be implemented in hardware, software, firmware, or any combination thereof. If implemented in software, the functions may be stored on a computer-readable medium or transmitted over communication media as one or more instructions or code and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium. By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays

(FPGAs), or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules configured for encoding and decoding, or incorporated in a combined codec. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a codec hardware unit or provided by a collection of interoperative hardware units, including one or more processors as described above, in conjunction with suitable software and/or firmware.

## Claims

**1.** A method for encoding a video sequence, wherein the method comprises:

- determining (2010) whether bi-directional inter-prediction is allowed for a slice of the video sequence; and

only if it is determined that bi-directional inter-prediction is allowed for the slice:

- obtaining (2020) slice-level information related to non-rectangular subblock prediction;
- obtaining (2030) block-level information related to non-rectangular subblock partitioning;
- obtaining (2040) block-level information related to non-rectangular subblock prediction;
- partitioning (2050) a block of the slice into at least two non-rectangular subblocks according to the block-level information related to non-rectangular subblock partitioning;
- performing (2060) inter-prediction of each non-rectangular subblock of the at least two non-rectangular subblocks according to the slice-level information related to non-rectangular subblock prediction and the block-level information related to non-rectangular subblock prediction, wherein the slice level information comprises information related to a maximum number of merge mode candidates used for the performing of the inter-prediction of each non-rectangular subblock of the at least two non-rectangular subblocks;
- encoding (2070) the block of the video sequence comprising encoding the at least two non-rectangular subblocks;
- adding (2080) the obtained slice-level information related to non-rectangular subblock prediction to a slice header of a bitstream of a slice of the encoded video sequence; and
- adding the obtained block-level information related to non-rectangular subblock partitioning and block-level information related to non-rectangular subblock prediction to a block header of a bitstream of a block of the encoded video sequence.

**2.** The method of claim 1, further comprising

- obtaining sequence parameter set, SPS, - level information related to non-rectangular subblock partitioning; and wherein
- the slice-level information related to non-rectangular subblock prediction is obtained, only if the SPS-level information indicates that non-rectangular subblock partitioning is allowed for the partitioning of the block.

**3.** The method of any of the claims 1 to 2, further comprising

- obtaining SPS-level information related to non-rectangular subblock prediction indicating at least one of a) whether application of a subblock prediction mode is allowed for the block and b) which subblock prediction mode is to be used for the block.

**4.** The method of any of claims 1 to 3, further comprising

- obtaining picture parameter set, PPS, - level information related to non-rectangular subblock prediction; and
- performing (2060) the inter-prediction of each non-rectangular subblock of the at least two non-rectangular subblocks according to the PPS-level information related to non-rectangular prediction.

5. The method of claim 4, wherein the inter-prediction of each non-rectangular subblock of the at least two non-rectangular subblocks is performed (2060) based on merge mode candidates and the PPS-level information related to non-rectangular subblock prediction comprises information related to a maximum number of merge mode candidates used for the performing of inter-prediction of each non-rectangular subblock of the at least two non-rectangular subblocks.

6. The method of any one of claims 1 to 5, wherein the block-level information related to non-rectangular subblock partitioning comprises at least one of the following:

   - a flag indicating whether a particular subblock partitioning mode is to be used for the block;
   - a flag indicating whether a first subblock partitioning mode or a second subblock partitioning mode is to be used for the block; and
   - a flag or parameter indicating a selected subblock partitioning mode of a plurality of subblock partitioning modes that is to be used for the block.

7. The method of any one of claims 1 to 6, wherein the block-level information related to non-rectangular subblock prediction comprises at least one of the following:

   - a flag indicating whether a particular subblock prediction mode is to be used for the block;
   - a flag indicating whether a first subblock prediction mode or a second subblock prediction mode is to be used for the block;
   - a flag or parameter indicating a selected subblock prediction mode of a plurality of subblock prediction modes that is used for the block; and
   - an index indicating a motion vector predictor candidate.

8. The method of any one of claims 1 to 7, wherein the partitioning of the block (2050) is performed by applying one of the Triangular Partitioning Mode, the Geometric Motion Partitioning Mode and the Geometrical Partitioning Mode.

9. The method of any of the claims 1 to 8, wherein the block-level is one of a coding block-level and a coding unit-level and the block is one of a coding block and a coding unit.

10. An encoder (20) comprising processing circuitry configured for performing the method according to any of claims 1 to 9.

11. A computer program product comprising a program code for performing the method according to any one of claims 1 to 9.

**Patentansprüche**

1. Verfahren zum Codieren einer Videosequenz, wobei das Verfahren umfasst:

   - Bestimmen (2010), ob eine bidirektionale Zwischenbildvorhersage für einen Abschnitt der Videosequenz zulässig ist; und nur wenn bestimmt wird, dass eine bidirektionale Zwischenbildvorhersage für den Abschnitt zulässig ist:

     - Erhalten (2020) von Informationen auf Abschnittsebene bezogen auf die Vorhersage von nicht-rechteckigen Teilblöcken;
     - Erhalten von (2030) Informationen auf Blockebene bezogen auf die Partitionierung von nicht-rechteckigen Teilblöcken;
     - Erhalten (2040) von Informationen auf Blockebene bezogen auf die Vorhersage von nicht-rechteckigen Teilblöcken;
     - Partitionieren (2050) eines Blocks des Abschnitts in mindestens zwei nicht-rechteckige Teilblöcke gemäß den Informationen auf Blockebene bezogen auf die Partitionierung von nicht-rechteckigen Teilblöcken;
     - Durchführen (2060) einer Zwischenbildvorhersage jedes nicht-rechteckigen Teilblocks der mindestens zwei nicht-rechteckigen Teilblöcke gemäß den Informationen auf Abschnittsebene bezogen auf die Vorhersage von nicht-rechteckigen Teilblöcken und den Informationen auf Blockebene bezogen auf die Vorhersage von nicht-rechteckigen Teilblöcken, wobei die Informationen auf Abschnittsebene Informationen in

Bezug auf eine maximale Anzahl von Zusammenführungsmodus-Kandidaten umfassen, die für die Durchführung der Zwischenbildvorhersage jedes nicht-rechteckigen Teilblocks der mindestens zwei nicht-rechteckigen Teilblöcke verwendet werden;
- Codieren (2070) des Blocks der Videosequenz, umfassend das Codieren der mindestens zwei nicht-rechteckigen Teilblöcke;
- Hinzufügen (2080) der erhaltenen Informationen auf Abschnittsebene bezogen auf die Vorhersage von nicht-rechteckigen Teilblöcken zu einem Abschnitts-Kopfteil eines Bitstroms eines Abschnitts der codierten Videosequenz; und
- Hinzufügen der erhaltenen Informationen auf Blockebene bezogen auf die Partitionierung von nicht-rechteckigen Teilblöcken und der Informationen auf Blockebene bezogen auf die Vorhersage von nicht-rechteckigen Teilblöcken zu einem Block-Kopfteil eines Bitstroms eines Blocks der codierten Videosequenz.

**2.** Verfahren nach Anspruch 1, ferner umfassend:

- Erhalten von Informationen auf Sequenzparametersatz, SPS, -Ebene bezogen auf die Partitionierung von nicht-rechteckigen Teilblöcken; und wobei
- die Informationen auf Abschnittsebene bezogen auf die Vorhersage von nicht-rechteckigen Teilblöcken nur erhalten werden, wenn die Informationen auf SPS-Ebene angeben, dass die Partitionierung von nicht-rechteckigen Teilblöcken für die Partitionierung des Blocks zulässig ist.

**3.** Verfahren nach einem der Ansprüche 1 bis 2, ferner umfassend:

- Erhalten von Informationen auf SPS-Ebene bezogen auf die Vorhersage von nicht-rechteckigen Teilblöcken, die mindestens angeben a) ob die Anwendung eines Teilblockvorhersagemodus für den Block zulässig ist und/oder b) welcher Teilblockvorhersagemodus für den Block verwendet werden soll.

**4.** Verfahren nach einem der Ansprüche 1 bis 3, ferner umfassend:

- Erhalten von Informationen auf Bildparametersatz, PPS, -Ebene bezogen auf die Vorhersage von nicht-rechteckigen Teilblöcken; und
- Durchführen (2060) der Zwischenbildvorhersage jedes nicht-rechteckigen Teilblocks der mindestens zwei nicht-rechteckigen Teilblöcke gemäß den Informationen auf PPS-Ebene bezogen auf die nicht-rechteckige Vorhersage.

**5.** Verfahren nach Anspruch 4, wobei die Zwischenbildvorhersage jedes nicht-rechteckigen Teilblocks der mindestens zwei nicht-rechteckigen Teilblöcke basierend auf Zusammenführungsmodus-Kandidaten durchgeführt wird (2060) und die Informationen auf PPS-Ebene bezogen auf die Vorhersage von nicht-rechteckigen Teilblöcken Informationen in Bezug auf eine maximale Anzahl von Zusammenführungsmodus-Kandidaten umfassen, die für die Durchführung einer Zwischenbildvorhersage jedes nicht-rechteckigen Teilblocks der mindestens zwei nicht-rechteckigen Teilblöcke verwendet werden.

**6.** Verfahren nach einem der Ansprüche 1 bis 5, wobei die Informationen auf Blockebene bezogen auf die Partitionierung von nicht-rechteckigen Teilblöcken mindestens eines der folgenden umfassen:

- ein Kennzeichen, das angibt, ob ein bestimmter Teilblockpartitionierungsmodus für den Block verwendet werden soll;
- ein Kennzeichen, das anzeigt, ob ein erster Teilblockpartitionierungsmodus oder ein zweiter Teilblockpartitionierungsmodus für den Block verwendet werden soll; und
- ein Kennzeichen oder einen Parameter, das/der einen ausgewählten Teilblockpartitionierungsmodus aus einer Vielzahl von Teilblockpartitionierungsmodi anzeigt, der für den Block verwendet werden soll.

**7.** Verfahren nach einem der Ansprüche 1 bis 6, wobei die Informationen auf Blockebene bezogen auf die Vorhersage von nicht-rechteckigen Teilblöcken mindestens eines der folgenden umfassen:

- ein Kennzeichen, das angibt, ob ein bestimmter Teilblockvorhersagemodus für den Block verwendet werden soll;
- ein Kennzeichen, das anzeigt, ob ein erster Teilblockvorhersagemodus oder ein zweiter Teilblockvorhersagemodus für den Block verwendet werden soll;

- ein Kennzeichen oder einen Parameter, das/der einen ausgewählten Teilblockvorhersagemodus aus einer Vielzahl von Teilblockvorhersagemodi anzeigt, der für den Block verwendet werden soll; und
- einen Index, der einen Kandidaten für einen Bewegungsvektorprädiktor angibt.

**8.** Verfahren nach einem der Ansprüche 1 bis 7, wobei die Partitionierung des Blocks (2050) durch Anwendung eines Dreieckspartitionierungsmodus, geometrischen Bewegungspartitionierungsmodus oder geometrischen Partitionierungsmodus durchgeführt wird.

**9.** Verfahren nach einem der Ansprüche 1 bis 8, wobei die Blockebene entweder eine Codierblockebene oder eine Codiereinheitsebene ist und der Block entweder ein Codierblock oder eine Codiereinheit ist.

**10.** Codierer (20), der eine Verarbeitungsschaltung umfasst, die dafür ausgelegt ist, das Verfahren nach einem der Ansprüche 1 bis 9 durchzuführen.

**11.** Computerprogrammprodukt, das einen Programmcode zum Ausführen eines Verfahrens gemäß einem der Ansprüche 1 bis 9 umfasst.

**Revendications**

**1.** Procédé de codage d'une séquence vidéo, le procédé comprenant les étapes consistant à :

- déterminer (2010) si l'inter-prédiction bidirectionnelle est autorisée pour une tranche de la séquence vidéo ; et

uniquement s'il est déterminé que l'inter-prédiction bidirectionnelle est autorisée pour la tranche :

- obtenir (2020) une information de niveau tranche relative à la prédiction de sous-bloc non rectangulaire ;
- obtenir (2030) une information de niveau bloc relative au partitionnement de sous-bloc non rectangulaire ;
- obtenir (2040) une information de niveau bloc relative à la prédiction de sous-bloc non rectangulaire ;
- partitionner (2050) un bloc de la tranche en au moins deux sous-blocs non rectangulaires en fonction de l'information de niveau bloc relative au partitionnement de sous-bloc non rectangulaire ;
- effectuer (2060) l'inter-prédiction de chaque sous-bloc non rectangulaire des au moins deux sous-blocs non rectangulaires en fonction de l'information de niveau tranche relative à la prédiction de sous-bloc non rectangulaire et de l'information de niveau bloc relative à la prédiction de sous-bloc non rectangulaire, l'information de niveau tranche comprenant une information relative à un nombre maximal de modes de fusion candidats utilisés pour l'exécution de l'inter-prédiction de chaque sous-bloc non rectangulaire des au moins deux sous-blocs non rectangulaires ;
- coder (2070) le bloc de la séquence vidéo, ce qui consiste à coder les au moins deux sous-blocs non rectangulaires ;
- ajouter (2080) l'information de niveau tranche obtenue relative à la prédiction de sous-bloc non rectangulaire à un en-tête de tranche d'un flux binaire d'une tranche de la séquence vidéo codée ; et
- ajouter l'information de niveau bloc obtenue relative au partitionnement de sous-bloc non rectangulaire et l'information de niveau bloc relative à la prédiction de sous-bloc non rectangulaire à un en-tête de bloc d'un flux binaire d'un bloc de la séquence vidéo codée.

**2.** Procédé selon la revendication 1, comprenant également l'étape consistant à :

- obtenir une information de niveau d'ensemble de paramètres de séquence, SPS, liée au partitionnement de sous-bloc non rectangulaire ; et dans lequel
- l'information de niveau tranche liée à la prédiction de sous-bloc non rectangulaire n'est obtenue que si l'information de niveau SPS indique que le partitionnement de sous-bloc non rectangulaire est autorisé pour le partitionnement du bloc.

**3.** Procédé selon l'une quelconque des revendications 1 et 2, comprenant également l'étape consistant à :

- obtenir l'information de niveau SPS liée à la prédiction de sous-bloc non rectangulaire indiquant au moins un élément parmi a) le fait que l'application d'un mode de prédiction de sous-bloc est autorisée ou non pour le bloc et b) le mode de prédiction de sous-bloc qui doit être utilisé pour le bloc.

4. Procédé selon l'une quelconque des revendications 1 à 3, comprenant également l'étape consistant à :

- obtenir une information de niveau d'ensemble de paramètres d'image, PPS, liée à la prédiction de sous-bloc non rectangulaire ; et
- effectuer (2060) l'inter-prédiction de chaque sous-bloc non rectangulaire des au moins deux sous-blocs non rectangulaires en fonction de l'information de niveau PPS liée à la prédiction non rectangulaire.

5. Procédé selon la revendication 4, dans lequel l'inter-prédiction de chaque sous-bloc non rectangulaire des au moins deux sous-blocs non rectangulaires est effectuée (2060) sur la base des modes de fusion candidats, et l'information de niveau PPS liée à la prédiction de sous-bloc non rectangulaire comprend une information liée à un nombre maximal de modes de fusion candidats utilisés pour l'exécution de l'inter-prédiction de chaque sous-bloc non rectangulaire des au moins deux sous-blocs non rectangulaires.

6. Procédé selon l'une quelconque des revendications 1 à 5, dans lequel l'information de niveau bloc liée au partitionnement de sous-bloc non rectangulaire comprend au moins un des indicateurs suivants :

- un indicateur indiquant si un mode de partitionnement de sous-bloc particulier doit être utilisé pour le bloc ;
- un indicateur indiquant si un premier mode de partitionnement de sous-bloc ou un deuxième mode de partitionnement de sous-bloc doit être utilisé pour le bloc ; et
- un indicateur ou un paramètre indiquant un mode de partitionnement de sous-bloc choisi parmi une pluralité de modes de partitionnement de sous-bloc qui doit être utilisé pour le bloc.

7. Procédé selon l'une quelconque des revendications 1 à 6, dans lequel l'information de niveau bloc liée à la prédiction de sous-bloc non rectangulaire comprend au moins un des indicateurs suivants :

- un indicateur indiquant si un mode de prédiction de sous-bloc particulier doit être utilisé pour le bloc ;
- un indicateur indiquant si un premier mode de prédiction de sous-bloc ou un deuxième mode de prédiction de sous-bloc doit être utilisé pour le bloc ;
- un indicateur ou un paramètre indiquant un mode de prédiction de sous-bloc choisi parmi une pluralité de modes de prédiction de sous-bloc qui doit être utilisé pour le bloc ; et
- un indice indiquant un prédicteur de vecteur de mouvement candidat.

8. Procédé selon l'une quelconque des revendications 1 à 7, dans lequel le partitionnement du bloc (2050) est effectué par l'application de l'un des modes suivants : le mode de partitionnement triangulaire, le mode de partitionnement de mouvement géométrique, le mode de partitionnement géométrique.

9. Procédé selon l'une quelconque des revendications 1 à 8, dans lequel le niveau bloc est soit le niveau bloc de codage, soit le niveau unité de codage, et le bloc est soit un bloc de codage, soit une unité de codage.

10. Codeur (20) comprenant des circuits de traitement configurés pour réaliser le procédé selon l'une quelconque des revendications 1 à 9.

11. Produit-programme informatique comprenant un code de programme servant à réaliser le procédé selon l'une quelconque des revendications 1 à 9.

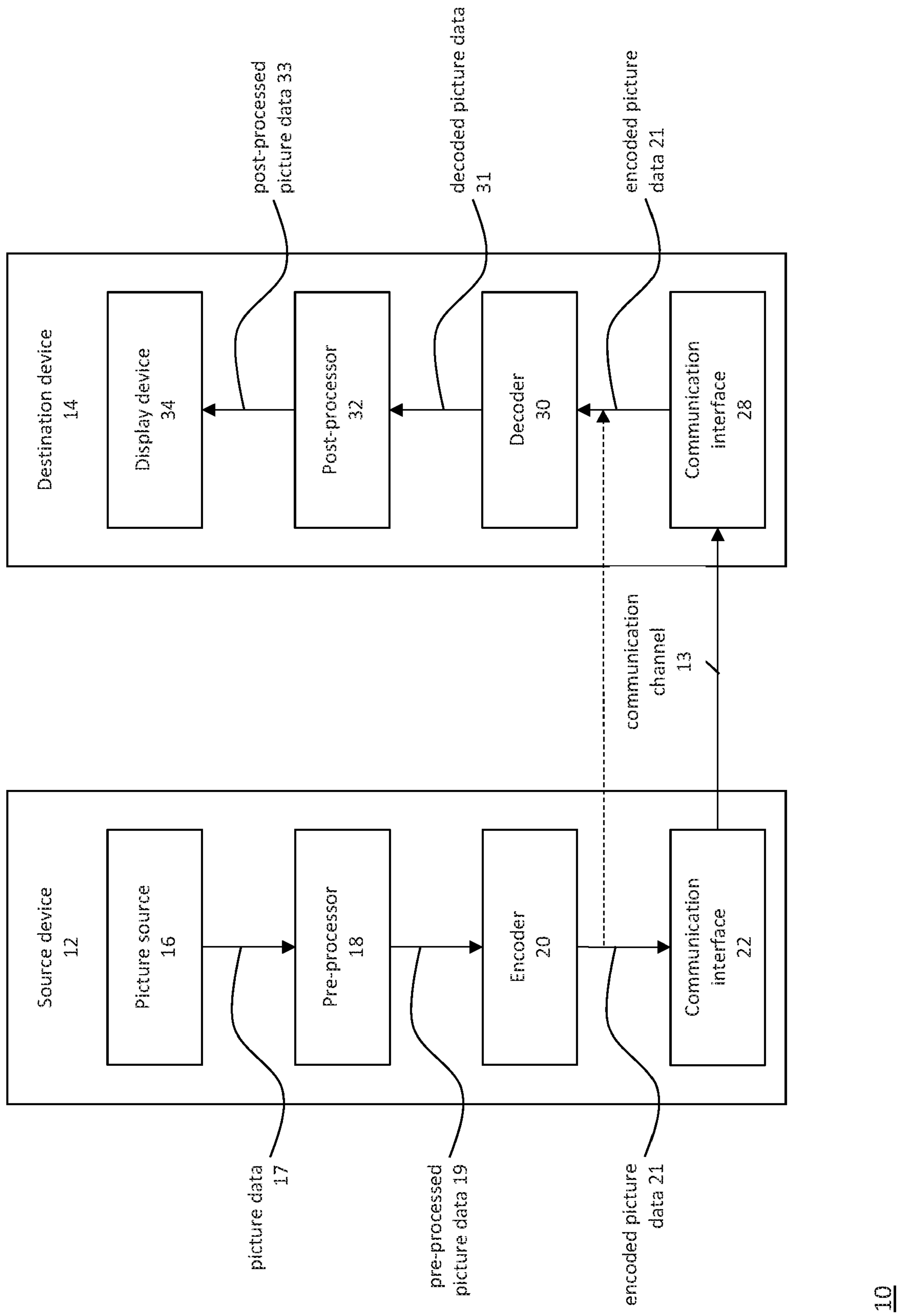
Source device
12
Picture source
16
Pre-processor
18
Encoder
20
Communication
interface
22
picture data
17
pre-processed
picture data 19
encoded picture
data 21
communication
channel
13
Destination device
14
Display device
34
Post-processor
32
Decoder
30
Communication
interface
28
post-processed
picture data 33
decoded picture data
31
encoded picture
data 21
10

Fig. 1A

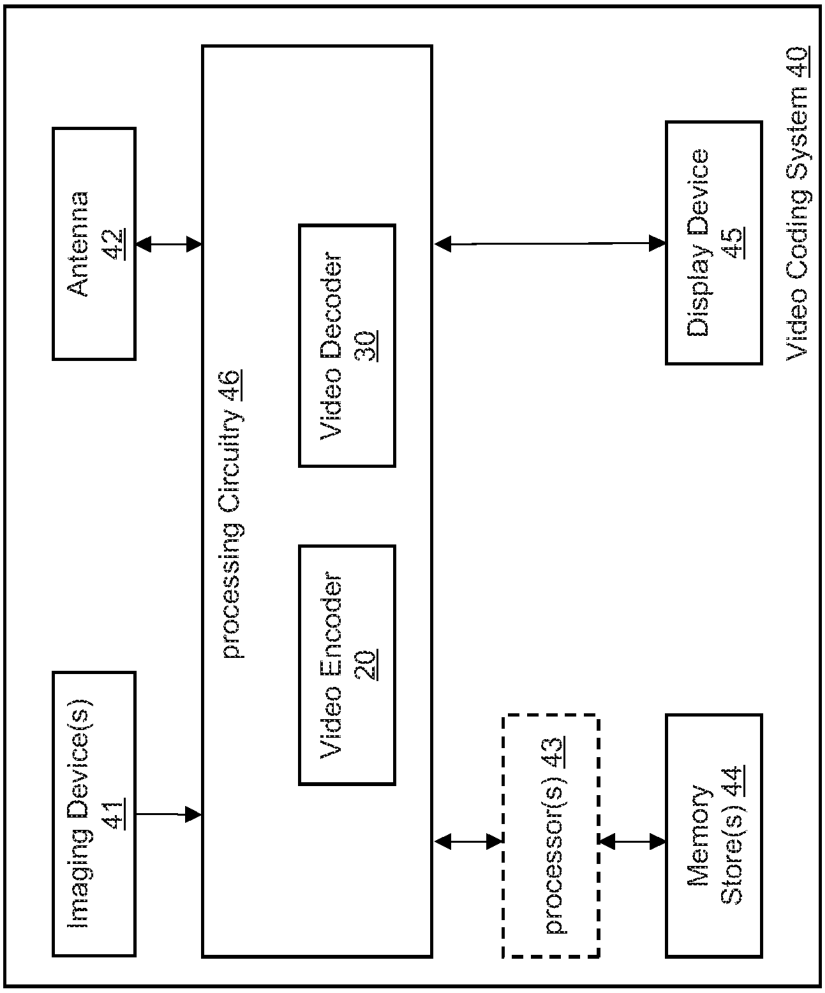

Imaging Device(s) 41
Antenna 42
processing Circuitry 46
Video Encoder 20
Video Decoder 30
processor(s) 43
Memory Store(s) 44
Display Device 45
Video Coding System 40


Fig. 1B

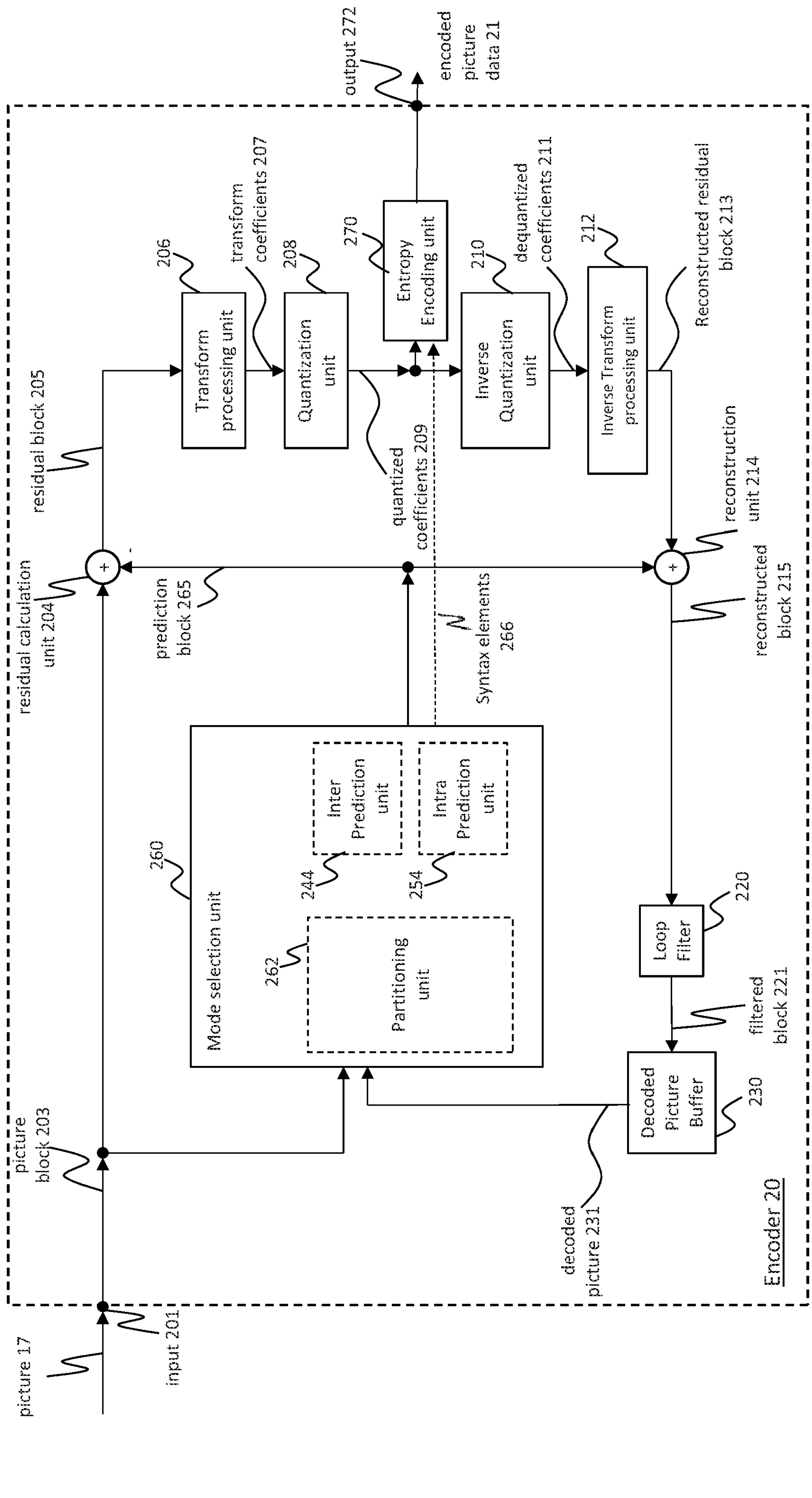

picture 17
input 201
picture block 203
residual calculation unit 204
residual block 205
Transform processing unit
206
transform coefficients 207
Quantization unit
208
quantized coefficients 209
Entropy Encoding unit
270
output 272
encoded picture data 21
Inverse Quantization unit
210
dequantized coefficients 211
Inverse Transform processing unit
212
Reconstructed residual block 213
reconstruction unit 214
reconstructed block 215
prediction block 265
Syntax elements 266
Mode selection unit
260
Inter Prediction unit
244
Intra Prediction unit
254
Partitioning unit
262
Loop Filter
220
filtered block 221
Decoded Picture Buffer
230
decoded picture 231
Encoder 20


Fig. 2

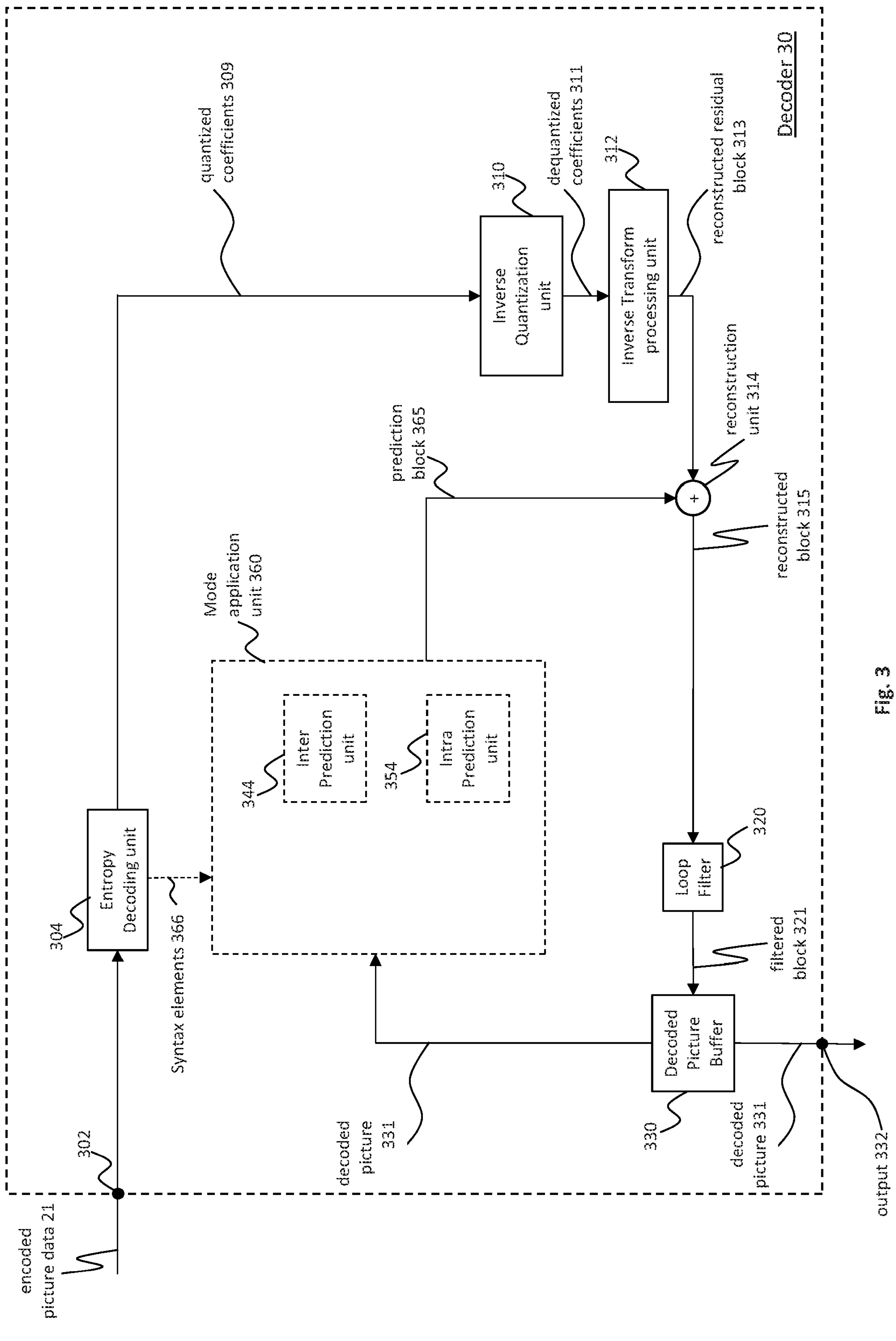

Decoder 30
encoded picture data 21
302
304
Entropy Decoding unit
Syntax elements 366
quantized coefficients 309
Inverse Quantization unit
310
dequantized coefficients 311
312
Inverse Transform processing unit
reconstructed residual block 313
reconstruction unit 314
+
prediction block 365
reconstructed block 315
Mode application unit 360
344
Inter Prediction unit
354
Intra Prediction unit
Loop Filter
320
filtered block 321
Decoded Picture Buffer
330
decoded picture 331
decoded picture 331
output 332


Fig. 3

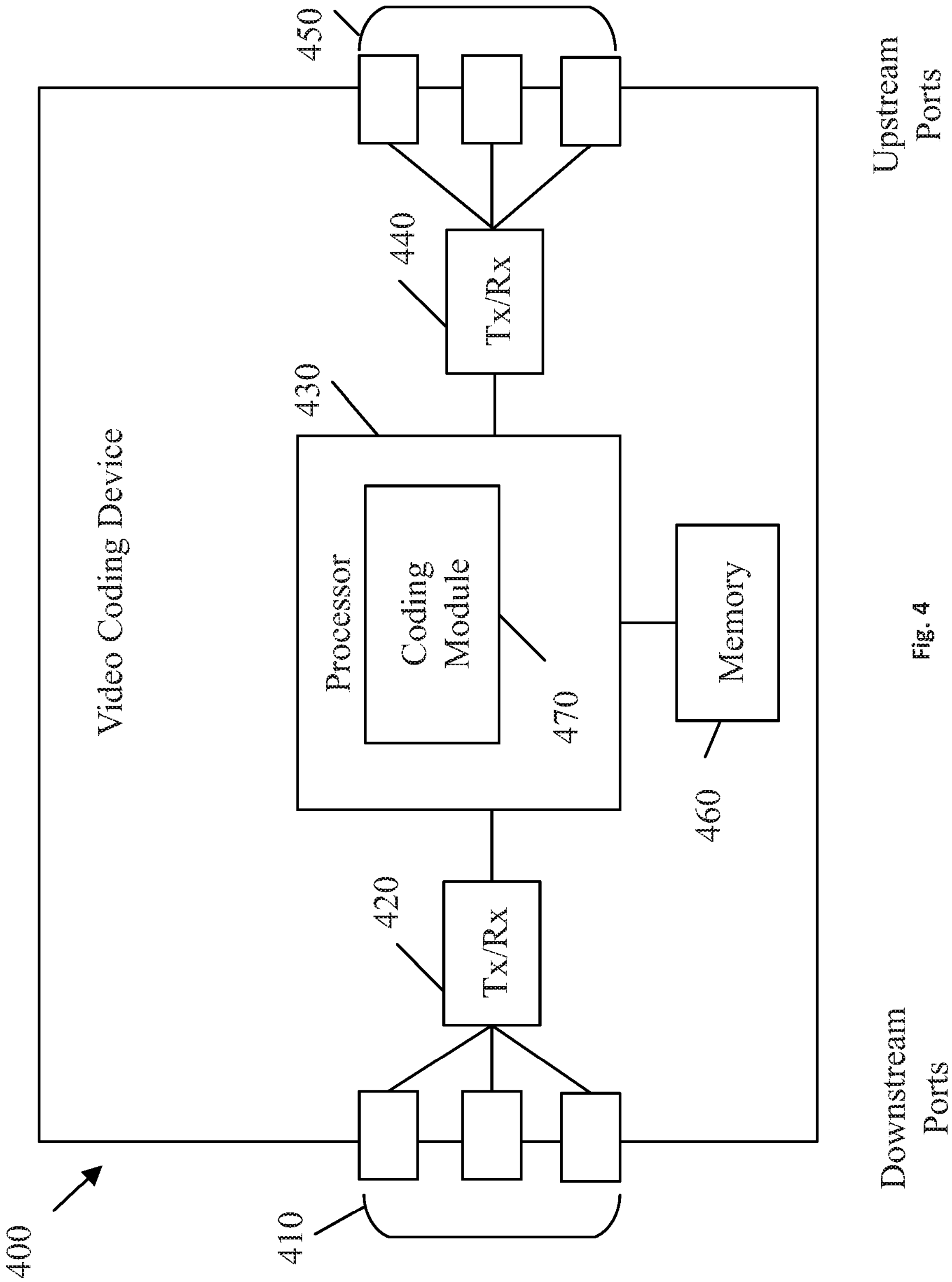
Video Coding Device
Processor
Coding Module
Memory
Tx/Rx
Tx/Rx
Upstream Ports
Downstream Ports
400
410
420
430
440
450
460
470

Fig. 4

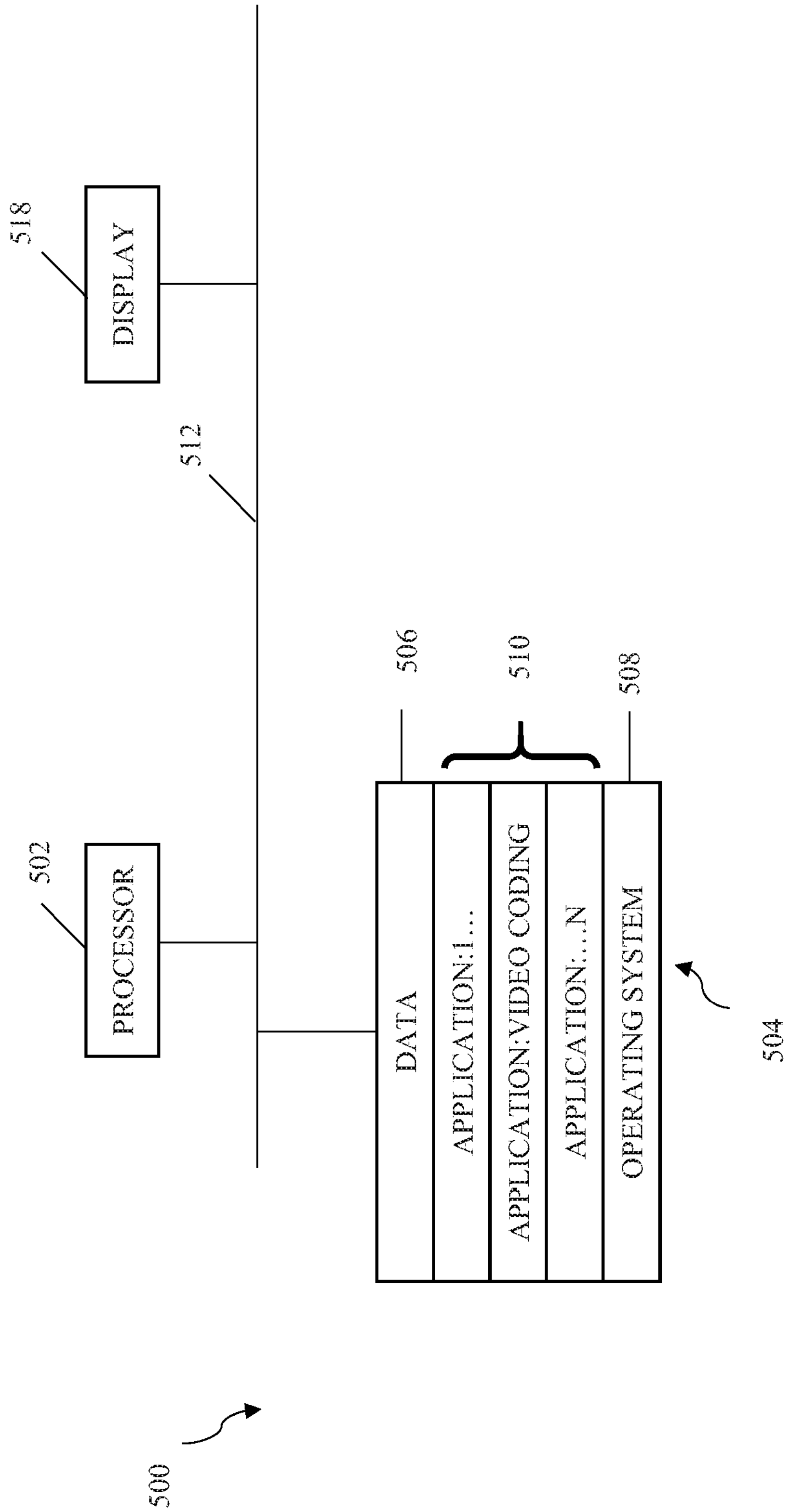
500
502
PROCESSOR
518
DISPLAY
512
506
510
508
DATA
APPLICATION:1…
APPLICATION:VIDEO CODING
APPLICATION:…N
OPERATING SYSTEM
504

Fig. 5

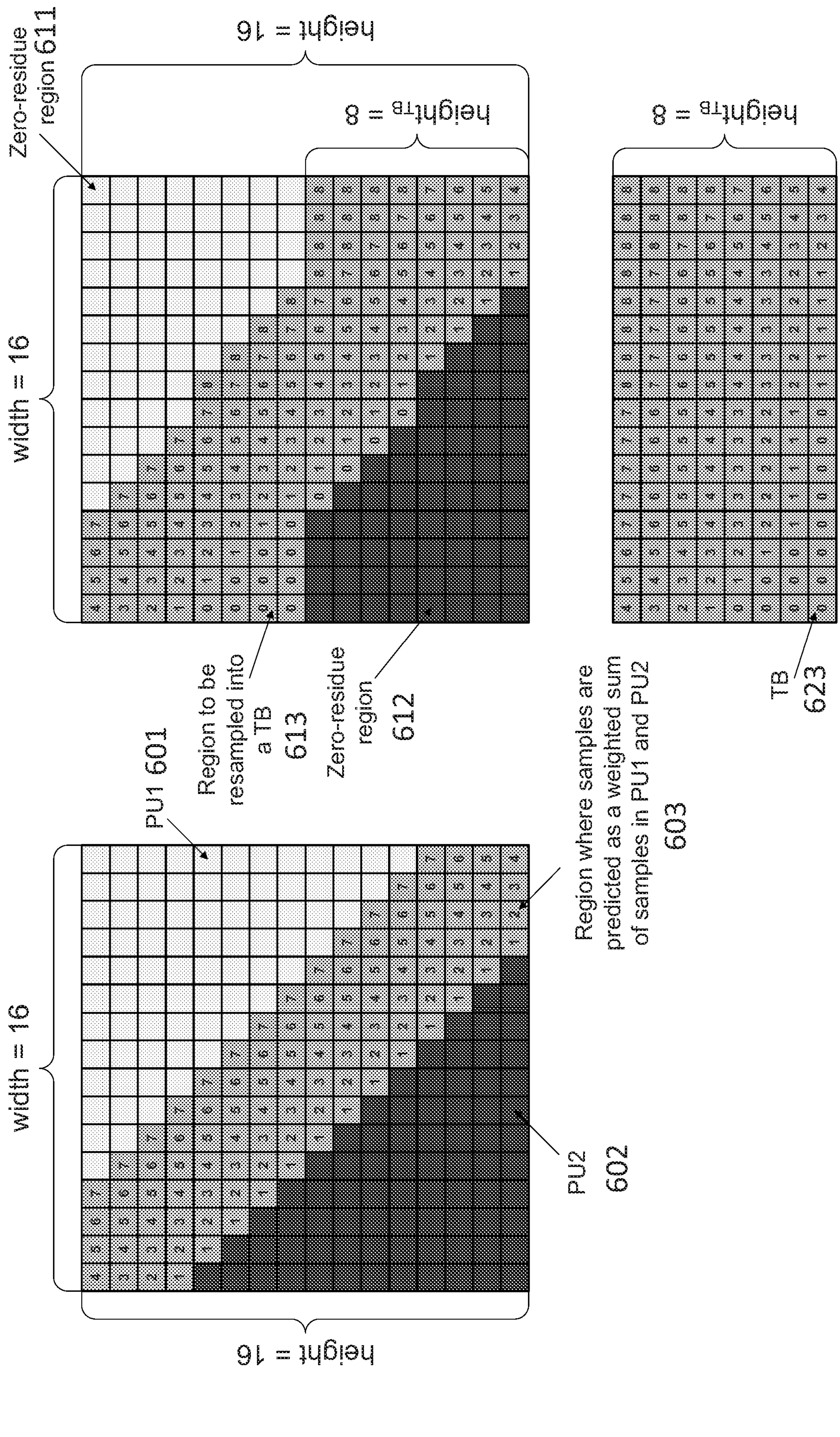
width = 16
height = 16
PU1 601
PU2
602
Region where samples are predicted as a weighted sum of samples in PU1 and PU2
603
width = 16
height = 16
heightTB = 8
Zero-residue region 611
Region to be resampled into a TB
613
Zero-residue region
612
heightTB = 8
TB
623

FIG. 6

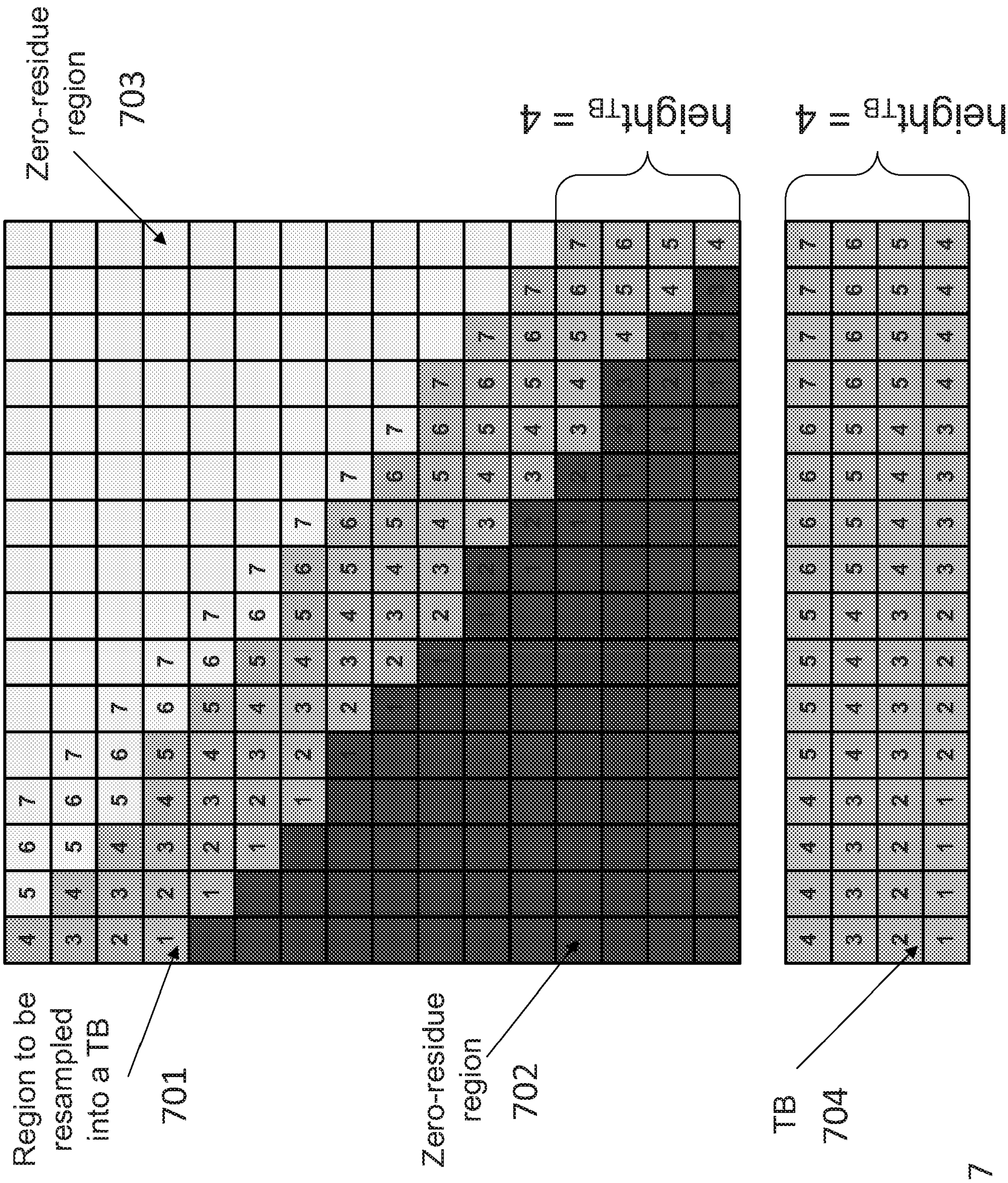
Zero-residue region
703
$height_{TB}$ = 4
$height_{TB}$ = 4
Region to be resampled into a TB
701
Zero-residue region
702
TB
704

FIG. 7

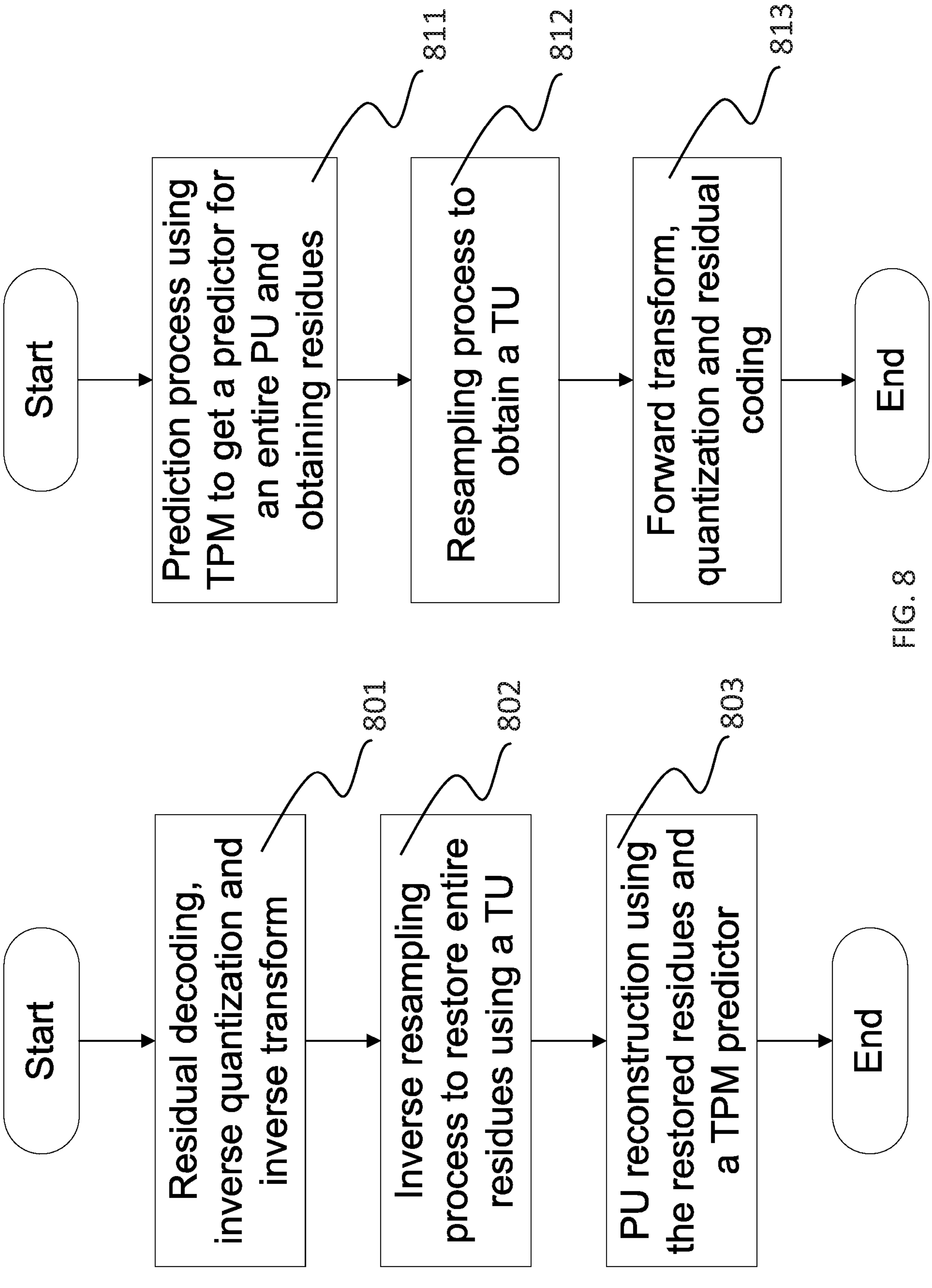
Start
Prediction process using TPM to get a predictor for an entire PU and obtaining residues
811
Resampling process to obtain a TU
812
Forward transform, quantization and residual coding
813
End
Start
Residual decoding, inverse quantization and inverse transform
801
Inverse resampling process to restore entire residues using a TU
802
PU reconstruction using the restored residues and a TPM predictor
803
End

FIG. 8

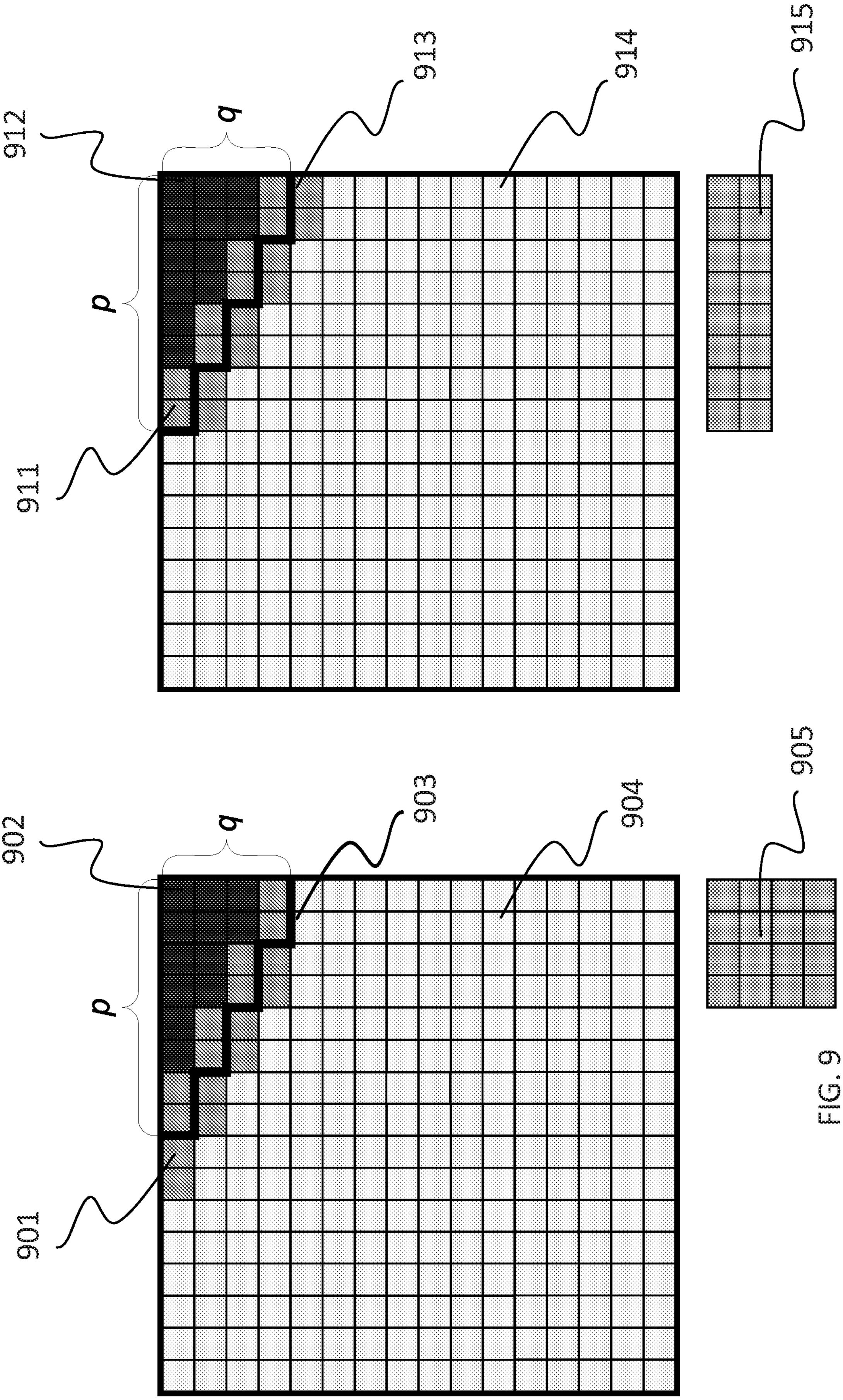


FIG. 9

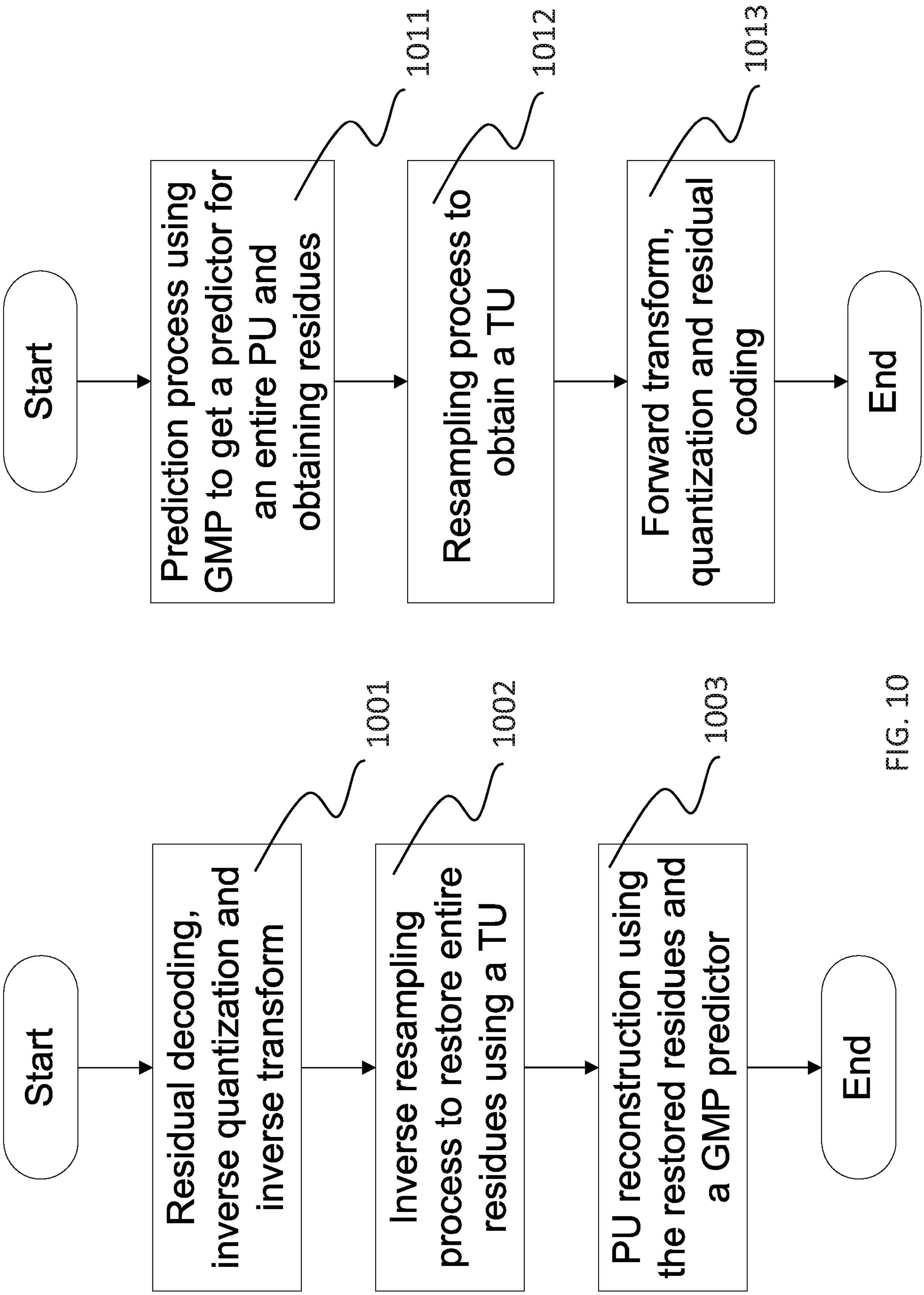
Start
Residual decoding, inverse quantization and inverse transform
1001
Inverse resampling process to restore entire residues using a TU
1002
PU reconstruction using the restored residues and a GMP predictor
1003
End
Start
Prediction process using GMP to get a predictor for an entire PU and obtaining residues
1011
Resampling process to obtain a TU
1012
Forward transform, quantization and residual coding
1013
End

FIG. 10

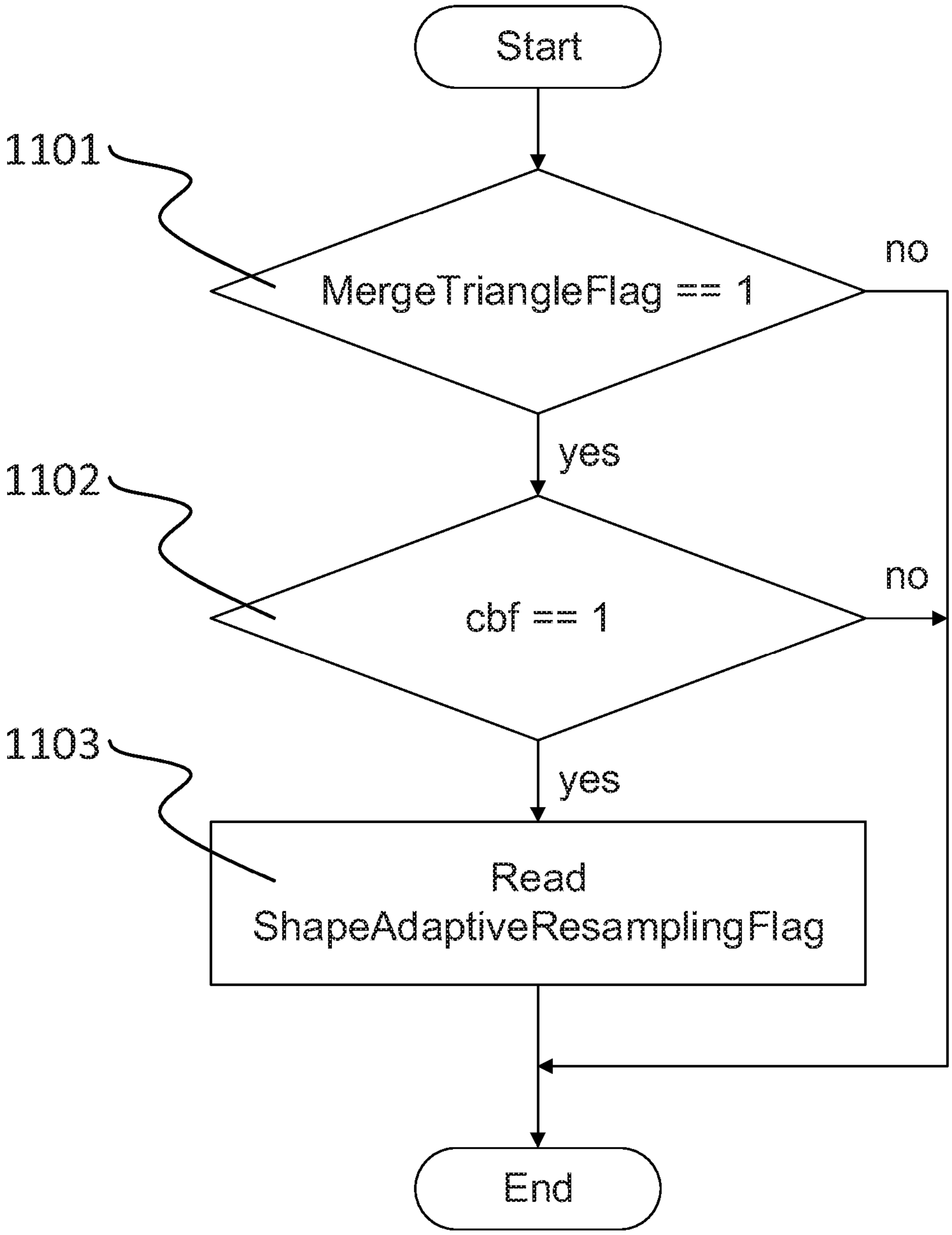
Start
1101
MergeTriangleFlag == 1
no
yes
1102
cbf == 1
no
yes
1103
Read
ShapeAdaptiveResamplingFlag
End

FIG. 11

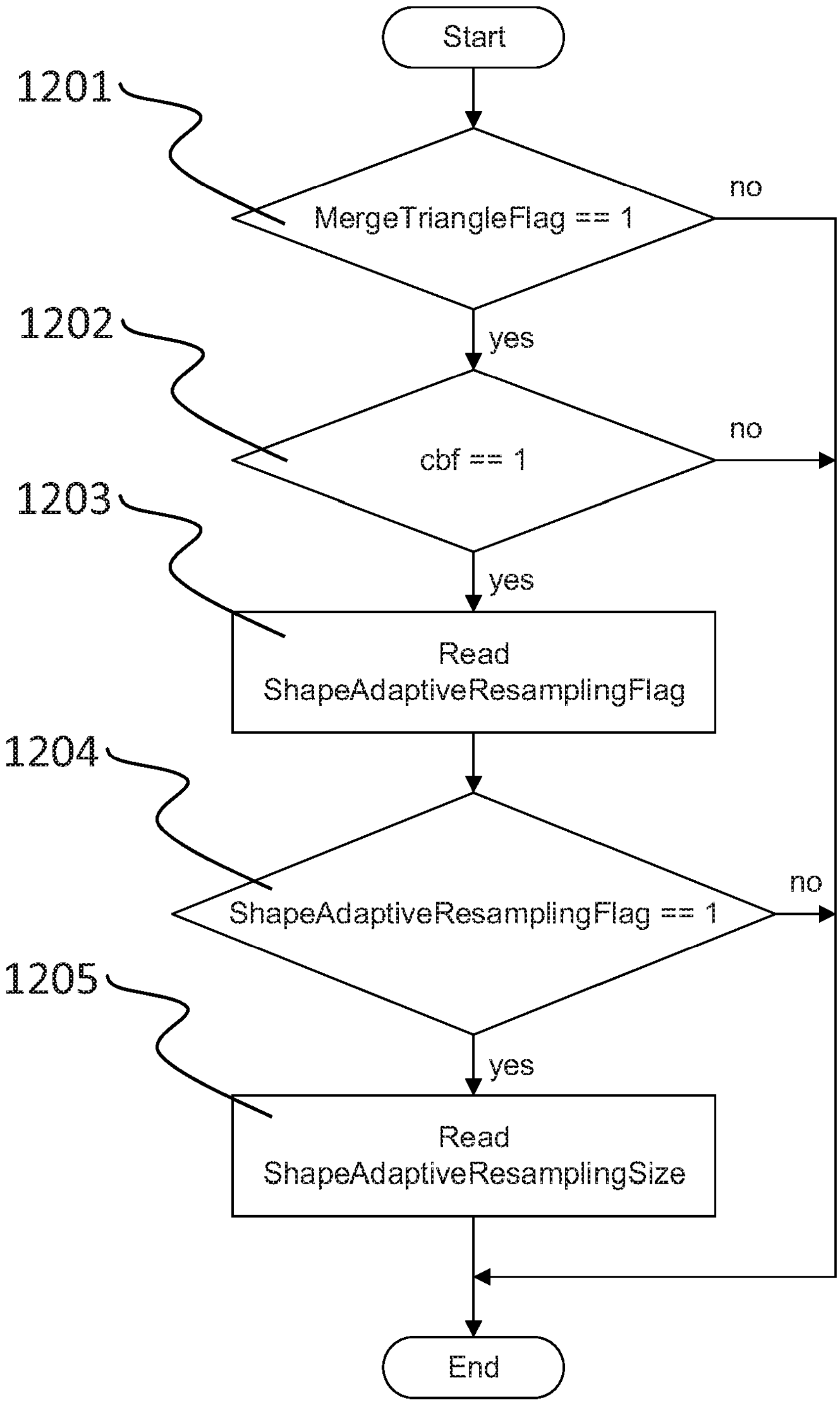
Start
1201
MergeTriangleFlag == 1
no
yes
1202
cbf == 1
no
yes
1203
Read
ShapeAdaptiveResamplingFlag
1204
ShapeAdaptiveResamplingFlag == 1
no
1205
yes
Read
ShapeAdaptiveResamplingSize
End

FIG. 12

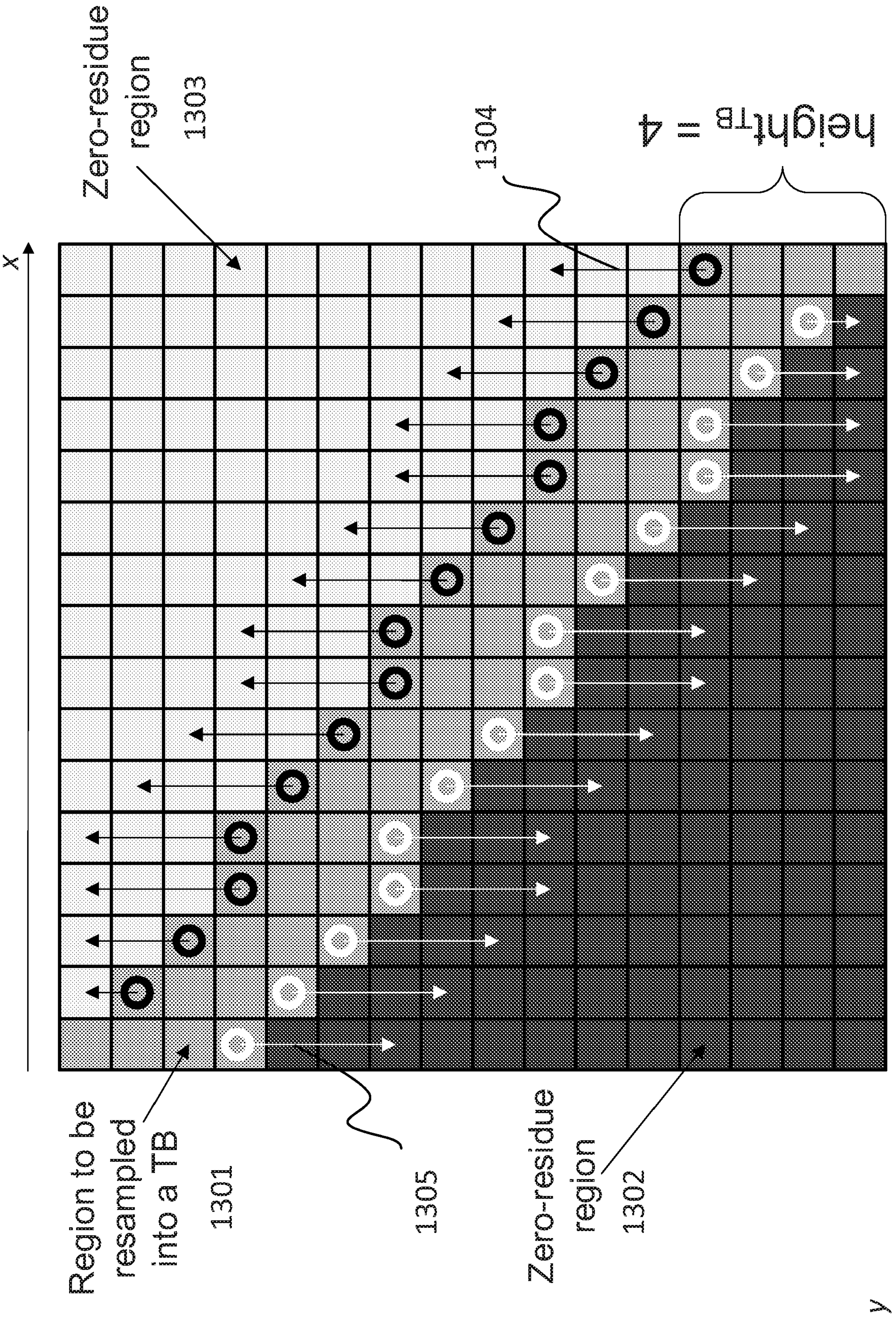
Zero-residue
region
1303
1304
heightTB = 4
x
Region to be
resampled
into a TB
1301
1305
Zero-residue
region
1302
y

FIG. 13

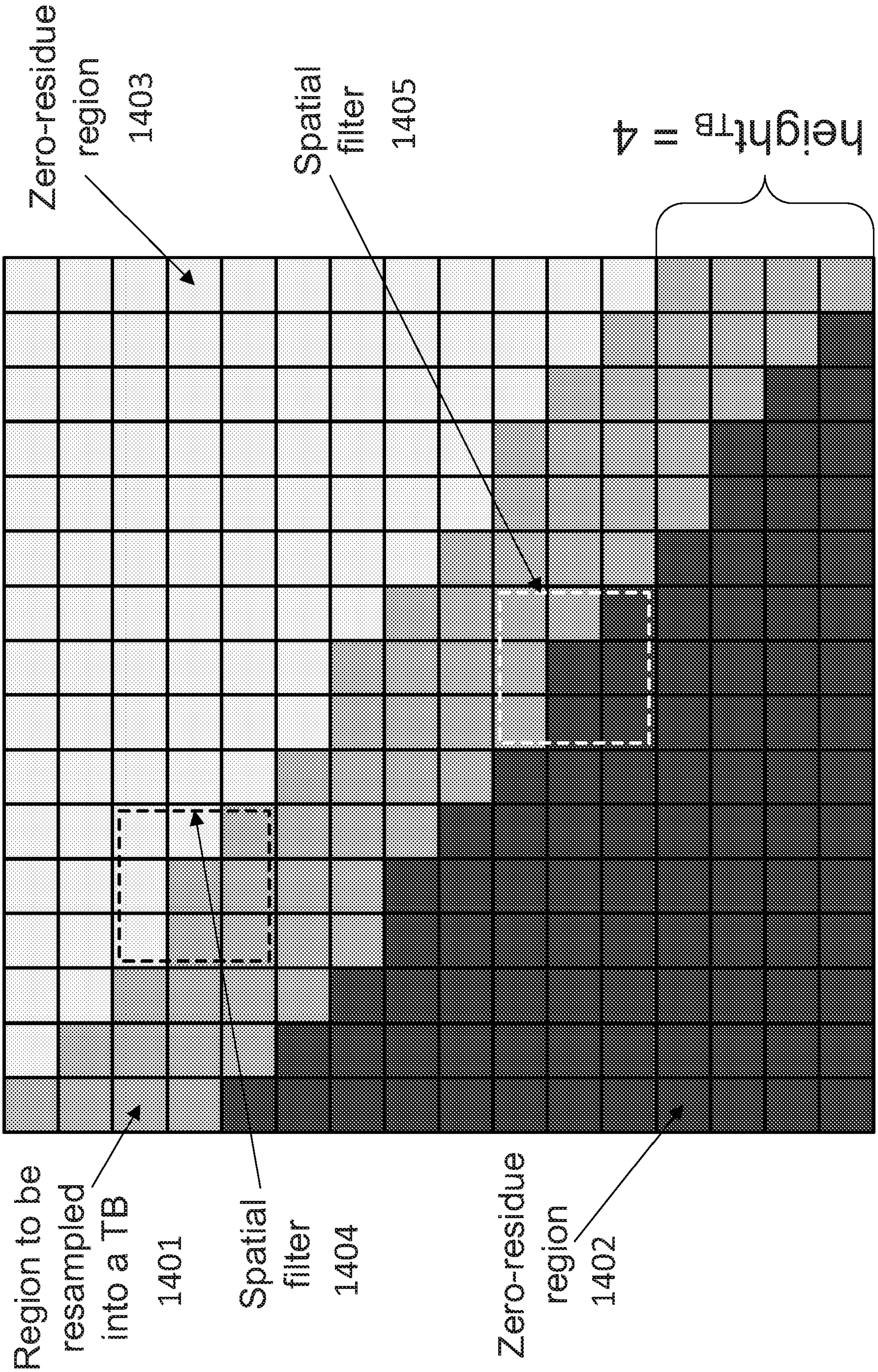

Zero-residue region 1403
Spatial filter 1405
$height_{TB} = 4$
Region to be resampled into a TB 1401
Spatial filter 1404
Zero-residue region 1402


FIG. 14

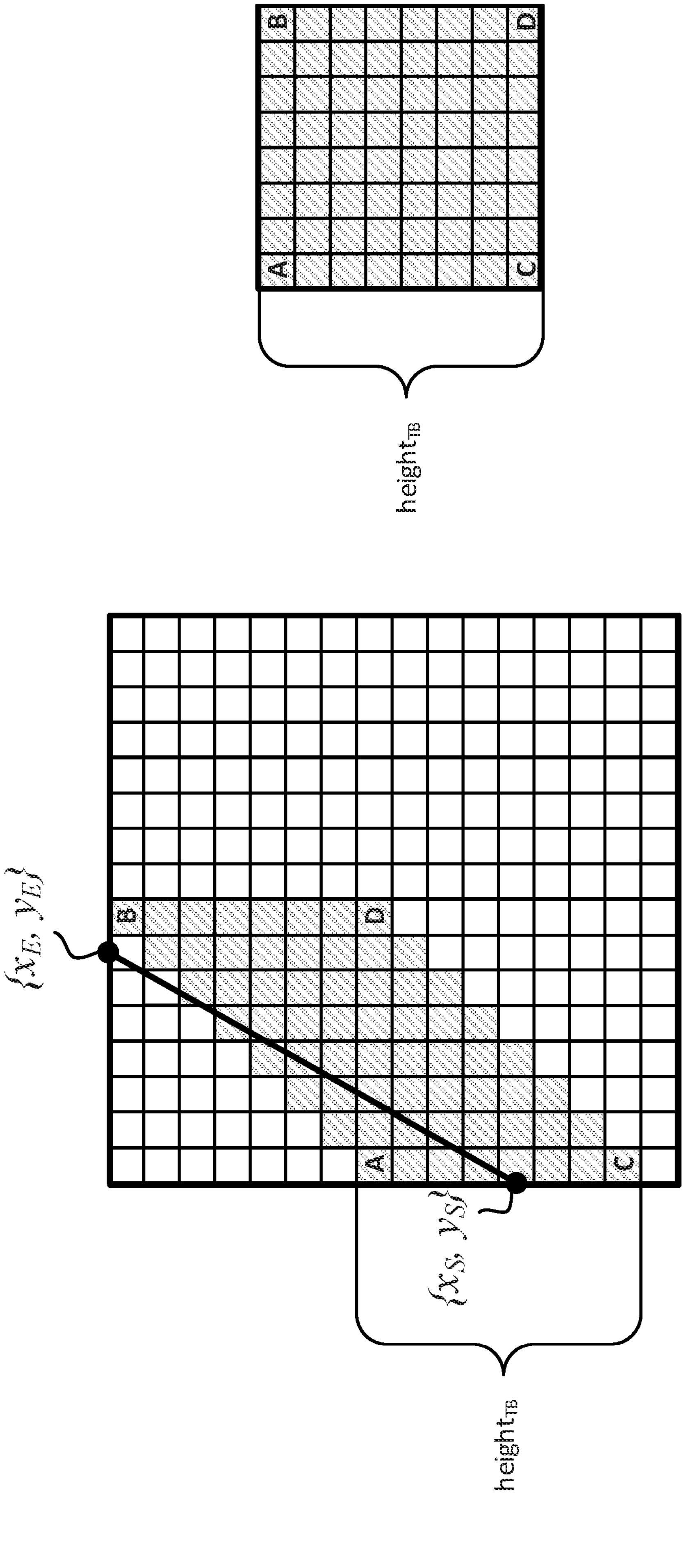


FIG. 15

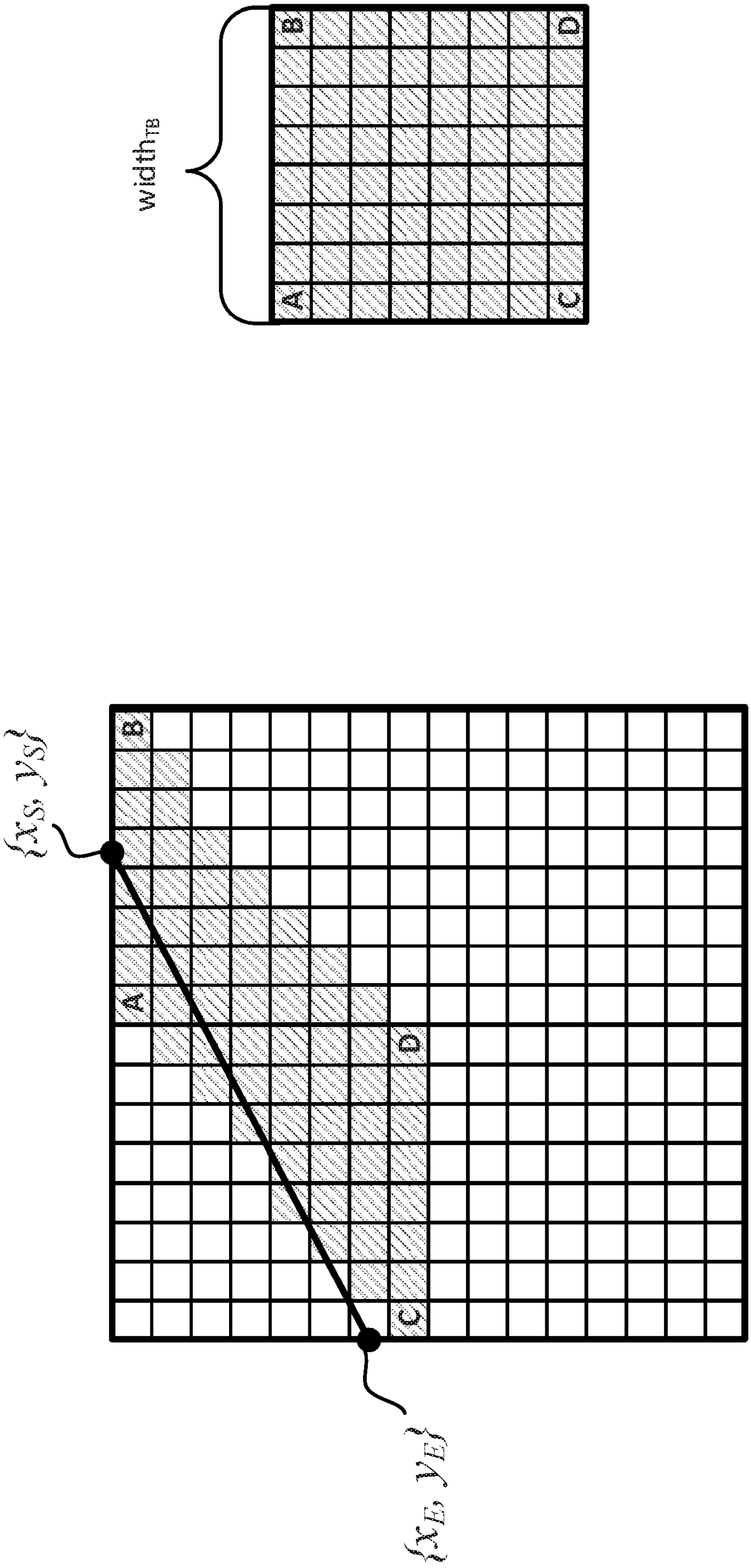


FIG. 16

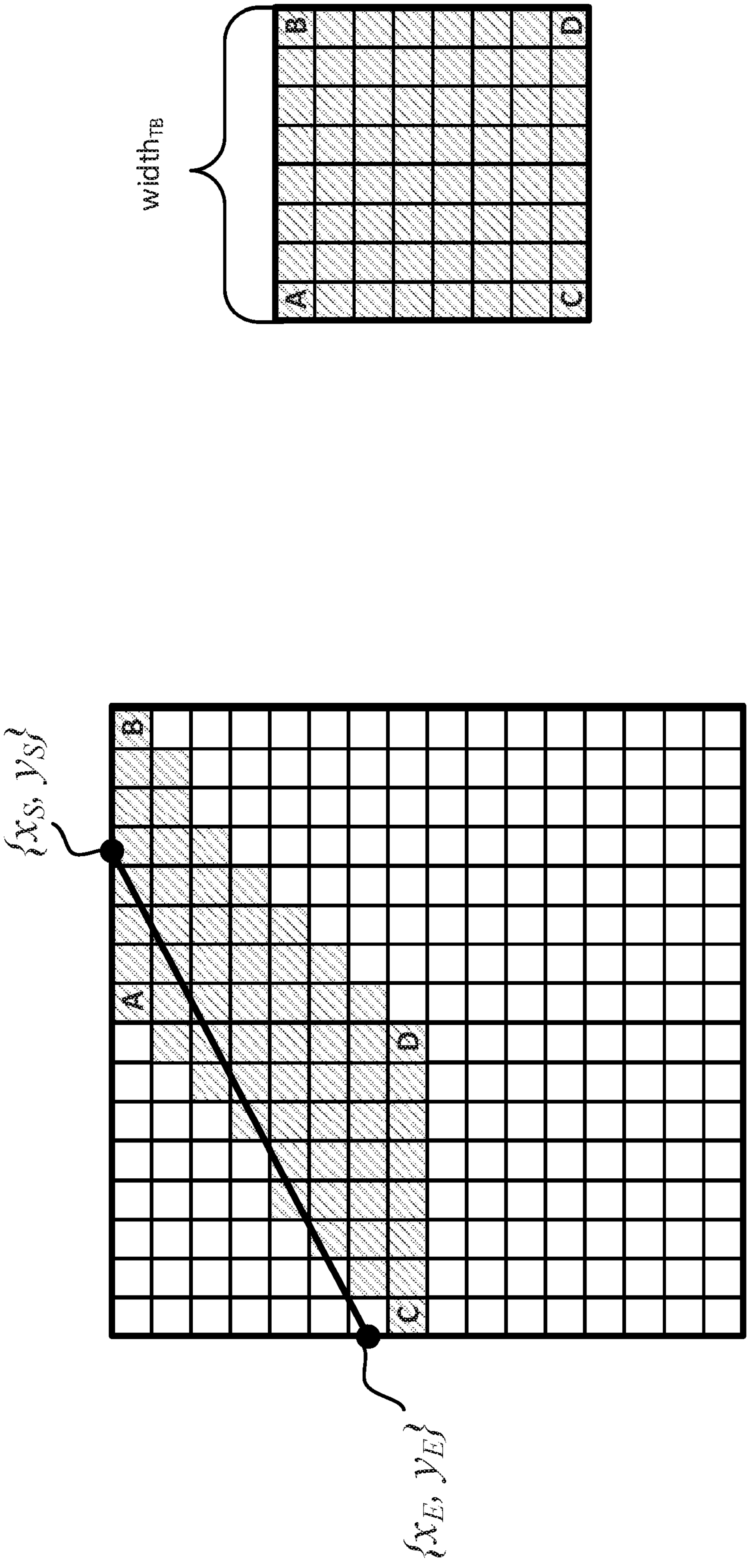


FIG. 17

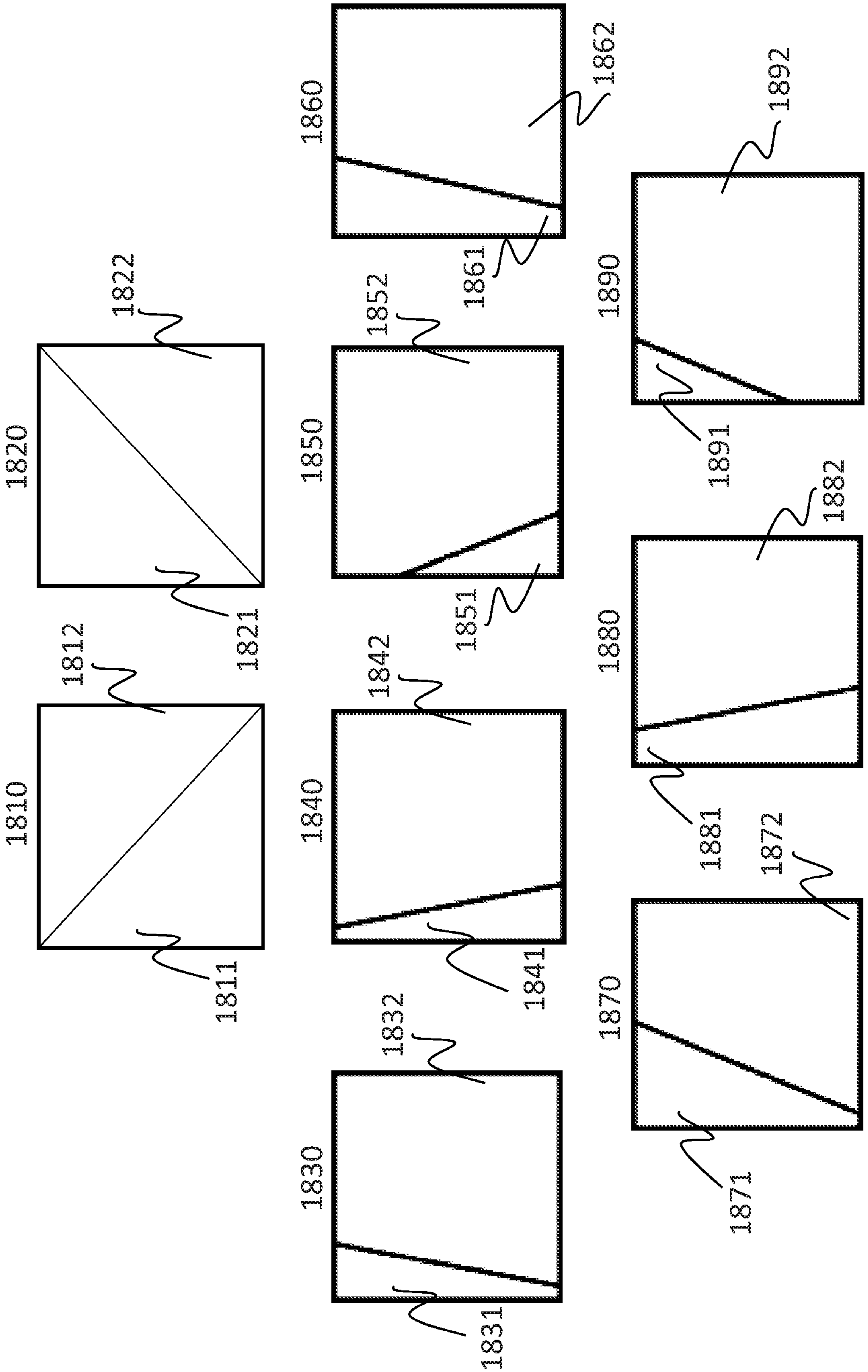
1810
1811
1812
1820
1821
1822
1830
1831
1832
1840
1841
1842
1850
1851
1852
1860
1861
1862
1870
1871
1872
1880
1881
1882
1890
1891
1892

FIG. 18

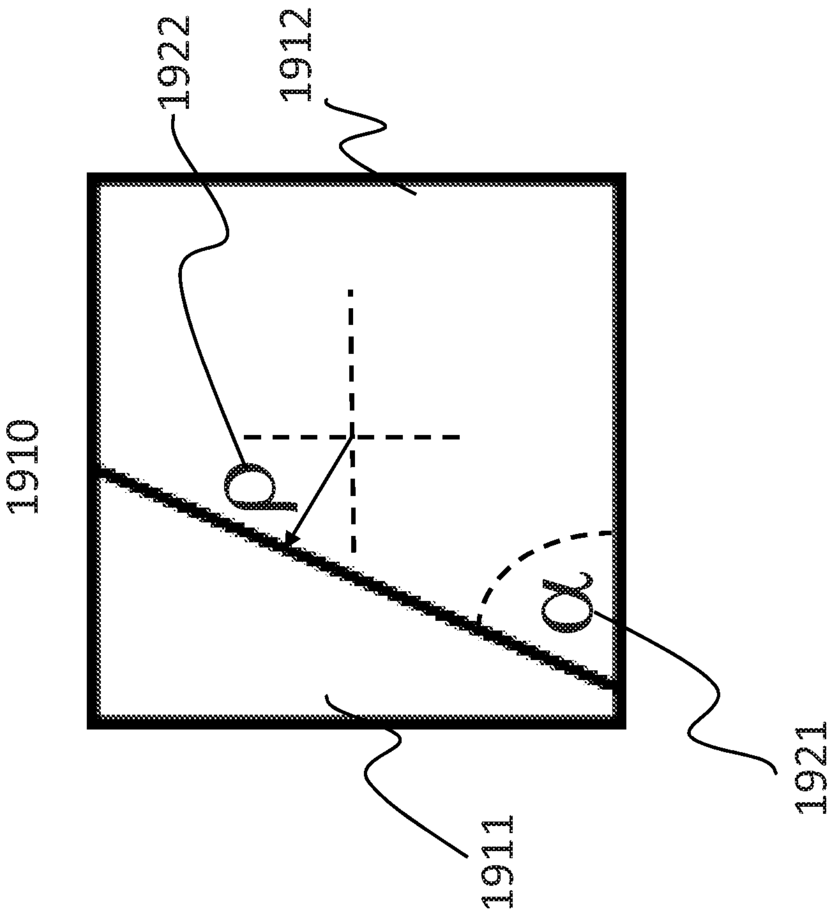


FIG. 19

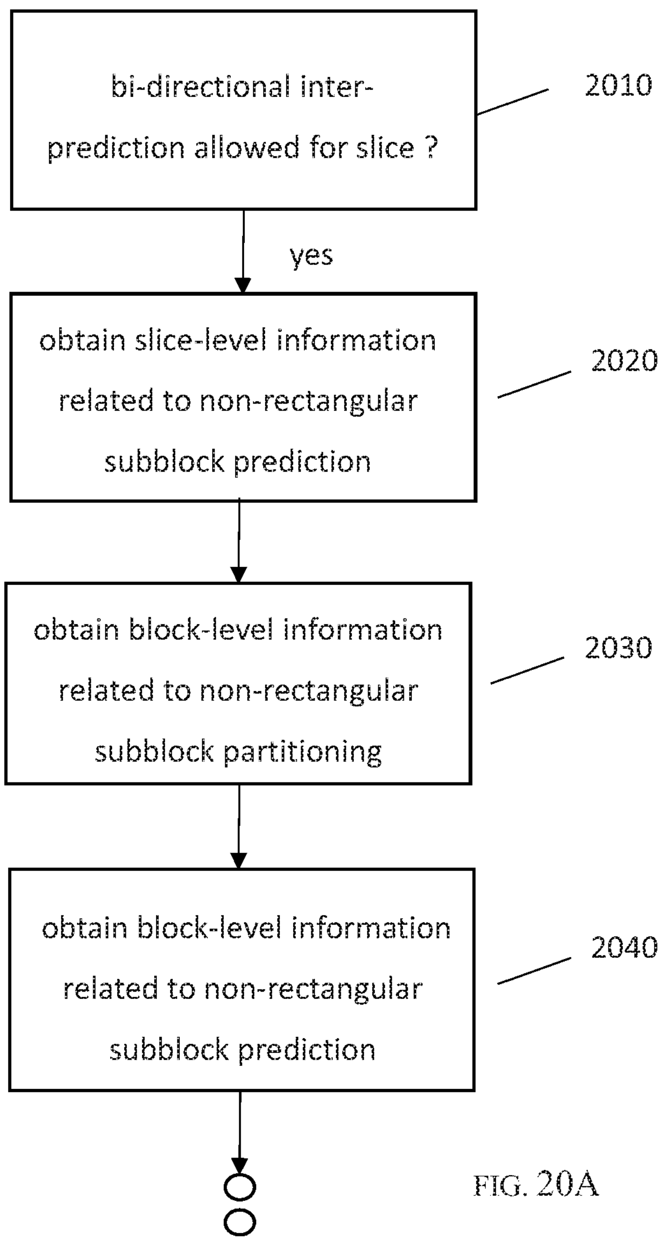
bi-directional inter-prediction allowed for slice ?
2010
yes
obtain slice-level information related to non-rectangular subblock prediction
2020
obtain block-level information related to non-rectangular subblock partitioning
2030
obtain block-level information related to non-rectangular subblock prediction
2040

FIG. 20A

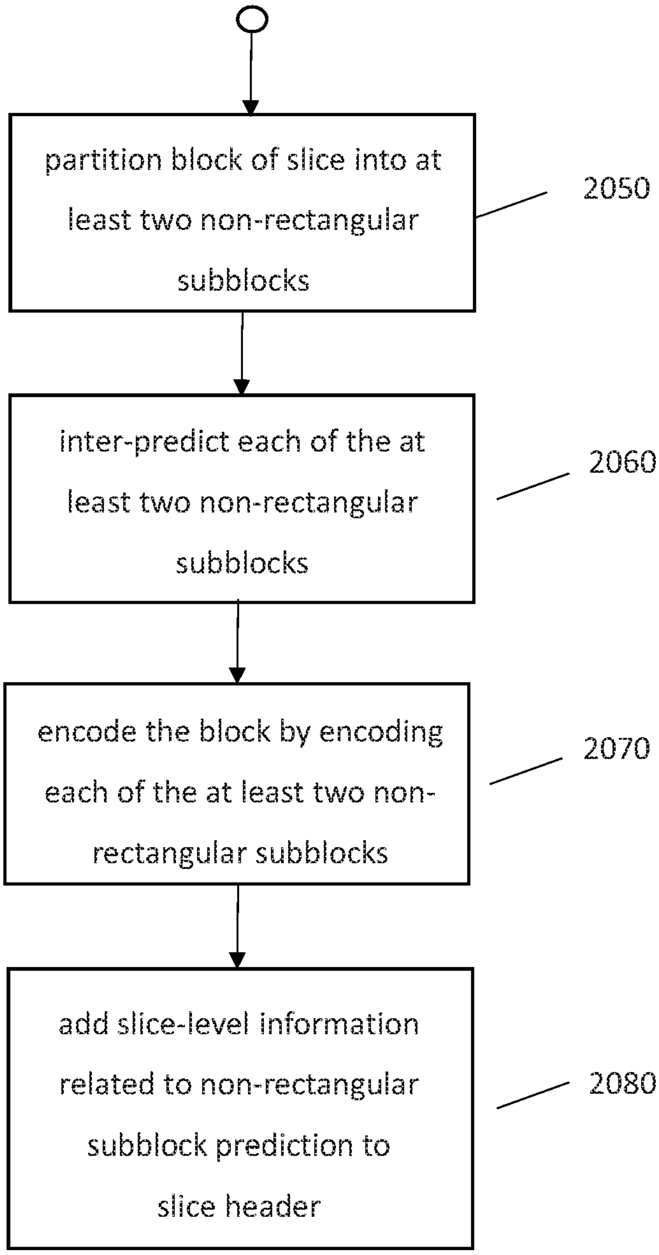
partition block of slice into at least two non-rectangular subblocks
2050
inter-predict each of the at least two non-rectangular subblocks
2060
encode the block by encoding each of the at least two non-rectangular subblocks
2070
add slice-level information related to non-rectangular subblock prediction to slice header
2080

FIG. 20B

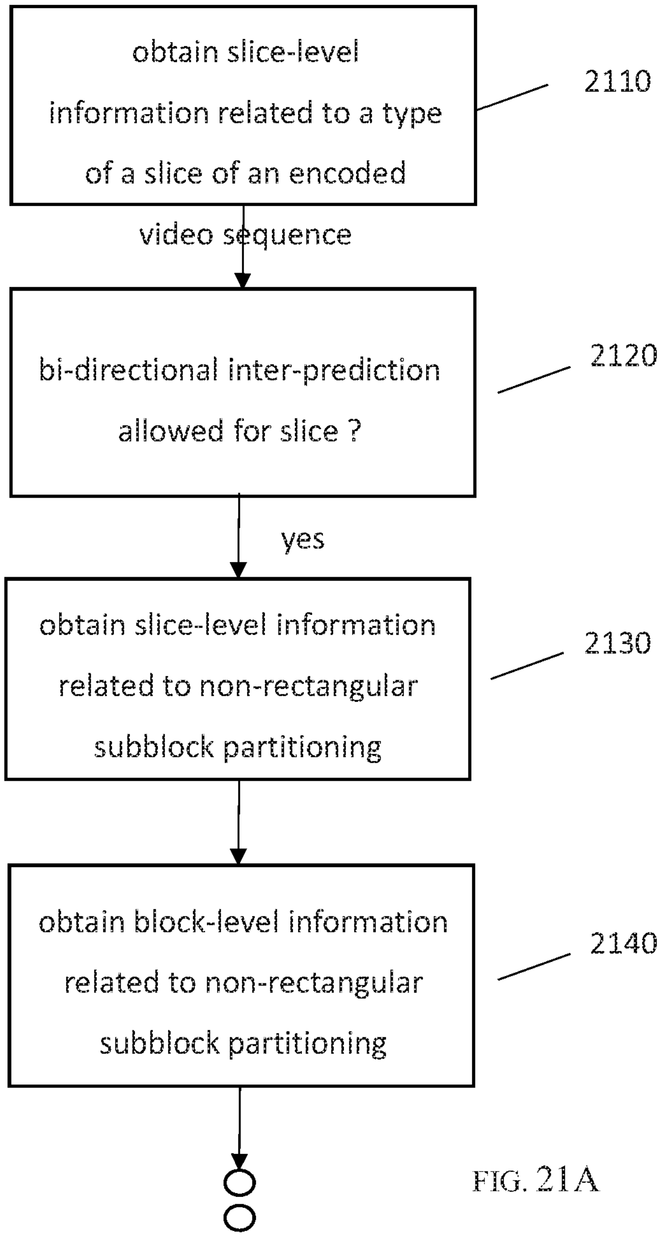
obtain slice-level information related to a type of a slice of an encoded video sequence
2110
bi-directional inter-prediction allowed for slice ?
2120
yes
obtain slice-level information related to non-rectangular subblock partitioning
2130
obtain block-level information related to non-rectangular subblock partitioning
2140

FIG. 21A

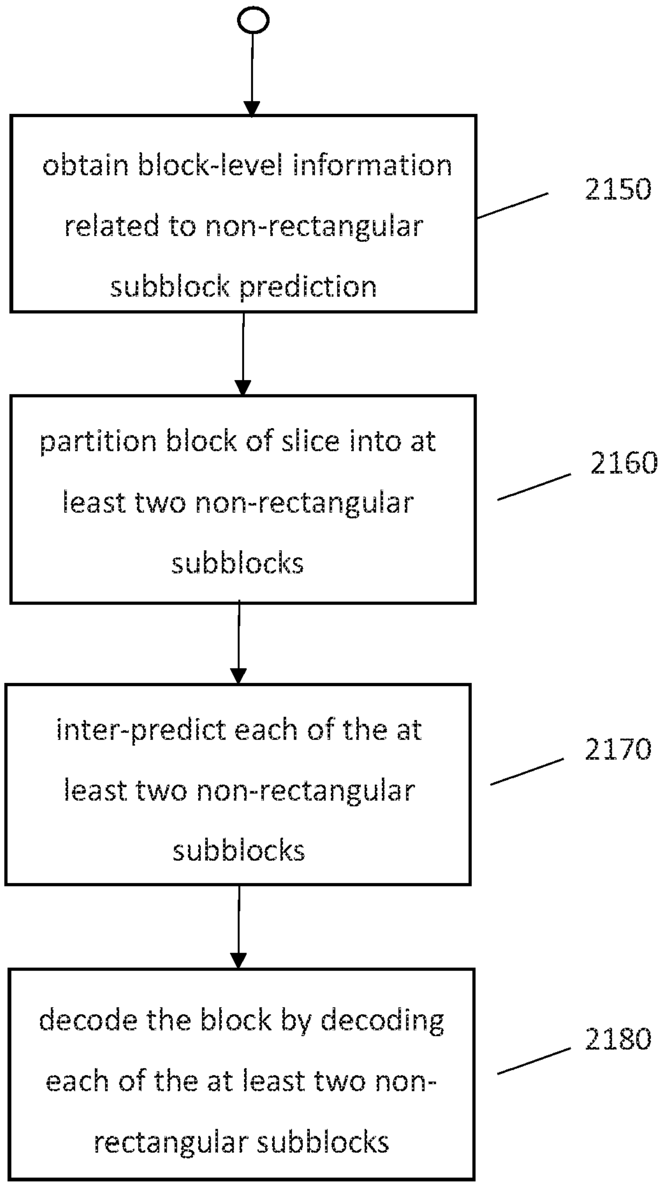
obtain block-level information related to non-rectangular subblock prediction
2150
partition block of slice into at least two non-rectangular subblocks
2160
inter-predict each of the at least two non-rectangular subblocks
2170
decode the block by decoding each of the at least two non-rectangular subblocks
2180

FIG. 21B

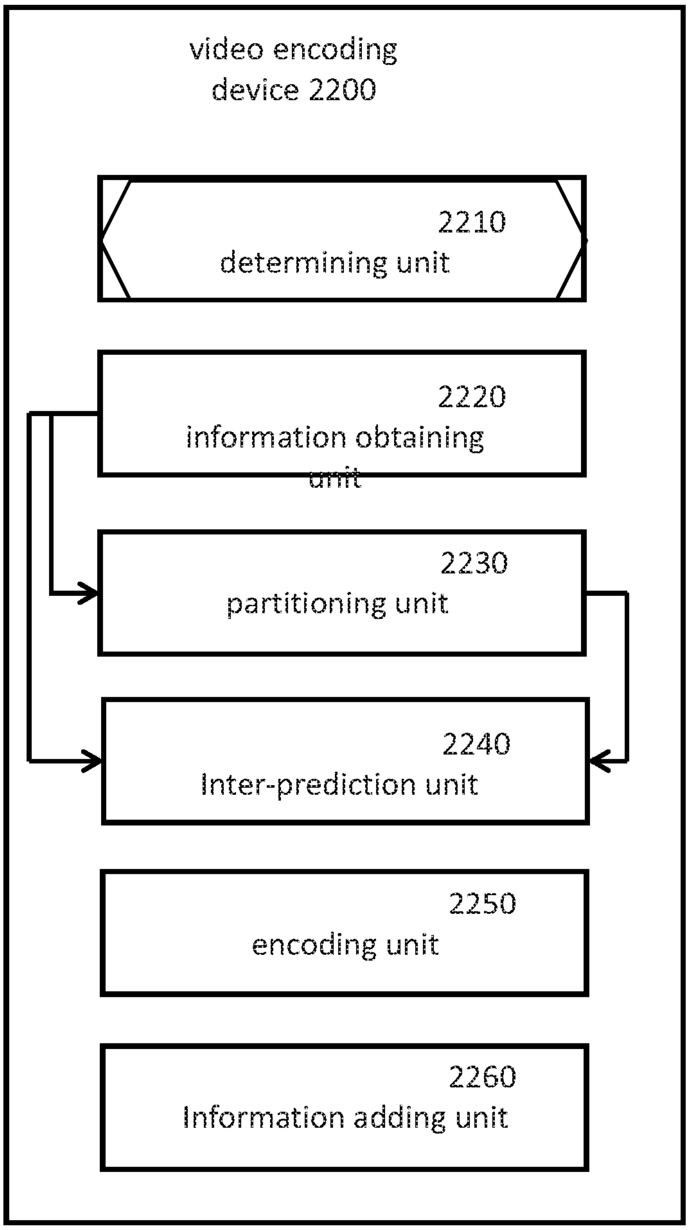
video encoding
device 2200
2210
determining unit
2220
information obtaining
unit
2230
partitioning unit
2240
Inter-prediction unit
2250
encoding unit
2260
Information adding unit

FIG. 22

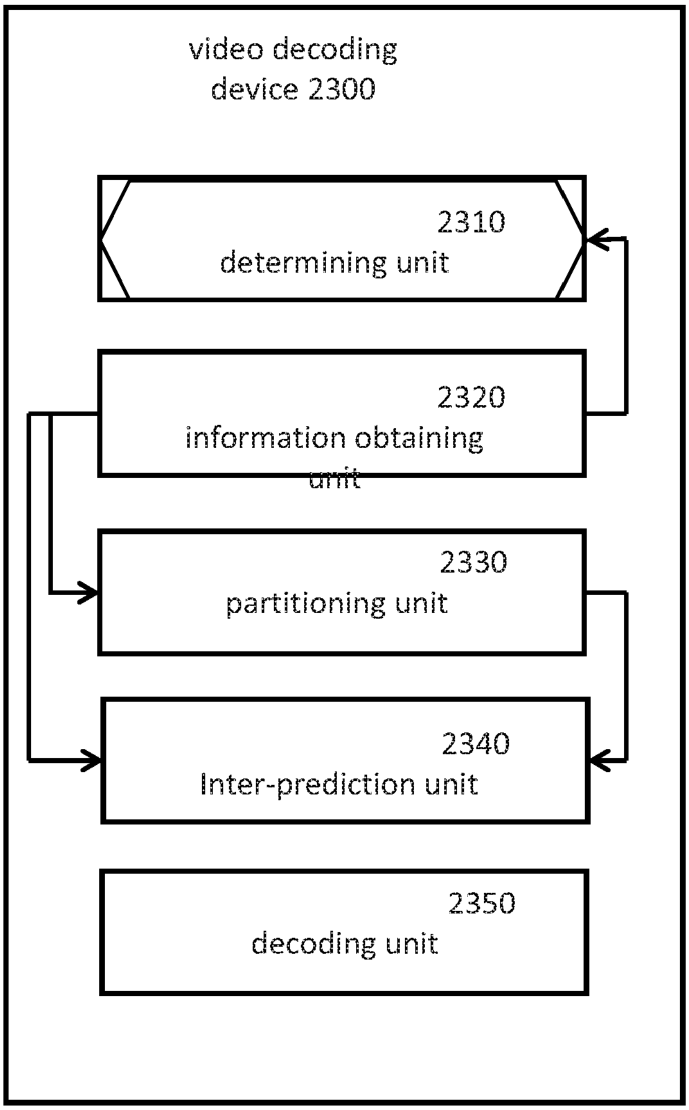
video decoding
device 2300
2310
determining unit
2320
information obtaining
unit
2330
partitioning unit
2340
Inter-prediction unit
2350
decoding unit

FIG. 23

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **B. BROSS**. Versatile Video Coding Draft (6). *15th JVET Meeting*, 31 July 2019, 1-455
- **R-L. LIAO** ; **C.S. LIM**. CE10.3.1.b: Triangular prediction unit mode. *JVET-L0124 to the 12th JVET meeting*, October 2018
- **M. BLÄSER** ; **J. SCHNEIDER** ; **JOHANNES SAUER** ; **MATHIAS WIEN**. Geometry-based Partitioning for Predictive Video Coding with Transform Adaptation. *Picture Coding Symposium (PCS*, June 2018
- **S. ESENLIK** ; **H. GAO** ; **A. FILIPPOV** ; **V. RUFITSKIY** ; **A.M. KOTRA** ; **B. WANG** ; **Z. ZHAO** ; **E. ALSHINA** ; **M. BLÄSER** ; **J. SAUER**. JVET-O0489 ''Non-CE4: Geometrical partitioning for inter blocks. *6th JVET meeting*, July 2019